(19) Europäisches Patentamt
European Patent Office
Office européen des brevets

(11) **EP 1 830 133 A1**

(12) **EUROPEAN PATENT APPLICATION**
published in accordance with Art. 158(3) EPC

(43) Date of publication:
05.09.2007 Bulletin 2007/36

(51) Int Cl.:
*F24C 15/10* (2006.01)  *F24C 3/02* (2006.01)
*F24C 15/34* (2006.01)

(21) Application number: 05749007.0

(22) Date of filing: 07.06.2005

(86) International application number:
PCT/JP2005/010421

(87) International publication number:
WO 2006/051631 (18.05.2006 Gazette 2006/20)

(84) Designated Contracting States:
DE ES FR GB IT

(30) Priority: 15.11.2004 JP 2004330650

(71) Applicant: Paloma Industries, Ltd.
Nagoya-shi,
Aichi 4678585 (JP)

(72) Inventor: KOBAYASHI, Toshihiro
Paloma Industries, Limited
Aichi 4678585 (JP)

(74) Representative: Feldmeier, Jürgen et al
Prüfer & Partner GbR
Patentanwälte
Sohnckestrasse 12
81479 München (DE)

(54) **GAS COOKING STOVE**

(57) [Problem to be solved] To improve the high heat efficiency by improving the heat transfer efficiency between combustion gas and a cooking container.

[Solving means] The table burner 1 according to the embodiment allows combustion gas (including flame) to generally spout out from the flame port 17 of the burner 14 obliquely upward as if it twists in the burner circumferential direction. The combustion gas flows into multiple combustion gas routes partitioned in a spiral, and passes to the outside while making contact with trivet claws 22. That is, the combustion gas is discharged toward the outer circumferential direction along the bottom surface of a cooking container P while being guided by trivet claws 22 in a form of a convolute swirling flow. As a result, because in the combustion gas route, the combustion gas is constantly subject to the direction changing force and has the flow disturbed, a heat transfer border film is not formed on the bottom surface of the cooking container P, and the heat of combustion gas is successfully transmitted to the bottom of the cooking container P.

FIG. 1

**Description**

FIELD OF THE INVENTION

The present invention relates to a cooking stove wherein a cooking container is put on a trivet and heated and cooked by a burner.

DESCRIPTION OF THE RELATED ART

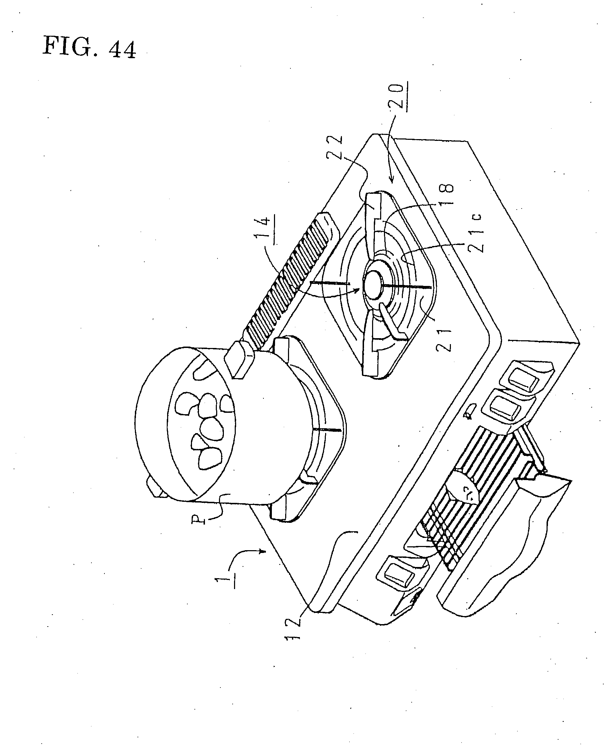

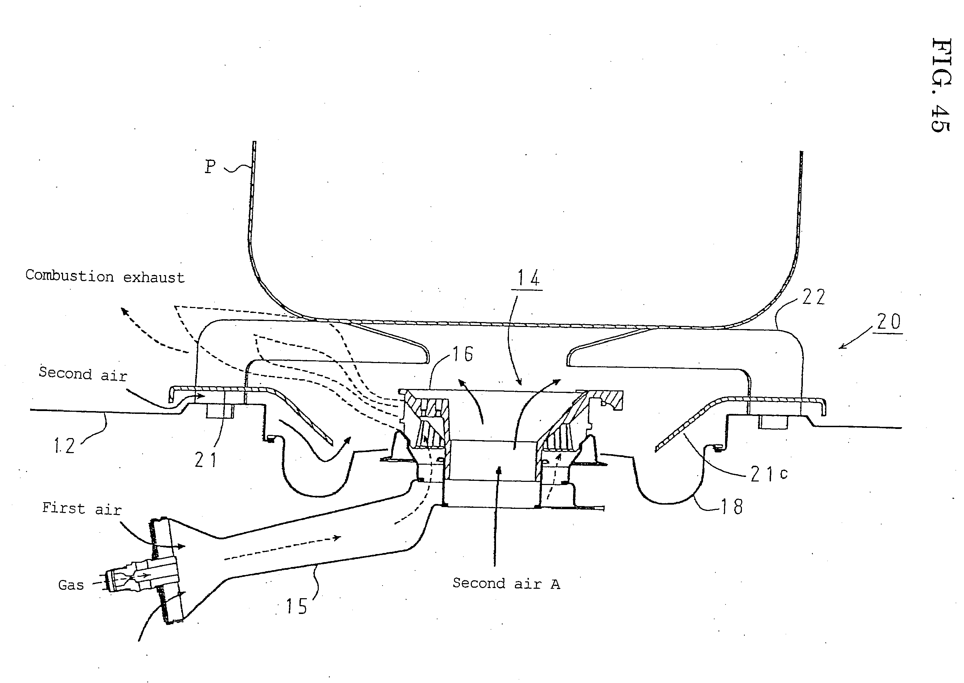

Conventionally, in the field of cooking stoves, a table burner 1 as shown in Fig. 44 and Fig. 45 has been known. In the table burner 1, a burner 14 of a spontaneous combustion type Bunsen burner is arranged at the center position of an opening arranged in a top plate 12, and a drip plate 18 is placed around the burner. A cooking container P is set on a trivet 20 arranged around above the burner 14, and is heated by combustion of burner 14. The numeral 15 designates a burner main body and the numeral 16 a burner head.

The trivet 20 is integrally formed by multiple L-shaped trivet claws 22 which bear the cooking container P and a trivet ring 21 which serves as a base of each trivet claws 22, and is placed on the top plate 12.
On the inner circumferential side of the trivet ring 21, an inclined jaw portion (hereinafter simply called as a jaw portion) tilted downwards to the ring center is extended.
Between this trivet ring 21 and the top plate 12, and between the trivet ring 21 and the drip plate 18, a clearance for feeding second air is formed.

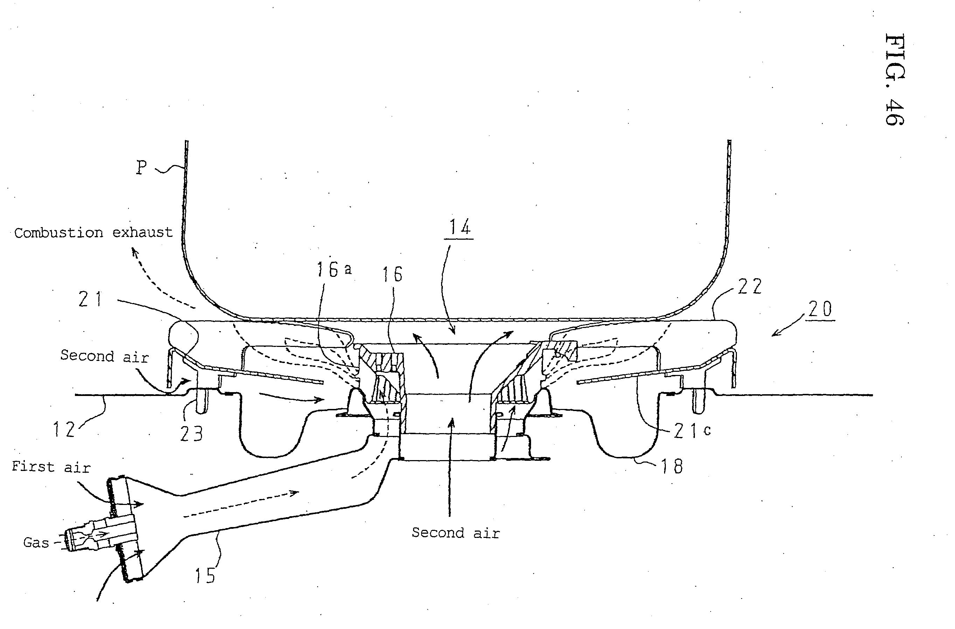

In addition, recently, as shown in Patent Document 1, a cooking stove with an interval between the burner 14 and the cooking container P reduced by lowering the trivet claws 22 is put into practical use in order to improve the heating efficiency of the cooking container P.
This cooking stove supplies second air from the base to the head end of flame by the configuration achieved by extending the jaw portion 21c of the trivet 20 to the vicinity of a main flame port 16a of the burner head 16 as shown in Fig. 46.
It has a configuration to discharge the combustion gas of the burner 14 from a clearance (ring-shaped combustion gas route) between the cooking container P and the trivet ring 21 to the outside. Reference numeral 23 designates a protruded portion which is fitted to the top plate 12 to support the trivet ring 21.
By this configuration, the height of the trivet claws 22 is lowered and the cooking container P is brought closer to the burner head 16 with the combustion performance kept satisfactory, and diffusion of combustion gas of the burner 14 is prevented by the trivet ring 21, high-temperature combustion gas is surely brought in contact with the cooking container P, and the heating efficiency of the cooking container P can be improved.

On the other hand, some of these cooking stoves are characterized by the configuration of the trivet in regard to heat efficiency improving technologies.
For example, in a cooking stove shown in Patent Document 2, there is proposed a trivet with a spiral partition wall formed on the trivet ring top surface and a protrusion protruding upwards arranged at the intermediate position of the partition wall as a kettle loading portion.
Furthermore, in a cooking stove shown in Patent Document 3, there is proposed a cooking stove intended to increase the contact distance between flame and the cooking container by tilting the flame jetting direction of the outer flame type burner at a predetermined angle in the burner circumferential direction with respect to the line connecting the burner center and the flame port, and by tilting the forming direction of the trivet claw in the same manner.

Patent Document 1: Japanese Patent Application Laid-Open Publication No. 2003-161449
Patent Document 2: Japanese Utility Model Application Laid-Open Publication No. Hei 2-140210
Patent Document 3: Japanese Patent Application Laid-Open Publication No. 2003-166718

SUMMARY OF THE INVENTION

PROBLEM TO BE SOLVED BY THE INVENTION

However, because the cooking stove like shown in Patent Document 1 has a configuration to prevent diffusion of high-temperature combustion gas by the trivet ring 21, temperature of the trivet ring 21 significantly rises. As a result, the cooking stove has a problem in that the combustion gas heat is dissipated through the trivet ring 21. In particular, in cooking stoves of forced combustion type in which combustion air is forcibly fed to the burner 14 or combustion gas of the burner 14 is forcibly discharged, the distance between the burner 14 and the coking container P can be made still shorter. However, since high-temperature combustion gas passes the trivet ring 21, the ratio of heat which is discharged from the rear surface of the trivet ring 21 to the outside is still more increased.

In addition, in the event that the height of the trivet claw 22 is made lower in this way, the contact area between the cooking container P and combustion flame can be increased, whereas the contact area between the trivet claws 22 which hold the cooking container P and combustion flame is increased, too.

Consequently, there is a problem that flame is cooled by the trivet claws 22, combustibility is degraded and carbon monoxide gas is generated.

In addition, since flame is deprived of its heat energy by the trivet claws 22, the heat transfer efficiency to the cooking container P is lowered.

Furthermore, there is a problem that since the trivet claws 22 are heated by combustion flame, the durability of the trivet 20 is lost and there is a threat of burns to the user.

Furthermore, in these conventional cooking stoves, contrivances were made to bring the cooking container P closer to the burner head 16 but no contrivance was made to further improve the heat efficiency by the method of flowing the combustion gas in the ring-shaped combustion gas route formed between the trivet ring top surface and the bottom surface of the cooking container P, leaving room for improvement.

In general, combustion gas (including flame) generated in the burner passes the ring-shaped combustion gas route and is discharged to the outside, however, in the passing process, temperature lowers and the volume flow rate decreases. Furthermore, since the route cross-sectional area increases toward the outside, in the ring-shaped combustion gas route, the passing speed of the combustion gas becomes slower toward the outside and the heat current is diffused.

On the other hand, preferable heat transfer efficiency between the combustion gas and the cooking container can be obtained when the combustion gas is allowed to pass through a narrow ring-shaped combustion gas route.

As a result, in conventional cooking stoves, the heat current is diffused more on the outside in the ring-shaped combustion gas route and sufficient heat exchange is unable to take place.

On the other hand, in a cooking stove using a spontaneous combustion type burner which feeds air required for combustion by natural draft force, shortening the distance between the bottom surface of the cooking container P and the burner 14 and excessively reducing the combustion space prevents formation of the draft force and air supply and air discharge do not smoothly take place. Consequently, there is a limit to reduce the combustion space, a distance between the burner 14 and the cooking container P becomes too wide to increase the contact area between the combustion flame and the bottom surface of the cooking container P. In addition, since a wide combustion space must be secured, combustion heat is diffused into the combustion space wastefully and the combustion heat is cooled by the ambient air which flows into the combustion space. Consequently, a desired heat efficiency was unable to be obtained.

In addition, even if an effort is made to control the combustion gas to be efficiently guided to the cooking container P and to improve the heat efficiency, it is difficult to control the combustion gas flow only by the natural draft force.

Consequently, the improvement of the heat efficiency is limited from the viewpoint of the combustion gas which is discharged to the outside before combustion heat is thoroughly transferred to the cooking container P.

In a trivet according to Patent Document 2, since a cooking container is set on a protrusion arranged on a partition wall, a combustion gas route between the bottom surface of the cooking container and the trivet ring is not divided but communicate above with each other, and in the bottom portion of the cooking container, combustion gas (including flame) of the burner does not swirl but flows in the radial direction as it is.

In addition, in a cooking stove according to Patent Document 3, since the jetting direction of the combustion gas is tilted and the forming direction of the trivet claw is tilted in the same direction, combustion gas flows aslant only with respect to the radial direction and sufficient contact with the cooking container is unable to be obtained.

That is, in all of these cooking stoves, combustion gas flows under the cooking container to the outside directly in a laminar flow state.

In such event, on the bottom surface of the cooking container, a heat transfer border film of a thin air layer is formed and works as a heat insulation layer, and heat transfer of combustion gas to the cooking container is prevented.

As a result, high heat efficiency was not obtained.

Accordingly, it is an object of the present invention to solve the above problems, eliminate energy loss arising from the configuration of a trivet and the type of burners, and obtain a high heat efficiency.

MEANS TO SOLVE THE PROBLEMS

The cooking stove according to claim 1 of the present invention to solve the above problems is summarized to include:

a burner that heats a cooking container;
a ring plate installed to be positioned around the burner;
trivet claws which bears the cooking container above the burner; and
a combustion gas route of the burner which is formed between the cooking container and the ring plate, further including:
a radiation suppressing means for suppressing radiation from the rear surface of the ring plate.

Furthermore, the cooking stove according to claim 2 of the present invention to solve the above problems is summarized that:

in the cooking stove according to claim 1, the ring plate is formed into a double structure as the radiation suppressing means by locating a front plate which faces the bottom of the cooking container on a side of the combustion gas route and a back plate which does not come in direct contact with the combustion gas of the burner nearly in parallel with a predetermined interval provided.

Furthermore, the cooking stove according to claim 3 of the present invention to solve the above problems is summarized that:

in the cooking stove according to claim 2, heat insulating material is inserted between the front plate and the back plate throughout the full length of the inner circumferential end part and the outer circumferential end part.

Furthermore, the cooking stove according to claim 4 of the present invention to solve the above problems is summarized that:

in the cooking stove according to claim 2 or 3, the space between the front plate and the back plate is in the vacuum state.

Furthermore, the cooking stove according to claim 5 of the present invention to solve the above problems is summarized that:

in the cooking stove according to claim 2, the front plate and the back plate are laid one on top of the other via heat insulating material.

Furthermore, the cooking stove according to claim 6 of the present invention to solve the above problems is summarized that:

in the cooking stove according to any of claims 1 through 5, the trivet is used for a cooking stove equipped with a cooking stove of forced combustion type which forcibly feeds and discharges combustion gas, and the front plate forms a combustion gas route of the cooking stove of forced combustion type face-to-face with the bottom of a cooking container.

Furthermore, the cooking stove according to claim 7 of the present invention to solve the above problems is summarized that:

in the cooking stove according to any of claims 1 through 6, the ring plate is a trivet ring with the trivet claws integrally installed upright on the top surface.

Furthermore, the cooking stove according to claim 8 of the present invention to solve the above problems is summarized to include:

a cylindrical or annular burner which forcibly feeds combustion air and forms flame nearly upwards or nearly inwards only; and
a trivet installed to be located around the burner and comprising multiple trivet claws installed upright to a trivet ring to bear a cooking container,
wherein the distance between the inner end of the cooking container loading portion of the trivet claws and the burner center is not less than 1.5 times the burner radius.

Furthermore, the cooking stove according to claim 9 of the present invention to solve the above problems is summarized that:

in the cooking stove according to claim 8, the multiple trivet claws are formed in a spiral, as viewed from above, and the combustion gas of the burner is discharged to the outside from the combustion gas exhaust route partitioned and formed in a spiral by being surrounded by the trivet claws, the trivet ring, and the cooking container.

Furthermore, the cooking stove according to claim 10 of the present invention to solve the above problems is summarized that:

in the cooking stove according to claim 9, the multiple trivet claws comprise
an inclined portion formed in such a manner that the top end face is raised from the inner circumferential end toward the outer circumferential direction, and
a cooking container loading portion installed to the outside of the inclined portion and whose top end position is horizontal,
and the distance from the uppermost end part of the inclined portion and the burner center is not less than 1. 5 times as large as the burner radius.

Furthermore, the cooking stove according to claim 11 of the present invention to solve the above problems is summarized to include:

a burner that heats a cooking container;
a ring plate installed around the burner;
multiple trivet claws that bear and support the cooking container above the burner; and
a ring-shaped combustion gas route formed between the top surface of the ring plate and the bottom surface of the cooking container,
wherein the route cross-sectional area of the ring-shaped combustion gas route becomes narrower as the distance from the center of the ring plate increases, or is equal even if the distance increases.

Furthermore, the cooking stove according to claim 12 of the present invention to solve the above problems is summarized that:

in the cooking stove according to claim 11, the ring plate is a trivet ring with the trivet claws integrally installed upright on its surface, and is equipped with a heat insulating means to suppress radiation from the bottom surface of the trivet ring.

Furthermore, the cooking stove according to claim 13 of the present invention to solve the above problems is summarized that:

in the cooking stove according to claim 11 or 12, the ring plate is a trivet ring with trivet claws installed upright on the top surface,
the trivet claws are formed in a spiral extending from the inside towards the outside as viewed from above, and from the inner head end to the outer head end, the trivet claws form a plate-like wall installed upright from the top surface of the trivet ring, and
when a cooking container is set, the top end of the trivet claws comes in contact with the cooking container in the form of swirling line, and divides the combustion gas route into multiple combustion gas routes partitioned and formed in a spiral surrounded by the trivet ring top surface, the trivet claws, and the bottom surface of the cooking container.

Furthermore, the cooking stove according to claim 14 of the present invention to solve the above problems is summarized to include:

a burner that heats a cooking container; and
a trivet installed to be located around the burner and configured by installing multiple trivet claws that support the bottom surface of the cooking container upright to the trivet ring at predetermined intervals,
wherein each of the trivet claws form a plate-like longitudinal wall extending outwards tilted at a predetermined angle to the burner circumferential direction with respect to straight lines radiating from the burner center is formed upright on the top surface of the trivet ring from the inner head end of to the outer head end, and
when the cooking container is set, the top end of each of the trivet claws comes linearly in contact with the bottom surface of the cooking container, divides the combustion gas route of the burner into multiple combustion gas routes partitioned and formed by being surrounded by the top surface of the trivet ring, the trivet claws, and the bottom surface of the cooking container, and discharges the combustion gas to the outside while allowing the combustion gas to collide against the wall surface of the trivet claws.

Furthermore, the cooking stove according to claim 15 of the present invention to solve the above problems is summarized that:

in the cooking stove according to claim 14, the trivet claws extend to the outside in an arc form, and when the cooking container is set, the top end comes in contact with the bottom surface of the cooking container on the arc line.

Furthermore, the cooking stove according to claim 16 of the present invention to solve the above problems is summarized that:

in the cooking stove according to claim 14 or 15, a heat insulating means is included to suppress radiation from the bottom surface of the trivet ring.

Furthermore, the cooking stove according to claim 17 of the present invention to solve the above problems is summarized that:

in the cooking stove according to any of claims 14 through 16, each of the trivet claws is disposed in such a manner that the lines connecting the burner center to the inside top end of the cooking container loading portion at the trivet claws intersect at the place within 70 mm from the burner center with respect to adjacent trivet claws.

Furthermore, the cooking stove according to claim 18 of the present invention to solve the above problems is summarized to include :

a burner that heats a cooking container;
a ring plate installed around the burner; and
trivet claws which bear the cooking container above the burner,
wherein the combustion air is forcibly fed to the burner,
a combustion gas route to which ambient air is scarcely allowed to enter is formed by surrounding the top and the bottom surfaces nearly free of any clearance by the ring plate, the burner, and the bottom surface of the cooking container, and
the combustion gas of the burner is discharged from the outer circumferential part of the combustion gas route.

Furthermore, the cooking stove according to claim 19 of the present invention to solve the above problems is summarized that:

in the cooking stove according to claim 18, the route area of the combustion gas route becomes narrower as the distance from the burner increases, or is equal even if the distance varies.

Furthermore, the cooking stove according to claim 20 of the present invention to solve the above problems is summarized that:

in the cooking stove according to claim 18 or 19, a current plate is installed to the top surface of the outer circumferential end of the ring plate to guide the burner combustion gas that flows to the outside along the ring plate top surface in the upward direction.

Furthermore, the cooking stove according to claim 21 of the present invention to solve the above problems is summarized that:

in the cooking stove according to claim 20, the top end of the current plate is lower than the top end of the outer circumference of the trivet claws.

Furthermore, the cooking stove according to claim 22 of the present invention to solve the above problems is summarized that:

in the cooking stove according to any of claims 18 through 21, the multiple trivet claws are formed in a spiral as viewed from above, and
the combustion gas of the burner is discharged to the outside from a combustion gas exhaust route partitioned and formed in a spiral by being surrounded by the trivet claws, the ring plate, and the cooking container.

Furthermore, the cooking stove according to claim 23 of the present invention to solve the above problems is summarized that:

in the cooking stove according to claim 22, each of the trivet claws formed in a spiral are intermittently formed.

Furthermore, the cooking stove according to claim 24 of the present invention to solve the above problems is summarized that:

in the cooking stove according to claim 22 or 23, even when the height of the top end of the trivet claws that come in contact with the bottom surface of the cooking container and the height of the top end of the outer circumference of the trivet claws differ, the difference is not more than the height of the outer circumferential end of the trivet claws.

Furthermore, the cooking stove according to claim 25 of the present invention to solve the above problems is summarized that:

in the cooking stove according to any of claims 20 through 24, the top end of the inner circumference of the trivet claws is lower than the top end of the outer circumference of the trivet claws.

Furthermore, the cooking stove according to claim 26 of the present invention to solve the above problems is summarized that:

in the cooking stove according to any of claims 18 through 25, the burner has the combustion portion formed nearly cylindrically, and forms flame nearly upward direction or nearly inward direction only, and
a cylindrical body is equipped to the outer circumferential side of the burner to guide the burner combustion gas in the upward direction.

Furthermore, the cooking stove according to claim 27 of the present invention to solve the above problems is summarized that:

in the cooking stove according to any of claims 18 through 26, the ring plate is a trivet ring with the trivet claws integrally installed upright on the top surface.

Furthermore, the cooking stove according to claim 28 of the present invention to solve the above problems is summarized to include:

a burner that heats a cooking container from below;
a ring plate installed around the burner; and
a ring-shaped combustion gas route that is formed between the top surface of the ring plate and the bottom surface of the cooking container, further comprising:
an exhaust guide that allows the burner combustion gas to flow towards the outer circumferential direction in a spiral along the bottom surface of the cooking container in the combustion gas route.

Furthermore, the cooking stove according to claim 29 of the present invention to solve the above problems is summarized that:

in the cooking stove according to claim 28, the ring plate is a trivet ring with trivet claws to support the bottom of a cooking container installed upright on the top surface,
the trivet claws are spiral which extend from the inside to the outside as viewed from above, and form a plate-like wall installed upright from the top surface of the trivet ring from the inside top end to the outside top end, and when a cooking container is set, the top end of the trivet claws come in contact with the cooking container in the form of spiral line, and the trivet claws partition and form the combustion gas route into a spiral surrounded by the trivet ring top surface, the trivet claws, and the bottom of the cooking container, and are also used as the exhaust guide.

Furthermore, the cooking stove according to claim 30 of the present invention to solve the above problems is summarized that:

in the cooking stove according to claim 28 or 29, the burner is an outer flame type burner with a large number of flame ports arranged in the outer circumferential direction, and the flame jetting direction of the relevant flame ports is formed tilted at a predetermined angle in the burner circumferential direction with respect to straight lines directed in a radial pattern from the center of the burner.

Furthermore, the cooking stove according to claim 31 of the present invention to solve the above problems is summarized that:

in the cooking stove according to any of claims 28 through 30, the route cross-sectional area of the ring-shaped combustion gas route becomes narrower as the distance from the center of the ring plate increases, or is equal even if the distance increases.

Furthermore, the cooking stove according to claim, 32 of the present invention to solve the above problems is summarized to include:

a burner that heats a cooking container;
a ring plate which is installed around the burner;
trivet claws which bear and support the cooking container above the burner; and
a ring-shaped combustion gas route formed between the top surface of the ring plate and the bottom surface of the cooking container, further comprising:
an exhaust guide means that varies the burner combustion gas flowing to the outside along the top surface of the ring plate to the upward direction,
wherein the exhaust gas guide means is mounted to the top surface outer circumferential part of the ring plate, and allows the combustion gas to collide against the bottom of a cooking container for a cooking container with a diameter larger than the outside diameter of the ring plate, and allows the combustion gas to flow upwards along the side of the cooking container for a cooking container with a diameter smaller than the outside diameter of the ring plate.

Furthermore, the cooking stove according to claim 33 of the present invention to solve the above problems is summarized that:

in the cooking stove according to claim 32, the combustion air is forcibly fed to the burner, and a combustion gas route to which ambient air is scarcely allowed to enter is formed by surrounding the top and the bottom surfaces nearly free of any clearance by the ring plate, the burner, and the bottom surface of the cooking container, and the combustion gas of the burner is discharged from the outer circumferential part of the combustion gas route.

Furthermore, the cooking stove according to claim 34 of the present invention to solve the above problems is summarized that:

in the cooking stove according to claim 32 or 33, the route area of the combustion gas route becomes narrower as the distance from the center of the burner increases, or is equal even if the distance varies.

Furthermore, the cooking stove according to claim 35 of the present invention to solve the above problems is summarized that:

in the cooking stove according to any of claims 32 through 34, a radiation suppressing means that suppresses radiation from the rear surface of the ring plate is equipped.

Furthermore, the cooking stove according to claim 36 of the present invention to solve the above problems is summarized that:

in the cooking stove according to any of claims 32 through 35, the ring plate is a trivet ring with the trivet claws integrally installed upright on the top surface.

EFFECTS OF THE INVENTION

According to the cooking stove described in claim 1 of the present invention, a radiation suppressing means suppresses radiation from the rear surface of the ring plate.
Consequently, radiation of the burner combustion gas that passes between the cooking container and the ring plate from the rear surface of the ring plate is suppressed and lowering of temperature of the burner combustion gas can be prevented.

Consequently, the combustion gas heat of the burner can be effectively utilized for heating the cooking container and the heat efficiency can be improved.

In addition, degradation of the cooking environment by radiation from the trivet can be suppressed.

In addition, according to the stove described in claim 2 of the present invention, the ring plate is formed into a double structure by a front plate which faces the burner at high-temperature combustion gas and a back plate which does not come in direct contact with the burner combustion gas of the burner, a clearance is formed between the front plate and the back plate. Consequently, the clearance serves as an heat insulating layer and suppresses radiation of the burner combustion gas heat transmitted to the front plate to the outside, and lowering of temperature of the burner combustion gas can be prevented. Consequently, the burner combustion gas heat can be effectively utilized for heating the cooking container, and the heat efficiency can be improved.

In addition, degradation of the cooking environment by radiation from the trivet can be suppressed.

In addition, according to the stove described in claim 3 of the present invention, heat insulating material is inserted between the front plate and the back plate throughout the full length of the inner circumferential end part and the outer circumferential end part of the ring plate, and heat transfer of the combustion gas heat which is transmitted to the front plate from the inner circumferential and outer circumferential end parts to the back plate can be thereby suppressed.

Consequently, heat transfer of the burner combustion gas heat which is transmitted to the front plate to the back plate can be more definitely suppressed.

Consequently, the heat efficiency can be still more improved and at the same time, degradation of the cooking environment can be suppressed.

In addition, according to the cooking stove described in claim 4 of the present invention, the space between the front plate and the back plate is in the vacuum state, and the vacuum part works as a heat insulating layer.

In the vacuum state, no molecule exists between the front plate and the back plate, and heat transfer does not take place between molecules. Consequently, heat can be definitely insulated.

Consequently, release of burner combustion gas heat to the outside is still more definitely suppressed and the heat efficiency can be improved and at the same time, degradation of the cooking environment can be suppressed.

In addition, according to the cooking stove described in claim 5 of the present invention, heat insulating material is sandwiched between the front plate and the back plate, and the burner combustion gas heat transferred to the front plate is insulated by the heat insulating material.

Consequently, release of burner combustion gas heat to the outside is still more definitely suppressed and the heat efficiency can be improved and at the same time, degradation of the cooking environment can be suppressed.

In addition, since no void is formed between the front plate and the back plate, strength of the ring plate can be increased.

In addition, according to the cooking stove described in claim 6 of the present invention, in the cooking stove in which combustion air is forcibly fed and discharged and at the same time burner combustion gas is released from the combustion gas route formed between the cooking container and the ring plate surface to the outside, the radiation suppressing means suppresses radiation from the rear surface of the trivet ring.

A cooking stove of forced combustion type to which combustion air is forcibly supplied can improve the heat transfer efficiency to the cooking container by narrowing the combustion space as compared to a cooking stove of spontaneous combustion type in which combustion air is supplied by natural draft force. However, in such event, the combustion gas heat of the burner combustion gas which comes in contact with the trivet acquires high temperature, too, and the ratio of heat discharged to the outside through the trivet is still more increased.

In the present invention, since a radiation suppressing means that suppresses radiation from the rear surface of the ring plate that forms the combustion gas route is provided, radiation of the combustion gas heat from the trivet can be suppressed.

In this way, in a cooking stove in which combustion gas heat acquires high temperature, a trivet equipped with a radiation suppressing means achieves still greater heat insulation effects.

In this way, according to the cooking stove described in claim 7 of the present invention, as the ring plate is made into a trivet ring with trivet claws integrally installed upright, the number of components is decreased. As a result, the configuration is simplified and the cost is reduced.

According to the cooking stove described in claim 8 of the present invention with the foregoing configuration, since combustion air is forcibly supplied, satisfactory combustion condition can be obtained even when the combustion space formed between the bottom surface of the cooking container and the burner is reduced as compared to a cooking stove of spontaneous combustion type which feeds combustion air by natural draft force. Consequently, the heat transfer efficiency of the combustion flame and the bottom surface of the cooking container can be increased by shortening the distance between the burner and the bottom surface of the cooking container.

In addition, by forming flame not radially towards the outside in the horizontal direction but nearly upwards or nearly inwards, the contact area between the bottom surface center part of the cooking container and flame is increased and the heat efficiency can be improved, and at the same time overflowing of flame from the cooking container side to the outer circumferential side is suppressed and safety of a cooking person can be improved.

Furthermore, the inventors confirmed that the area in which the combustion flame is formed is about 1. 5 times the burner radius when the distance between the cooking container and the burner is brought close to the limit in a cooking stove with a cylindrical or annular burner mounted which forcibly feeds combustion air and forms flame nearly upwards.

Then, the distance between the end part on the trivet claw inner circumferential side and the burner center is set to be not less than 1.5 times the burner radius.

Consequently, even in the event that the height of the trivet claws is reduced and the distance between the cooking container and the burner is reduced to the limit to increase the contact area between the combustion flame and the cooking container, trivet claws are not scorched with burner combustion flame.

Consequently, generation of carbon monoxide due to degraded combustibility as flame is cooled by trivet claws can be suppressed.

In addition, since flame is not deprived of heat energy by trivet claws, the heat transfer efficiency to the cooking container is not decreased.

Furthermore, degraded durability of the trivet resulting from trivet claws heated by combustion flame can be suppressed.

In a burner in which combustion flame is formed inwardly to the annular burner, the flame is formed in the center direction from the annular-inward flame port, and therefore, it comes in contact with the cooking container to be formed outwardly. Accordingly, the distance of an end part of the combustion flame from the burner center decreases as compared to that of the above-mentioned upward flame port burner. That is, the area in which the combustion flame is formed is not more than 1.5 times the burner radius, and the trivet configuration in which the distance of the end part on the inner circumferential side of the loading portion of the trivet claws on which the cooking container is set is not less than 1.5 times of the burner radius can be applied to the cooking stoves equipped with an internal flame port burner.

According to the cooking stove described in claim 9 of the present invention, the trivet claws are spiral-shaped as viewed from above, and the combustion gas of the burner is discharged to the outside from the combustion gas exhaust route partitioned and formed in a spiral by being surrounded by the trivet claws, the trivet ring, and the cooking container.

Because the trivet claws are installed in a spiral as viewed from above, the combustion gas passes the combustion gas route partitioned and formed in a spiral by clearances between the bottom surface of the cooking container, trivet ring, and trivet claws while constantly colliding against trivet claws. And when the combustion gas collides against trivet claws, the combustion gas changes the flow from the horizontal direction to the upward direction and collides against the bottom surface of the cooking container.

Consequently, the heat transfer efficiency between the bottom surface of the cooking container and combustion gas can be improved.

Furthermore, when the combustion gas reaches the outer circumferential part away from the cooking container, the combustion gas collides against the spiral trivet claws and is sent in the upward direction as it is, and flows along the side of the cooking container.

Consequently, in addition to the bottom surface of the cooking container, on the side of the cooking container, satisfactory heat exchange with the combustion gas takes place and the heat efficiency is still more improved.

Now, because the burner combustion flame is formed radially towards the outside after the burner combustion flame collides against the cooking container, bringing the spiral trivet claws closer to the burner causes the combustion flame to collide against the inner circumferential surface of the trivet claws. In such event, as compared to the conventional radial trivet claws, the area scorched by the combustion flame increases, giving rise to still more degraded combustibility resulting from contact between trivet claws and combustion flame, lowered heat efficiency, and degraded durability of the trivet.

Therefore, because in the present invention, the distance between the inner side end of the trivet claws and the burner center is set to be not less than 1.5 times the burner radius, contact of the trivet claws with the combustion flame is suppressed, and degradation of combustibility and degradation of the trivet can be suppressed.

That is, the heat transfer efficiency between the combustion gas and the cooking container is improved and at the same time, the heat transfer efficiency between the combustion flame and the cooking container can be improved with the satisfactory combustion maintained, and still higher heat efficiency can be obtained.

Furthermore, according to the cooking stove described in claim 10 of the present invention, in the trivet with spiral trivet claws installed upright, an inclined portion formed in such a manner that the top end face is raised from the inner circumferential end toward the outer circumferential direction is arranged and at the same time, the distance from the uppermost end part of the inclined portion and the burner center is made to be not less than 1.5 times the burner radius.

In the event that the inner side end of spiral trivet claws is brought to be excessively away from the burner, the area in which combustion gas flow is spiral-shaped is reduced. In particular, when a cooking container of a small diameter is set, the combustion gas is discharged to the.outside before the flow forms a spiral, and satisfactorily increased heat transfer efficiency is unable to be obtained between the combustion gas and the cooking container.

On the other hand, when the inside end of the trivet claws is excessively close to the burner, the combustion flame scorches the trivet claws and the combustibility is degraded. Now, since the burner flame is formed radially from the center part of the bottom surface of the cooking container to the outward direction after the flame is formed upwards from the flame port towards the bottom surface of the cooking container, it is the top end of the trivet claws which serves as the cooking container loading portion that comes in contact with the combustion flame at the trivet claws.

In the present invention, by arranging an inclined portion with its top end cut on the inner circumferential side of the trivet claws close to the burner, the trivet claws are prevented from entering the area formed by the burner flame and at the same time, rectifying effects of forming the combustion gas flow in a spiral in early stages on the lower side of the trivet claws can be obtained.

Accordingly, the heat efficiency is still more improved.

According to the cooking stove described in claim 11 of the present invention, a ring plate is formed in such a manner that the route cross-sectional area of the ring-shaped combustion gas route becomes narrower as the distance from the center of the ring plate increases, or is equal even if the distance increases.

This route cross-sectional area A can be expressed by $A = 2 \pi r h$ where r denotes the distance from the center of the ring plate and h denotes the distance (height) between the ring plate and the bottom surface of the cooking container.

Please note that the route cross-sectional area A means the area of a plane which crosses at right angles to the flow of combustion gas in the partitioned combustion gas route, when the combustion gas route is partitioned in predetermined directions (for example, spiral partitions).

The wider the combustion space, the better is the combustibility of fuel gas in a burner. On the other hand, the faster the combustion gas flow rate, that is, the narrower the combustion gas route cross-sectional area, the better is the heat transfer efficiency between the combustion gas and the cooking container.

In the present invention, since the route cross-sectional area of the combustion gas route is reduced as the distance from the burner increases, the distance from the burner is short, that is, at the place close to the combustion space, the combustion gas route is kept wide to an extent that the burner combustibility is not impaired, and at the place far from the burner, the route cross-sectional area of the combustion gas route is reduced to improve the heat transfer efficiency between the combustion gas and the cooking container.

In addition, the volume flow rate of combustion gas decreases with a decrease of the temperature of combustion gas as the distance from the burner increases. Consequently, as in the case with a conventional cooking stove in which the cross-sectional area of the combustion gas route increases as the distance from the burner increases, combustion gas still more decelerates and diffuses, and the heat efficiency decreases.

In the present invention, since contrivance is made to prevent the route cross-sectional area of the combustion gas route from being increased as the distance from the burner increases, a drop of flow rate of the combustion gas associated with the reduced volume flow rate does not occur. Consequently, lowering of heat efficiency due to diffusion of combustion gas is not brought about.

Furthermore, according to the cooking stove described in claim 12 of the present invention, a trivet ring with the trivet claws integrally installed upright on the surface of the ring plate is used, and the combustion gas (including flame) that flows in the ring-shaped combustion gas route heats not only the cooking container but also the ring plate as well as trivet claws, and the trivet ring itself attains high temperature. However, since the heat insulating means suppresses radiation from the underside of the trivet ring, temperature drop of combustion gas of the burner can be prevented.

Consequently, the combustion gas heat can be effectively utilized for heating the cooking container and the heat efficiency can be still more improved.

In addition, degradation of cooking environment caused by radiation from the trivet can be suppressed.

Furthermore, according to the cooking stove described in claim 13 of the present invention, the trivet claws are spiral-shaped extending from the inside towards the outside as viewed from above, and from the inner head end to the outer head end, the trivet claws form a plate-like wall installed upright from the top surface of the trivet ring, and when a cooking container is set, the top end of the trivet claws comes in contact with the cooking container in the form of swirling line, and divides the combustion gas route into multiple combustion gas routes partitioned and formed in a spiral surrounded by the trivet ring top surface, the trivet claws, and the bottom surface of the cooking container.

Consequently, the combustion gas of the burner flows into the combustion gas route partitioned and formed in a spiral, respectively, where the combustion gas passes while colliding against the trivet claws. When the combustion gas collides against trivet claws, the combustion gas changes the flow from the horizontal direction to the upward direction and collides against the bottom surface of the cooking container. Consequently, the heat transfer efficiency between the bottom surface of the cooking container and combustion gas can be improved.

In addition, when the combustion gas reaches the outer circumferential section further from the cooking container, the combustion gas collides against the spiral trivet claws, is delivered to the upward direction as it is, and flows along the side of the cooking container.

Consequently, satisfactory heat exchange with combustion gas takes place on the side of the cooking container, in addition to the bottom surface of the cooking container.

In addition, because contrivance is made to prevent the route cross-sectional area of each combustion gas route partitioned and formed from being wider as it goes toward the outside, diffusion of combustion gas can be prevented, and remarkably high heat efficiency can be obtained.

According to the cooking stove described in claim 14 of the present invention, when the combustion gas (including flame) of the burner flows into multiple combustion gas routes surrounded and partitioned by the top surface of the trivet ring, trivet claws, and the bottom surface of the cooking container, the combustion gas collides against the side of trivet claws extending tilted at a predetermined angle. And the combustion gas which collides against the trivet claws changes the direction from the horizontal direction to the upward direction and collides against the bottom surface of the cooking container. As a result, in the combustion gas route, the combustion gas flows in a turbulent state, and no heat transfer border film (thin air heat insulating layer) is formed on the bottom surface of the cooking container, and the combustion gas heat is successfully transferred to the bottom surface of the cooking container.

In addition, a long contact distance can be provided

between the combustion gas and the bottom surface of the cooking container.

Furthermore, because the combustion gas collides against the trivet claws and is delivered to the outside while varying the flow in the upward direction, when the combustion gas reaches the outer circumferential part further from the cooking container, the combustion gas is delivered in the upward direction as it is and flows along the side of the cooking container. Consequently, the combustion gas is difficult to escape to the outside (lateral direction) of the cooking container and the combustion gas heat can be effectively utilized.

As a result, a remarkably high heat efficiency can be obtained.

Furthermore, according to the cooking stove described in claim 15 of the present invention, the trivet claws extend to the outside in an arc form and the top end comes in contact with the bottom surface of the cooking container on the arc line, the combustion gas is smoothly delivered to the outside while colliding against the trivet claws side wall, and at the same time, as the whole trivet ring surface, the combustion gas flows in a spiral. Consequently, even when the contact distance with the bottom surface of the cooking container is long, the exhaust resistance is small and the heat distribution becomes free of deviation. As a result, the heat efficiency is still more improved.

Furthermore, according to the cooking stove described in claim 16 of the present invention, since the combustion gas collides against the trivet claws, not only the trivet claws but also the trivet ring acquire high temperature but a heat insulating means suppresses radiation from the bottom surface of the trivet ring, and temperature drop of the burner combustion gas can be prevented.

Consequently, the combustion gas heat can be effectively utilized for heating the cooking container and the heat efficiency can be still more improved.

In addition, degradation of cooking environment caused by radiation from the trivet can be suppressed.

Furthermore, according to the cooking stove described in claim 17 of the present invention, in the case of general cooking containers, combustion gas surely collides against trivet claws and then, collides against the bottom of the cooking container.

That is, depending on intervals and gradient angles of the trivet claws, an area is formed in which the combustion gas is discharged to the outside as it is without colliding against trivet claws. However, since the trivet claws are disposed in such a manner that a straight line that connects the burner center (trivet ring center) to the inner head end of the cooking container loading portion intersects at the place within 70 mm from the burner center with respect to adjacent trivet claws, even an ordinary small pan 160 mm in diameter (80 mm in radius and the curvature radius of the outer circumferential part R = 10 mm), collision of the combustion gas against the bottom surface of the cooking container can be obtained throughout the full circumference of the pan.

Consequently, as far as general cooking containers are concerned, effects of claims 14 through 16 can be definitely obtained.

According to the cooking stove described in claim 18 of the present invention which has the above-mentioned configuration, the combustion air is forcibly fed to the burner, a combustion gas route is formed by surrounding the top and the bottom surfaces nearly free of any clearance by the ring plate, the burner, and the bottom surface of the cooking container, and the combustion gas of the burner is discharged from the outer circumferential part of the combustion gas route. Here, the combustion gas route means a combustion space and an exhaust gas route of the combustion gas.

Because the combustion air is forcibly supplied, as

compared to the spontaneous combustion type cooking stove to which combustion air is fed by natural draft force, satisfactory combustion space can be obtained even if the combustion space is reduced.

Consequently, the distance between the burner and the bottom surface of the cooking container is shortened, the contact area between the combustion flame and the bottom surface of cooking container is increased, and the heat transfer efficiency can be improved.

Furthermore, because the exhaust gas is discharged from the outer circumferential part of the combustion gas route whose top and bottom surfaces are surrounded by the burner, ring plate, and the bottom surface of the cooking container nearly free of clearance, ambient air scarcely flows in the combustion gas route and cooling of the combustion heat by ambient air can be suppressed. In addition, the high-temperature combustion gas is discharged to the outside after passing the combustion gas route as if it licks the bottom of the cooking container without wastefully diffusing the combustion heat to the combustion gas route.

Consequently, the cooking container efficiently comes in contact with the combustion gas and is heated.

In addition, by forcibly supplying combustion air, it becomes possible to carry out control in such a manner as to efficiently guide the combustion gas to the cooking container to achieve improved heat efficiency. For example, the flow of the combustion gas can be controlled by the shape of the trivet.

Furthermore, according to the cooking stove described in claim 19 of the present invention, the cross-sectional area of the combustion gas route whose top and bottom surfaces are surrounded by the burner, ring plate, and the bottom surface of the cooking container nearly free of clearance, and the combustion gas route is narrowed as the distance from the burner increases. The cross-sectional area A of the combustion gas route can be expressed as A = $2 \pi rh$ where r denotes the distance from the burner center and h denotes the distance between the ring plate and the bottom surface of the cooking container.

In the event that the combustion gas route is partitioned in a predetermined direction (for example, spiral partitions), the route cross-sectional area A is the area of the plane that crosses at right angles to the flow of the combustion gas in the partitioned combustion gas route.

The wider the combustion space, the better is the combustibility of fuel gas in a burner. On the other hand, the faster the combustion gas flow rate, that is, the narrower the combustion gas route cross-sectional area, the better is the heat transfer efficiency between the combustion gas and the cooking container.

In the present invention, the route cross-sectional area of the combustion gas route is reduced as the distance from the burner increases, the distance from the burner is short, that is, at the place close to the combustion space, the combustion gas route is kept wide to an extent that the burner combustibility is not impaired and at the same time, at the place far from the burner, the route cross-sectional area of the combustion gas route is reduced to improve the heat transfer efficiency between the combustion gas and the cooking container.

In addition, the volume flow rate of combustion gas decreases with a decrease of the temperature of combustion gas as the distance from the burner increases. Consequently, as is the case with a cooking stove in which the cross-sectional area of the combustion gas route is not changed as the distance from the burner increases, combustion gas still more decelerates and diffuses, and the heat efficiency decreases. In the present invention, since contrivance is made to narrow the route cross-sectional area of the combustion gas route as the distance from the burner increases, a drop of flow rate of the combustion gas associated with the reduced volume flow rate does not occur. Consequently, lowering of heat efficiency due to a drop of flow rate of combustion gas is not brought about.

Furthermore, according to the cooking stove described in claim 20 of the present invention, a current plate guides the burner combustion gas that flows to the outside along the ring plate top surface in the upward direction.

Consequently, when a cooking container larger than the current plate diameter is set, the combustion gas which collides against the current plate and changes the flow in the upward direction collides against the bottom of the cooking container. Consequently, the heat transfer efficiency between the bottom surface of the cooking container and the combustion gas can be improved.

Furthermore, when a cooking container smaller than the current plate diameter is set, the combustion gas which collides against the current plate and changes the flow in the upward direction flows along the side of the cooking container.

As a result, in addition to the bottom surface of the cooking container, heat exchange with the combustion gas satisfactorily takes place even on the side of the cooking container and the heat efficiency is improved.

Furthermore, according to the cooking stove described in claim 21 of the present invention, the current plate on the ring plate surface is formed to be lower than the trivet claws.

Consequently, even when a cooking container larger than the ring plate diameter is set on the trivet claws, the exhaust port of the combustion gas is not blocked.

Furthermore, according to the cooking stove described in claim 22 of the present invention, the trivet claws are spiral-shaped as viewed from above, and the combustion gas of the burner is discharged to the outside from a combustion gas exhaust route partitioned and formed in a spiral by being surrounded by the trivet claws, the ring plate, and the cooking container.

Because the trivet claws are installed in a spiral as viewed from above, the combustion gas of the burner passes the combustion gas route partitioned and formed in a spiral by the clearance between the bottom surface of the cooking container, ring plate, and trivet claws while constantly colliding against the trivet claws. When the combustion gas collides against trivet claws, the combustion gas changes the flow from the horizontal direction to the upward direction and collides against the bottom surface of the cooking container. Consequently, the heat transfer efficiency between the bottom surface of the cooking container and combustion gas can be improved.

In addition, when the combustion gas reaches the outer circumferential section further from the cooking container, the combustion gas collides against the spiral trivet claws, is delivered to the upward direction as it is, and flows along the side of the cooking container.

Consequently, satisfactory heat exchange with combustion gas takes place on the side of the cooking container, in addition to the bottom surface of the cooking container, and the heat efficiency is still more improved.

Furthermore, according to the cooking stove described in claim 23 of the present invention, the trivet claws formed in a spiral are intermittently formed, the ratio of the combustion heat deprived by the trivet claws can be reduced. Consequently, the temperature drop of the combustion heat which flows between the cooking container and the ring plate is prevented and the heat transfer efficiency to the cooking container can be improved.

Furthermore, according to the cooking stove described in claim 24 of the present invention, even when the height of the top end of the trivet claws that come in contact with the bottom surface of the cooking container and the height of the top end of the outer circumference of the trivet claws differ, the difference is not more than the height of the outer circumferential end of the trivet claws, and therefore, the clearance between the bottom of the cooking container set on the upper most end of the trivet claws and the outer circumferential top end of the trivet claws becomes narrower than the height of the trivet claws at the outer circumferential end.

When a wide clearance is formed between the spiral trivet claw top end and the cooking container, the combustion gas diffuses between the upper part of the trivet claws and the bottom surface of the cooking container, and the flow of the combustion gas is not spiral-shaped. In such event, improvement of the heat efficiency by the spiral-shaped combustion gas flow is unable to be successfully obtained.

On the other hand, according to the present invention, the clearance between the bottom surface of the cooking container set on the uppermost end of the trivet claw and the outer circumferential top end of the trivet claws is configured to be smaller than the height of the trivet claws at the outer circumferential end, it is possible to suppress the combustion gas from diffusing between the trivet claw upper part and the bottom surface of the cooking container. Consequently, heat exchange definitely takes place between the side of the cooking container and combustion gas and heat efficiency can be improved.

Furthermore, according to the cooking stove described in claim 25 of the present invention, the top end of the inner circumference of the trivet claws is made to be lower than the top end of the outer circumference of the trivet claws. Generally, cooking containers have round bottom surfaces. That is, the center part of the bottom surface of a cooking container is located lower than the outer circumferential end part of the bottom surface.

Consequently, in the event that the top end height of the trivet claws is all identical, a clearance is formed between the cooking container and the top end of the trivet claws on the outer circumferential side. In such event, combustion gas diffuses to the outside from the clearance between the cooking container and the top end of the trivet claws, and combustion gas is not spiral-shaped and the desired heat efficiency is unable to be obtained.

On the other hand, in the present invention, the height of the inner circumferential top end of the spiral trivet claws is made to be lower than the height of the outer circumferential top end, the clearance between the top end of the trivet claws and the bottom surface of the cooking container can be reduced. Consequently, the combustion gas forms an ideal spiral form and the heat transfer efficiency between the combustion gas and the cooking container can be improved.

Furthermore, according to the cooking stove described in claim 26 of the present invention, a cylindrical body protruding upwards from the burner combustion part is provided on the outer circumferential side of the burner, and the burner combustion gas goes upwards in the space surrounded by the inner circumferential wall of the cylindrical body. Consequently, the center portion of the bottom surface of the cooking container is brought in secure contact with the combustion gas, and the heat transfer efficiency can be improved.

Furthermore, according to the cooking stove described in claim 27 of the present invention, the ring plate is a trivet ring with the trivet claws integrally installed upright on the top surface, and therefore, the number of components is reduced, the configuration is simplified, and cost can be reduced.

According to the cooking stove described in claim 28 which has the above configuration, the combustion gas spouted out from the burner is discharged towards the outer circumferential direction along the bottom surface of the cooking container while being guided in a spiral by an exhaust guide. As a result, in the combustion gas route, the combustion gas is constantly subject to the force to change the direction and the flow is disturbed, and therefore, the heat transfer border film (thin air insulating layer) is difficult to be formed on the bottom surface of the cooking container and the heat of the combustion gas is successfully transferred to the bottom surface of the cooking container. Furthermore, a long contact distance can be provided between the combustion gas and the bottom surface of the cooking container. As a result, a high heat efficiency can be achieved.

Furthermore, according to the cooking stove described in claim 29 of the present invention, the trivet claws form a spiral which extends from the inside to the outside as viewed from above, and form a plate-like wall installed upright from the top surface of the trivet ring from the inside top end to the outside top end, and when a cooking container is set, the top end of the trivet claws come in contact with the cooking container in the form of spiral line, and partition and form the combustion gas route into a spiral surrounded by the trivet ring top surface, the trivet claws, and the bottom of the cooking container.

Consequently, the combustion gas of the burner flows into and passes the combustion gas route partitioned and formed in a spiral while constantly colliding against the trivet claws. When the combustion gas collides against trivet claws, the combustion gas changes the flow from the horizontal direction to the upward direction and collides against the bottom surface of the cooking container. Consequently, the heat transfer efficiency between the bottom surface of the cooking container and combustion gas can be improved.

In addition, when the combustion gas reaches the outer circumferential section further from the cooking container, the combustion gas collides against the spiral-shaped trivet claws, is delivered to the upward direction as it is, and flows along the side of the cooking container.

Consequently, satisfactory heat exchange with combustion gas takes place on the side of the cooking container, in addition to the bottom surface of the cooking container.

In addition, since the trivet claws which bear and support the cooking container as described above also serves as an exhaust guide that guides the flow of combustion gas, there is no need to specially install an exhaust guide, and the manufacturing cost can be reduced.

Furthermore, according to the cooking stove described in claim 30 of the present invention, the flame jetting direction of the relevant flame ports is formed tilted at a predetermined angle, and therefore, the combustion gas of the burner flows between the trivet claws for a while after the gas is spouted out and thereafter flows towards the circumferential direction while colliding against the trivet claws.

Consequently, since the cooking stove is configured to allow the combustion gas to collide against the trivet claws after the combustion gas is completely combusted, combustion can be successfully maintained. In other words, allowing the combustion gas to collide against trivet claws too early after spouting out lowers the flame temperature and incomplete combustion occurs, but by allowing the combustion gas to collide against trivet claws at the right time, combustion can be successfully maintained.

In addition, for a certain time before colliding against the trivet claws after the combustion gas is spouted out, a fast jetting speed can be maintained and the combustion gas is difficult to form a laminar flow, and the heat efficiency can be still more improved.

Furthermore, according to the cooking stove described in claim 31 of the present invention, the ring plate is formed in such a manner that the route cross-sectional area of the ring-shaped combustion gas route becomes narrower as the distance from the center of the ring plate increases, or is equal even if the distance increases. This cross-sectional area of the route means the area of a plane that crosses at right angles to the flow of the combustion gas in the combustion gas route partitioned in a spiral.

The wider the combustion space, the better is the combustibility of fuel gas in a burner. On the other hand, the faster the combustion gas flow rate, that is, the narrower the combustion gas route cross-sectional area, the better is the heat transfer efficiency between the combustion gas and the cooking container.

In the present invention, the route cross-sectional area of the combustion gas route is reduced as the distance from the burner increases, the distance from the burner is short, that is, at the place close to the combustion space, the combustion gas route is kept wide to an extent that the burner combustibility is not impaired and at the same time, at the place far from the burner, the route cross-sectional area of the combustion gas route is reduced to improve the heat transfer efficiency between the combustion gas and the cooking container.

In addition, the volume flow rate of combustion gas decreases with a decrease of the temperature of combustion gas as the distance from the burner increases. Consequently, as is the case with a conventional cooking stove in which the cross-sectional area of the combustion gas route increases as the distance from the burner increases, combustion gas still more decelerates and diffuses, and the heat efficiency decreases.

In the present invention, contrivance is made to prevent the route cross-sectional area of the combustion gas route from being increased as the distance from the burner increases, a drop of flow rate of the combustion gas associated with the reduced volume flow rate does not occur. Consequently, lowering of heat efficiency due to diffusion of combustion gas is not brought about.

Furthermore, according to the cooking stove described in claim 32 of the present invention, the combustion gas flows towards the outside in the radial direction between the ring plate and the cooking container, and then, changes the flow in the upward direction by the exhaust guide means. Consequently, when a cooking container of a diameter larger than the outside diameter of the ring plate is set, the combustion gas collides against the bottom surface of the cooking container and is discharged to the outside while moving to the outer circumference along the bottom surface of the cooking container as it is. On the other hand, when a cooking container of a diameter smaller than or same as the outside diameter of the ring plate is set, the combustion gas flows along the bottom surface of the cooking container between the bottom surface of the cooking container and the ring plate, and then, changes the direction in the upward direction, and rises along the side of the cooking container as it is. Consequently, in either case, successful heat exchange is conducted with the combustion gas and the heat efficiency can be improved.

Furthermore, according to the cooking stove described in claim 33 of the present invention, same as claim 18, since the combustion air is forcibly fed to the burner, satisfactory combustion condition can be obtained even if the combustion space is reduced. Consequently, the distance between the burner and the bottom surface of the cooking container is shortened to increase the contact area between the combustion flame and the bottom surface of cooking container, and the heat transfer efficiency can be improved. Moreover, since ambient air scarcely flows in the combustion gas route, cooling of the combustion heat by ambient air can be suppressed. In addition, since the high-temperature combustion gas is discharged to the outside after passing the combustion gas route as if it licks the bottom of the cooking container without wastefully diffusing the combustion heat to the combustion gas route, the cooking container efficiently contact with the combustion gas and is heated.

Furthermore, according to the cooking stove described in claim 34 of the present invention, same as claim 31, the heat transfer efficiency between the combustion gas and the cooking container can be improved. Furthermore, because a drop of flow rate of the combustion gas associated with the reduced volume flow rate does not occur, lowering of heat efficiency due to diffusion of combustion gas is not brought about.

Furthermore, according to the cooking stove described in claim 35 of the present invention, same as claim 1, radiation of the burner combustion gas from the rear surface of the ring plate is suppressed and lowering of temperature of the burner combustion gas can be prevented. Consequently, the combustion gas heat of the burner can be effectively used for heating the cooking container and the heat efficiency can be improved. In addition, degradation of the cooking environment by radiation from the trivet can be suppressed.

Furthermore, according to the cooking stove described in claim 36 of the present invention, same as claim 27, the ring plate is a trivet ring with the trivet claws integrally installed upright on the top surface, and therefore, the number of components is reduced, the configuration is simplified, and cost can be reduced.

DESCRIPTION OF THE PREFERRED EMBODIMENTS

In order to further clarify the structure and operation of the present inventions explained above, preferred embodiments in cooking stoves of the present inventions will be described hereinafter.
Additionally, like reference characters designate like or corresponding parts throughout, and their explanation will be omitted.

First of all, embodiments 1 through 5 which correspond to the inventions of claims 1 through 7 will be described. Please note that this kind of correspondence of claims to embodiments is given only for convenience of understanding the inventions and needless to say, there are components of articles which overlap inventions related to other claims.

[Embodiment 1]

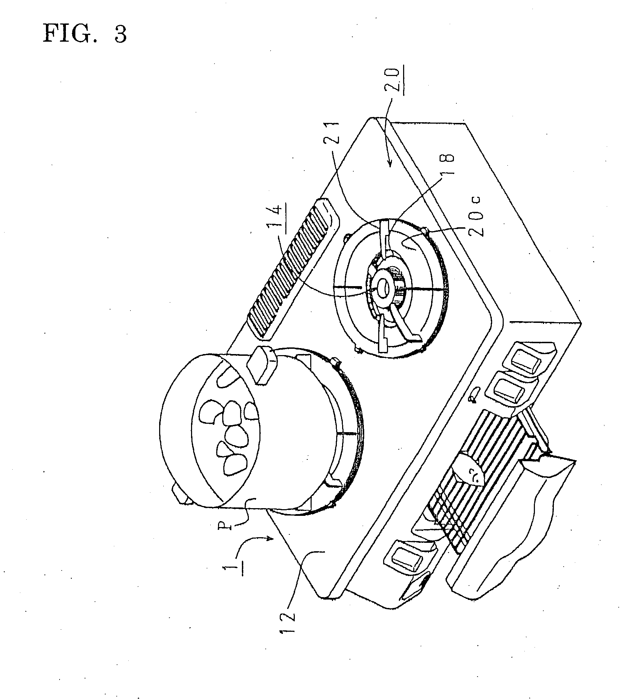

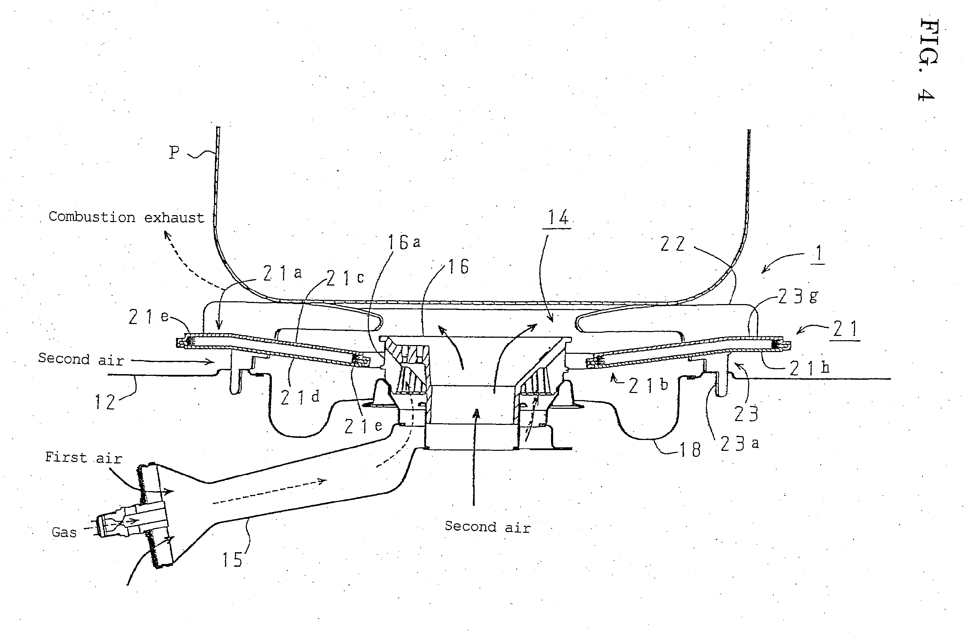

A table burner as a cooking stove has an opening on a top plate 12 as shown in Fig. 3 and Fig. 4, and at the center position of the opening, a burner 14 is arranged and a drip plate 18 is mounted. A cooking container P is mounted on a trivet 20 installed above the drip plate 18.

The burner 14 consists of a burner main body 15 which has an opening formed at the center and has an annular fuel-air mixing chamber and a burner head 16 which forms a large number of main flame ports on an outer peripheral edge when it is mounted on the burner main body 15.

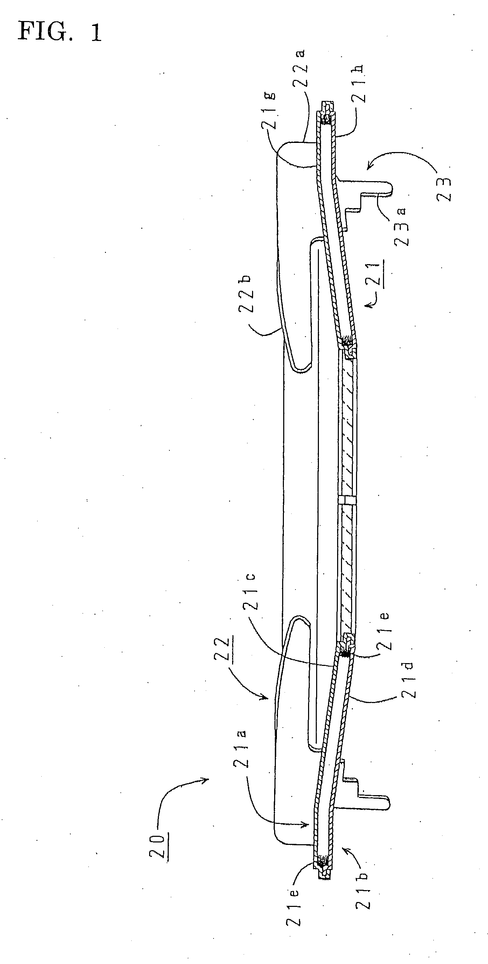

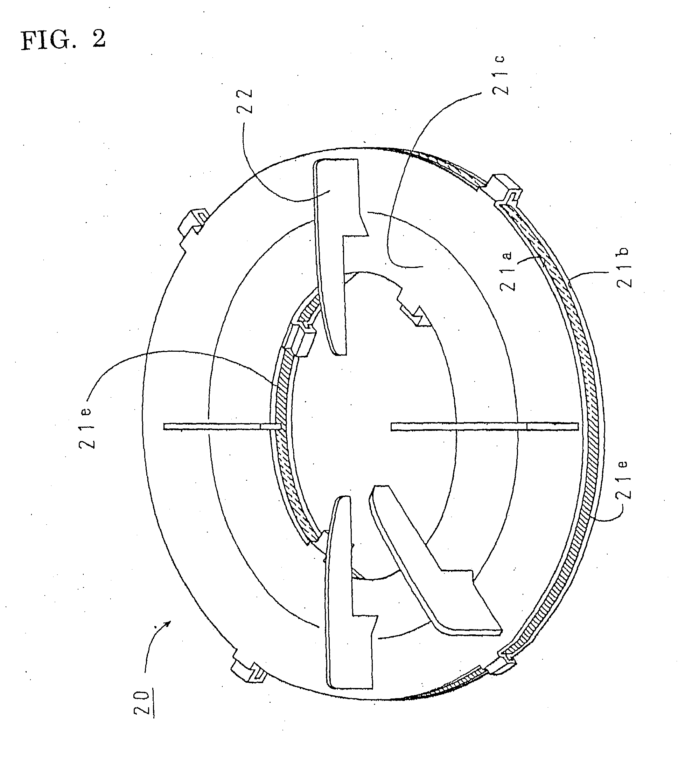

As shown in Figs. 1 and 2, the trivet 20 is integrally formed with multiple trivet claws 22 for mounting a cooking container P, a trivet ring 21 that covers the top of the overlapped portion of the opening of the top plate 12 and the drip plate 18 and serves as a base for disposing trivet claws 22 upright, and a protruded portion 23 to fix the trivet 20 on the top plate 12.

The trivet ring 21 is of a ring-plate shape, which guides the second air from below to the vicinity of a burner flame port and forms a passing route with the bottom surface of the cooking container P, and guides the combustion gas to the outside.
The trivet ring 21 has a double configuration, which is formed by a front plate 21a which faces the cooking container P, and a back plate 21b which faces the drip plate 18 and the top plate 12.
The front plate 21a and the back plate 21b respectively have a front plate horizontal plane portion 21g and a back plate horizontal plane portion 21h on the outer circumferential side, and on the inner circumferential side, an upper-side inclined jaw portion 21c and backside inclined jaw portion 21d (hereinafter called the upper-side jaw portion 21c and backside jaw portion 21d) tilting downwards towards the ring center are extended.
The head end of the jaw portions 21c and 21d are brought close to the outer circumferential surface of the burner 14 flame port, and the gradient angle of the jaw portions 21c and 21d are formed nearly parallel to the spouting angle of gas in the main flame port 16a of the burner 14.
In addition, the front plate 21a and the back plate 21b have ceramic 21e inserted as heat insulating material in the full circumference of the outer and inner circumferential end parts respectively, and are fixed by caulking at four places on the outer and inner circumferential end parts.

The trivet claws 22 are of an L-shaped and are formed by a fixing portion 22a and a cooking container loading portion 22b.

The fixing portion 22a is fixed by welding to the front plate 21a at the bottom end, while the cooking container loading portion 22b extends nearly horizontally from the top of the fixing portion 22a towards the center of the trivet ring 21.

In addition, the protruded portion 23 has a double-step shape and is fixed by welding to the back plate 21b at the top end, and a small protrusion 23a of the lowermost end only is fitted into a hole of the top plate 12. By this level difference of the protruded portion 23, a clearance to feed second air is formed between the back plate 21b and the top plate 12.

Because this table burner 1 has the head end of the jaw portions 21c and 21d in the trivet ring 21 extended close to the main flame port 16a, when the burner 14 is being fired, the second air for combustion is guided from a clearance between the back plate 21b and the top plate 12 to the vicinity of the main flame port 16a through the backside jaw portion 21d and the drip plate 18 as shown in Fig. 4. As a result, the second air is fed from the flame base to the head end of flame throughout, and combustion performance is improved. That is, even when the trivet claws 22 are made low and the loading surface of the cooking container P is brought closer to the burner 14 to improve the heating efficiency to the cooking container P, this is a configuration which can maintain the combustion performance successfully.

In addition, the combustion gas of the flame formed at the main flame port 16a passes the clearance between the front plate 21a of the trivet ring 21 and the cooking container P and is discharged to the outside. Now, because the trivet claws 22 are made low and the clearance between the front plate 21a and the cooking container P is formed to be narrow, high-temperature combustion gas passes as if it licks the cooking container P. Consequently, the cooking container P is brought highly efficiently in contact with the burner 14 combustion gas and heated.

Additionally, the supply of the second air shall not be limited to the configuration to feed the second air from the clearance formed between the back plate 21b of the trivet ring 21 and the top plate 12 and, for example, the invention can be applied to the configuration to feed the second air by forming a hole for second air supply in the drip plate 18, and in such event, the similar effects can be obtained.

Furthermore, in the trivet 20 of this kind which forms the combustion gas route by bringing the trivet ring 21 face-to-face to the cooking container P, a double configuration is adopted by using the front plate 21a which directly comes in contact with high-temperature combustion gas and a back plate 21b which does not make direct contact with the burner combustion gas, a clearance formed between the front plate 21a and the back plate 21b works as a heat insulation layer, and the heat of the burner 14 combustion gas transferred to the front plate 21a is not released from the rear surface.

In addition, because ceramic 21e is inserted between the front plate 21a and the back plate 21b throughout the full length of the inner circumferential end portion and the outer circumferential end portion of the trivet ring 21 and linked (caulked portion) with the front plate 21a and the back plate 21b at four places, respectively, on the inner circumferential end portion and the outer circumferential end portion, the combustion gas heat transferred to the front plate 21a can be suppressed from being transferred to the back plate 21b from the inner circumferential and outer circumferential end portions. Consequently, heat transfer of the burner combustion gas heat transferred to the front plate 21a to the back plate 21b can be definitely suppressed.

Additionally, the smaller the area of this linked portion, the better is the heat insulation effects obtained. For example, in the event that the front plate 21a and the back plate 21b are affixed to ceramic 21e, respectively and the linked area between the front plate 21a and the back plate 21b is brought to be zero, still greater effect can be obtained.

By this kind of configuration, temperature drop of the burner 14 combustion gas can be prevented and the combustion gas heat of the burner 14 can be effectively utilized for heating the cooking container P.

Thus, the heat efficiency can be improved and at the same time, degradation of cooking environment by radiation from the trivet 20 can be suppressed.

[Embodiment 2]

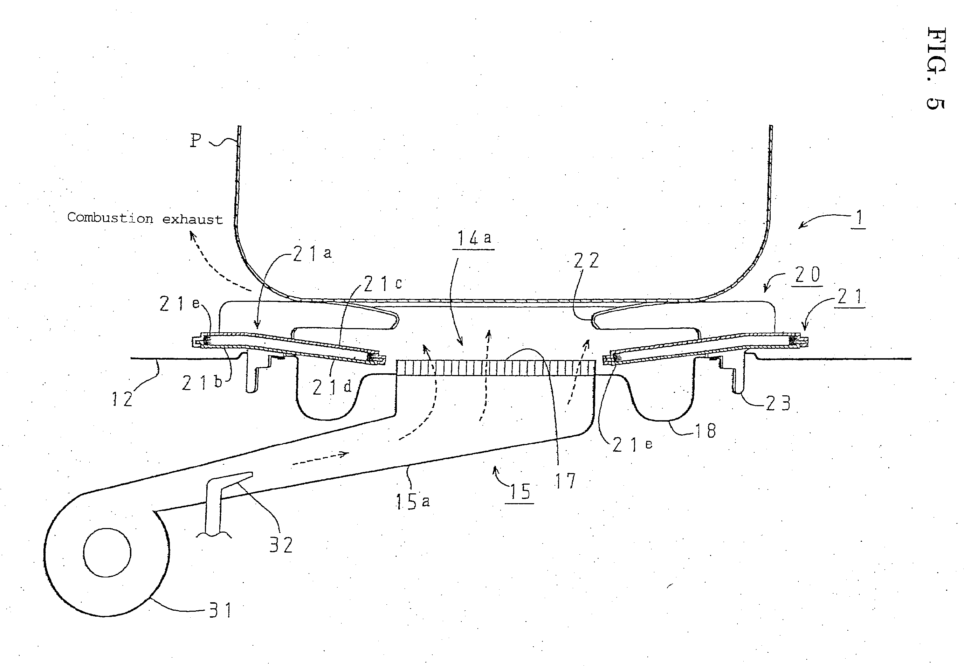

Referring now to Fig. 5, a table burner according to embodiment 2 will be described as follows.

Additionally, description will be made on the portion which differs from embodiment 1 and like reference characters are designated for the overlapping portions and their descriptions will be omitted.

A table burner 1b according to embodiment 2 has the double-configuration trivet 20 described in embodiment 1 arranged around above a burner of forced combustion type in which combustion air is forcibly fed and combustion is performed.

This burner 14a is a burner of totally first air type which sucks almost all the air necessary for combustion as the first air, and is equipped with a burner plate 17 as a combustion surface and a burner main body 15. The burner plate 17 is a porous ceramic flat plate and has a large number of through holes.

The burner main body 15 has an air-charging fan 31 to feed combustion air connected at the upstream end, and in the middle of the air supply route, a gas nozzle 32 which spouts out fuel gas is installed. In addition, at the downstream of the gas nozzle 32, a mixing pipe 15a to mix fuel gas and combustion air is formed.

Additionally, between the back plate 21b of the trivet 20 and the top plate 12, any clearance for second air supply formed in the table burner 1 of embodiment 1 is not formed.

When the burner 14a is being fired, fuel gas is supplied from the gas nozzle 32 to the burner main body 15, and first air is forcibly fed by the air-charging fan 31.

And after combusting the gas on the burner plate 17, the combustion gas is discharged to the outside through a clearance between the front plate 21a and the cooking container P.

By forcibly supplying combustion air in this way, even in the case of the same combustion rate, the combustion space is reduced and the heat efficiency can be improved.

That is, in the event that combustion air is fed to the natural draft force, draft force is not formed when the combustion space is reduced and supply and discharge of combustion air does not take place smoothly and the combustion state is degraded, however, in the present embodiment, combustion air is forcibly fed by the air-charging fan 13, a satisfactory combustion stage can be obtained even when the combustion space is reduced.

Because the distance between the burner 14a and the cooking container P can be reduced in this way, the heat efficiency can be still more improved.

Furthermore, since there is no need to provide a clearance for feeding the combustion air, the combustion heat does not escape from the clearance for the second air supply.

Furthermore, in the event that the burner combustion gas route is formed by the trivet ring 21, the trivet ring 21 acquires high-temperature and radiation rate from the privet ring 21 to the outside increases, however, since the trivet ring 21 is made into the double configuration by the front plate 21a and the back plate 21b, radiation of the combustion gas from the trivet to the outside can be suppressed. That is, in the table burner with high-temperature combustion gas heat, the trivet made into the double configuration achieves still greater heat insulating effects.

[Embodiment 3]

Next discussion will be made on a table burner of embodiment 3.

Please note that description will be made on the portion which differs from embodiment 2 and like reference characters are designated for the overlapping portions and their descriptions will be omitted.

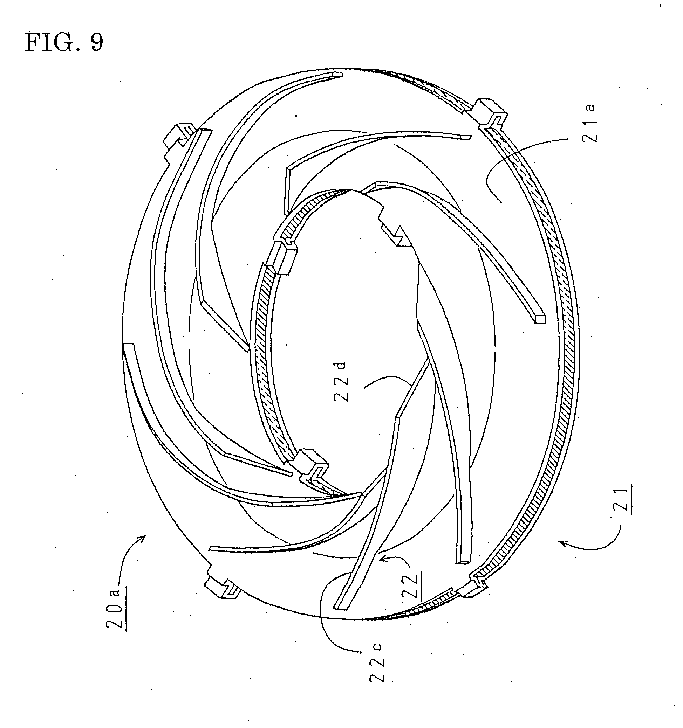

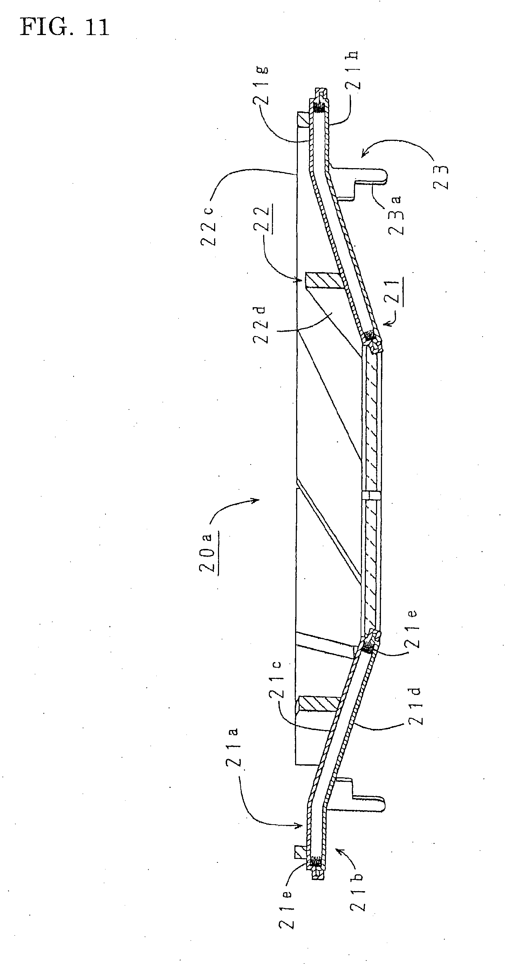

A table burner of embodiment 3 has the shape of trivet claws on which a cooking container is mounted made into a spiral as viewed from above as shown in Fig. 9 through 12.

This trivet 20a consists of the trivet ring 21, trivet claws 22, and protruded portion 23, and the trivet ring 21 and the protruded portion 23 have the same shapes as those of embodiments 1 and 2.

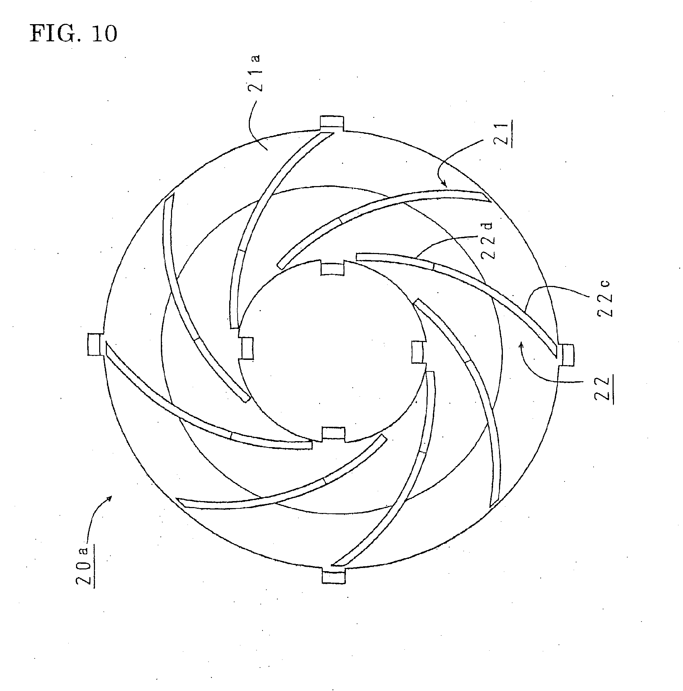

The trivet claws 22 are equipped with a cooking container loading portion 22c and an inclined portion 22d, and as shown in Fig. 10, are spiral-shaped from the inner circumferential side toward the outer circumferential side of the trivet ring 21 as viewed from above. The trivet claws 22 are fixed by welding to the front plate 21a in the whole surface of the lower end part.

The inclined portion 22d is formed on the inner circumferential side in the trivet claws 22 and the inclination is provided in such a manner that the upper end surface increases its height from the center direction towards the outer circumferential direction.

On the outer circumferential side of the trivet claws 22d, the cooking container loading portion 22c is located. On the upper end surface of the cooking container loading portion 22c is formed horizontally.

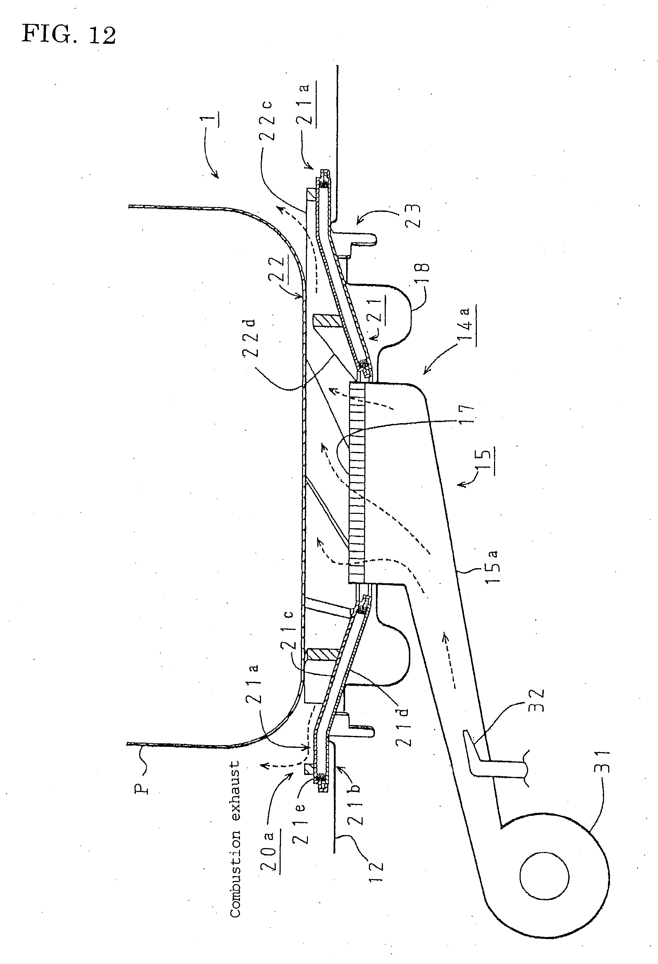

On the upper end surface of the cooking container loading portion 22c, the cooking container P is mounted as shown in Fig. 12, and it is configured to form multiple partitioned combustion gas routes surrounded by the coking container loading portion 22c, bottom surface of the cooking container P, and front plate 21a.

In this table burner 1a, since the trivet claws are made into a spiral, the combustion gas flow of the burner 14 is formed into a spiral along the trivet claws 22.

Consequently, before the combustion gas is discharged to the outside, the heat can be effectively transferred to the cooking container P.

In addition, in this case, since the heat transfer efficiency from the combustion gas to the trivet ring 21 can be improved, the temperature of the front plate 21a also rises, however, since the trivet ring 21 is made into the double configuration, the combustion gas heat is not radiated from the rear surface of the trivet ring 21. Consequently, still greater heat efficiency improvement effects can be achieved.

Furthermore, since the inclined portion 22d is provided on the inner circumferential side in the trivet claws 22 to prevent the trivet claws 22 from entering the area where burner flame is formed, the trivet claws 22 are not subject to scorching flame. Consequently, degraded combustibility resulting from contact of flame with low-temperature trivet claws 22 or lowered heat efficiency is not brought about. [Embodiment 4]

Next discussion will be made on a table burner of embodiment 4.

Please note that description will be made on the portion which differs from embodiment 1 and like reference characters are designated for the overlapping portions and their descriptions will be omitted.

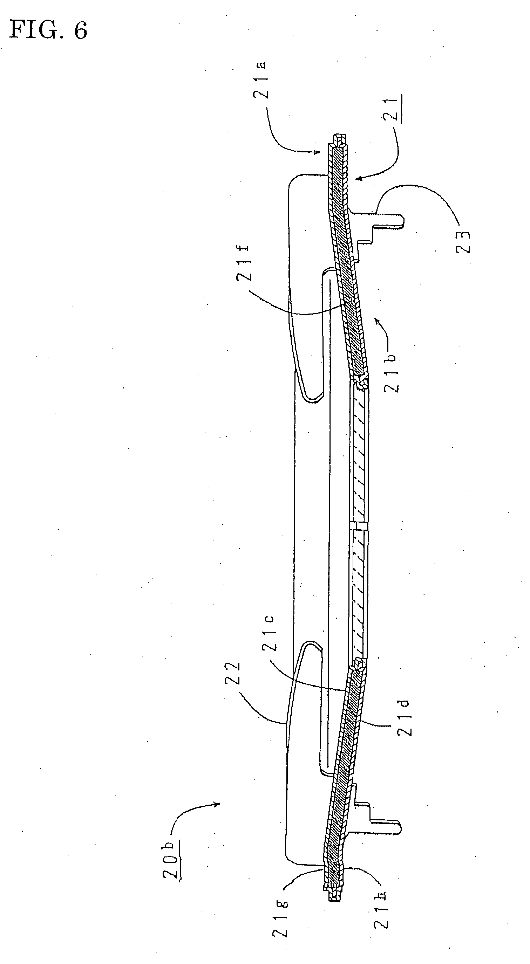

The table burner according to embodiment 4 has a configuration with ceramic wool 21f as heat insulating material inserted free of any clearance in a space between the front plate 21a and the back plate 21b as shown in Fig. 6.

By this kind of configuration, the burner combustion gas heat transferred to the front plate 21a is insulated by ceramic wool 21f.

Consequently, release of burner combustion gas heat to the outside can be definitely suppressed and the heat efficiency can be improved, and degradation of cooking environment can be suppressed.

In addition, since the ceramic wool 21f is packed between the front plate 21a and the back plate 21b to have a configuration free of any void, mechanical strength of the trivet ring 21 can be increased.

Furthermore, since the ceramic wool 21f is used as the heat insulating material, the ceramic wool 21f also works as the buffer material and absorbs impact and vibration applied to the trivet 20. Consequently, even when impact is applied to the trivet 20, such as when the trivet 20 is dropped carelessly, etc., the strength can be maintained and noises due to vibration can be suppressed.

[Embodiment 5]

Next discussion will be made on a table burner of embodiment 5.

Please note that description will be made on the portion which differs from embodiment 1 and like reference characters are designated for the overlapping portions and their descriptions will be omitted.

The table burner of embodiment 5 has the space between the front plate and the back plate of the trivet brought into a vacuum state.

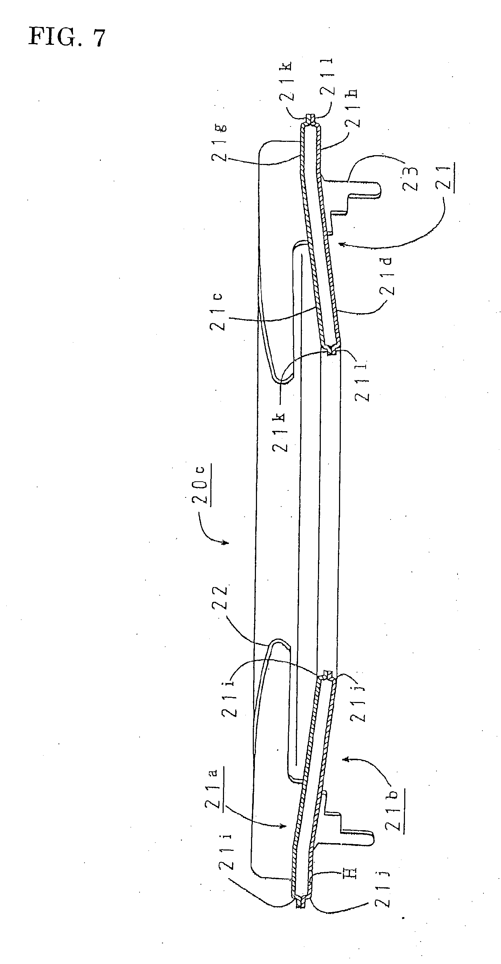

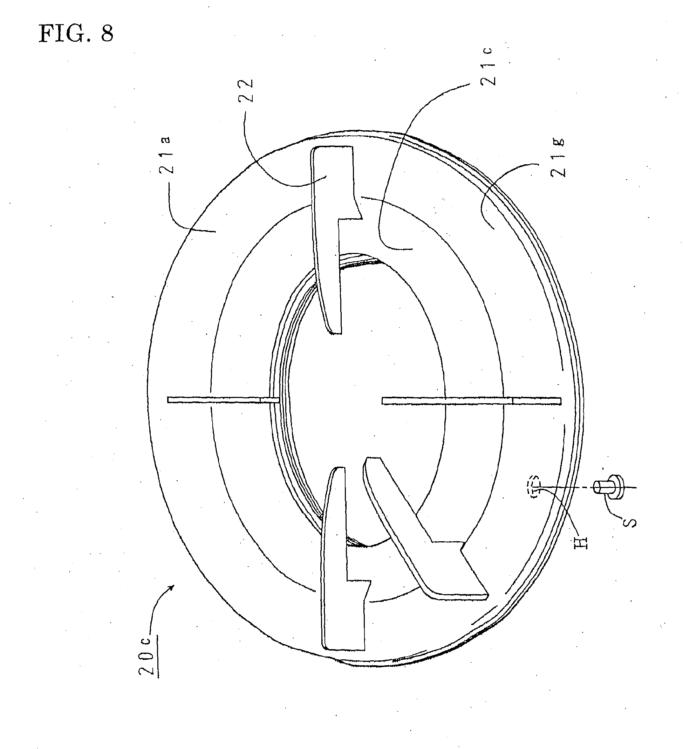

Referring now to Fig. 7 and Fig. 8, this trivet will be described.

The trivet 20c consists of the trivet ring 21, trivet claws 22, and protruded portion 23, and the trivet claws 22 and protruded portion 23 have the same shapes as those of embodiment 1.

The trivet ring 21 has a double configuration formed by the front plate 21a which faces the cooking container P and the back plate 21b which faces the drip plate 18 and the top plate 12.

The front plate 21a and the back plate 21b respectively have horizontal plane portions 21g and 21h on the outer circumferential side, and jaw portions 21c and 21d are extended on the inner circumferential side.

And in the full circumference of the inner and outer circumferential ends, a restricted portions 21i and 21j bent inward, respectively, and welding allowances 21k and 211 protruded in the inner circumferential direction and in the outer circumferential direction are formed on the front plate 21a and the back plate 21b, respectively.

In addition, on the underside of the back plate 21b, a suction port H is formed to bring the clearance between the front plate 21a and the back plate 21b into a vacuum state.

This front plate 21a and the back plate 21b are jointed by welding at the welding allowances 21k and 211.

After air is sucked and discharged from the suction port H, the suction port H is blocked by a lid body S, and the lid body S is jointed by brazing to the back plate 21b. This jointing by brazing is adopted for jointing with the degree of vacuum between the front plate 21a and the back plate 21b maintained to a predetermined range.

In this way, as the clearance between the front plate 21a and the back plate 21b brought to a vacuum state, the vacuum portion works as a heat insulation layer.

Under the vacuum state, no molecules exist between the front plate 21a and the back plate 21b, no heat transfer occurs between molecules.

Consequently, release of burner combustion gas heat to the outside can be still more definitely suppressed and the heat efficiency can be improved, and degradation of cooking environment can be suppressed.

Next discussion will be made on embodiment 6 which corresponds to inventions of claims 8 through 10.

[Embodiment 6]

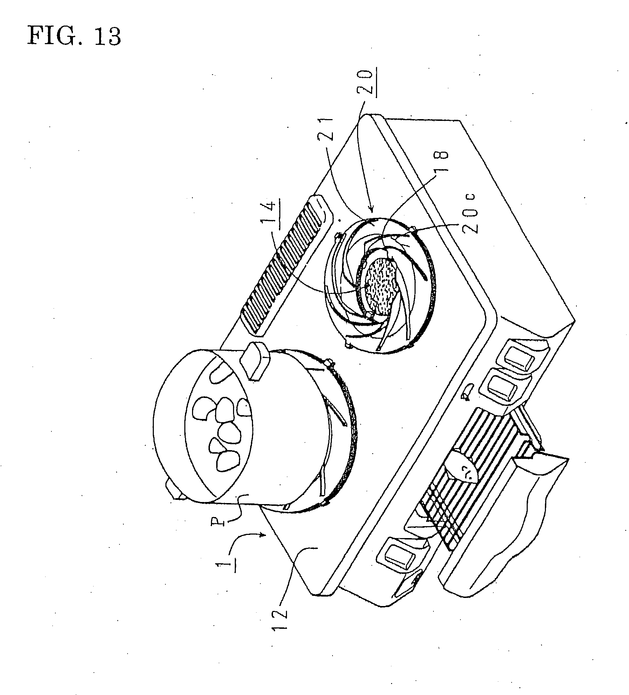

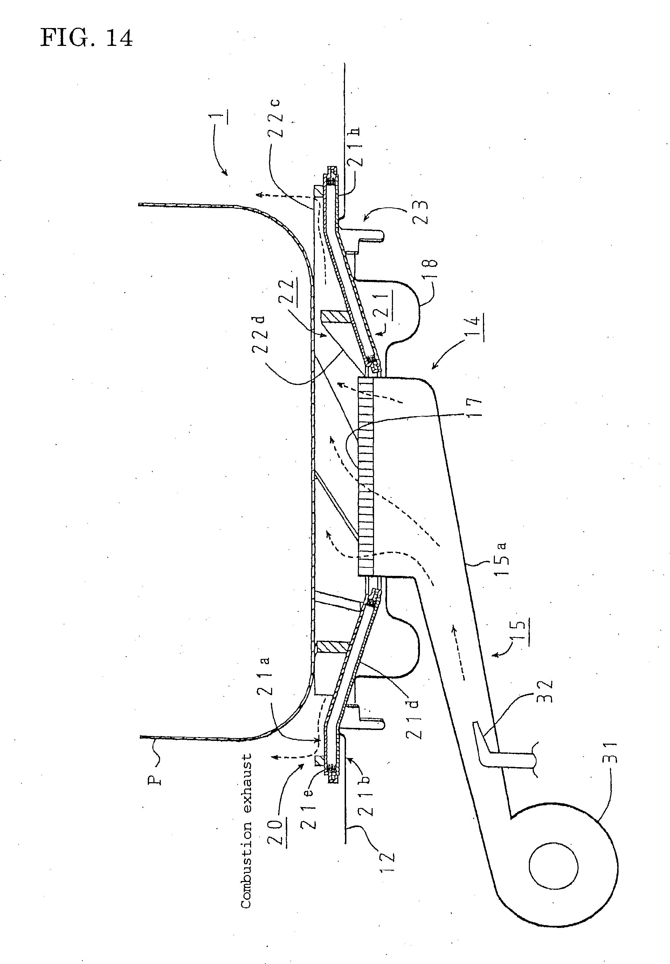

A table burner as a cooking stove has an opening on a top plate 12 as shown in Fig. 13 and Fig. 14, and at the center position of the opening, a burner 14 is arranged. Around above the burner 14, a trivet 20 for mounting the cooking container P is provided.

This burner 14 is a burner of totally first air type which sucks almost all the air necessary for combustion as the first air, and is equipped with a burner plate 17 as a combustion surface and a burner main body 15.

The burner plate 17 is a porous ceramic flat plate and has a large number of through holes, and the combustion surfaces are arranged in the horizontal direction so that the combustion takes place with flame directed upwards.

The burner main body 15 has an air-charging fan 31 to feed combustion air connected at the upstream end, and in the middle of the air supply route, a gas nozzle 32 which spouts out fuel gas is installed. In addition, at the downstream of the gas nozzle 32, a mixing pipe 15a to mix fuel gas and combustion air is formed.

This trivet 20 has the same configuration as that of Fig. 9 through 11 which was discussed in embodiment 3, the trivet claws 22 are formed in a spiral from the inner circumferential side toward the outer circumferential side of the trivet ring 21 as viewed from above, and are fixed by welding to the front plate 21a in the whole surface of the lower end part, and consists of the inclined portion 22d on the inner circumferential side and the cooking container loading portion 22c on the outer circumferential side.

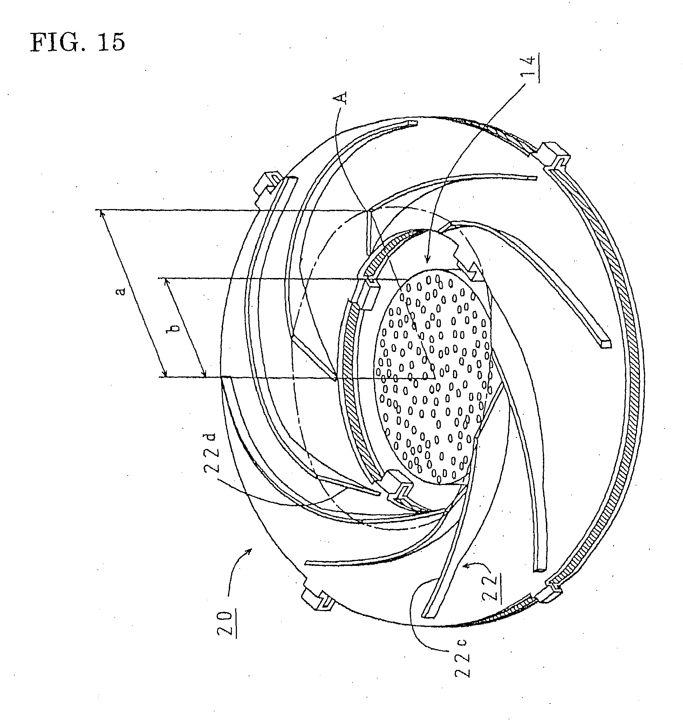

The inclined portion 22d has the inclination provided in such a manner that the upper end surface increases its height from the center direction towards the outer circumferential direction. As shown in Fig. 15, the distance a between the upper most end portion A of this inclined portion 22d and the burner 14 center is 1.5 times the burner 14 radius b.

The cooking container loading portion 22c has the upper end surface formed horizontally, and the cooking container P is mounted as shown in Fig. 14. In this way, on the trivet ring 21, multiple partitioned combustion gas routes surrounded by the cooking container loading portion 22c, bottom surface of the cooking container P, and front plate 21a are formed.

When the burner 14 is being fired, fuel gas is supplied from the gas nozzle 32 to the burner main body 15, and first air is forcibly fed by the air-charging fan 13.

The combustion flame formed upwards on the burner plate 17 is formed radially in the outward direction along the bottom surface of the cooking container P when it collides against the bottom surface of the cooking container P.

In this way, since the combustion air is forcibly supplied, as compared to the spontaneous combustion type cooking stove to which combustion air is fed by natural draft force, satisfactory combustion condition can be obtained even if the combustion space is reduced. Then, by forcibly supplying combustion air, even in the event that the trivet claws 22 are formed in a spiral and resistance is provided in the combustion gas route, satisfactory combustion can be maintained.

Consequently, the distance between the burner 14 and the bottom surface of the cooking container P is shortened and the heat transfer efficiency between the combustion flame and the bottom surface of the cooking container P can be improved, and the combustion gas flow is controlled and the heat transfer efficiency between the combustion gas and the cooking container P can be improved.

Furthermore, by forming the flame upward, the contact area of the bottom surface of the cooking container P and flame can be increased and the heat efficiency can be improved.

In addition, because the trivet claws are formed in a spiral, the combustion gas passes the combustion gas route partitioned and formed in a spiral by clearances between the bottom surface of the cooking container P, trivet ring 21, and trivet claws 22 while constantly colliding against trivet claws 22. And when the combustion gas collides against trivet claws 22, the combustion gas changes the flow from the horizontal direction to the upward direction and collides against the bottom surface of the cooking container P.

Consequently, the heat transfer efficiency between the bottom surface of the cooking container P and combustion gas can be improved.

Furthermore, when the combustion gas reaches the outer circumferential part away from the cooking container P, the combustion gas collides against the spiral-shaped trivet claws 22 and is sent in the upward direction as it is, and flows along the side of the cooking container P.

As a result, in addition to the bottom surface of the cooking container P, on the lateral side of the cooking container, satisfactory heat exchange with the combustion gas takes place and the heat efficiency is still more improved.

In addition, as shown in Fig. 15, an inclined portion 22d is formed on the inner side of the cooking container loading portion in the trivet claws 22 and the distance a from the uppermost end part A of the inclined portion 22d and the burner 14 center is made to be 1.5 times the burner 14 radius b, so that the trivet claws 22 is not included in the region in which the burner flame is formed.

It is confirmed by experiments of the inventors that when combustion air is forcibly supplied and the distance between the cooking container P and the burner plate 17 is brought close to the limit, the area in which the combustion flame is formed is about 1.5 times the burner 14 radius. Consequently, when the distance a between the upper most end portion A of the inclined portion 22d and the burner 14 center is less than 1.5 times the burner 14 radius b, trivet claws 22 are scorched with combustion flame.

In the present embodiment, since the distance a between the upper most end portion A of the inclined portion 22d and the burner 14 center is set to less than 1.5 times the burner 14 radius b, trivet claws 22 are not scorched with burner flame. Consequently, there is no case in which flame is cooled by trivet claws 22, combustibility is degraded, and carbon monoxide gas is generated. In addition, since flame is not deprived of heat energy by trivet claws 22, the heat transfer efficiency is not decreased. Furthermore, there is no case in which trivet claws 22 are heated by combustion flame and durability of the trivet 20 is lost.

Now, since the burner 14 flame is formed from the center portion of the bottom surface of the cooking container P radially in the outside direction after it is formed from the flame port in the upward direction towards the bottom surface of the cooking container P, it is the top portion only where the cooking container P is mounted that comes in contact with combustion flame in the trivet claws 22.

In addition, in the event that the distance between the inner side end of the trivet claws 22 and the burner 14 is excessively separated, the area in which the combustion gas flow is formed in a spiral is reduced. In particular, when a cooking container P with a small diameter is mounted, the combustion gas is released to the outside before the stream is formed completely in a spiral, and therefore, the heat transfer efficiency improving effects achieved by forming the combustion gas flow in a spiral is not successfully obtained.

Therefore, in the present embodiment, there is adopted a configuration to maintain rectifying effects, in which the inclined portion 22d is formed on the inner side end of the trivet claws 22 so that on the upper side of the trivet claws 22, the trivet claws 22 is prevented from entering in the area where burner 14 flame is formed, and on the lower side of the trivet claws 22, the trivet claws are brought closer to the burner 14 and the combustion gas flow in a spiral is formed in early stages.

Thus, the heat efficiency is still more improved.

Furthermore, in the trivet ring 21 which forms the combustion gas route by facing the cooking container P, a double configuration is adopted by using the front plate 21a which directly comes in contact with high-temperature combustion gas and a back plate 21b which does not make direct contact with the burner combustion gas, a clearance formed between the front plate 21a and the back plate 21b works as a heat insulation layer, and the heat of the burner 14 combustion gas transferred to the front plate 21a is not released from the rear surface.

In addition, because ceramic 21e is inserted between the front plate 21a and the back plate 21b throughout the full length of the inner and outer circumferential end portions of the trivet ring 21 and linked (caulked portion) with the front plate 21a and the back plate 21b at four places, on the inner and outer circumferential end portions respectively, the combustion gas heat transferred to the front plate 21a can be suppressed from being transferred to the back plate 21b from the inner and outer circumferential end portions. Consequently, heat transfer of the burner combustion gas heat transferred to the front plate 21a to the back plate 21b can be definitely suppressed.

With this configuration, temperature drop of the burner combustion gas can be prevented and the combustion gas heat of the burner can be effectively utilized for heating the cooking container.

Thus, the heat efficiency can be improved, and degradation of cooking environment by radiation from the trivet can be suppressed.

Additionally, even with a table burner with a internal flame port burner (for example, Japanese Patent Application Laid-Open Publication No. Hei 9-4853) mounted, in which flame is formed toward the inside of the annular burner, the above-mentioned effects can be obtained in the same manner.

Now, this internal flame port burner will be briefly described hereinafter.

The internal flame port burner is an annular burner and has multiple flame ports on the inner circumferential wall. And the flame formed by this flame port comes in contact with the center part of the cooking container on the trivet after it goes in the center direction and then, is formed outward radially.

Consequently, irrespective of the size of the burner capacity, the internal flame port burner can uniformly heat the cooking container, and does not overflow flame to the outside.

In this kind of internal flame port burner, flame comes in contact with the center part of the cooking container on the trivet after it goes in the center direction and is formed outwards, so that the distance of the combustion flame end portion from the burner center becomes smaller as compared to the upward flame port burner discussed above.

That is, the area in which the combustion flame is formed is less than 1.5 times the burner radius, and the configuration of the trivet to make the distance between the inner circumferential side end part of the loading portion of trivet claws on which the cooking container is mounted and the burner center be more than 1.5 times the burner radius can also be applied to a cooking stove equipped with the internal flame port burner. Furthermore, even when the flame port is not directed completely upward or inward but when it is formed upward at a predetermined angle, this configuration can be applied.

Next discussion will be made on embodiments 7 and 8 which correspond to claims 11 through 13.

[Embodiment 7]

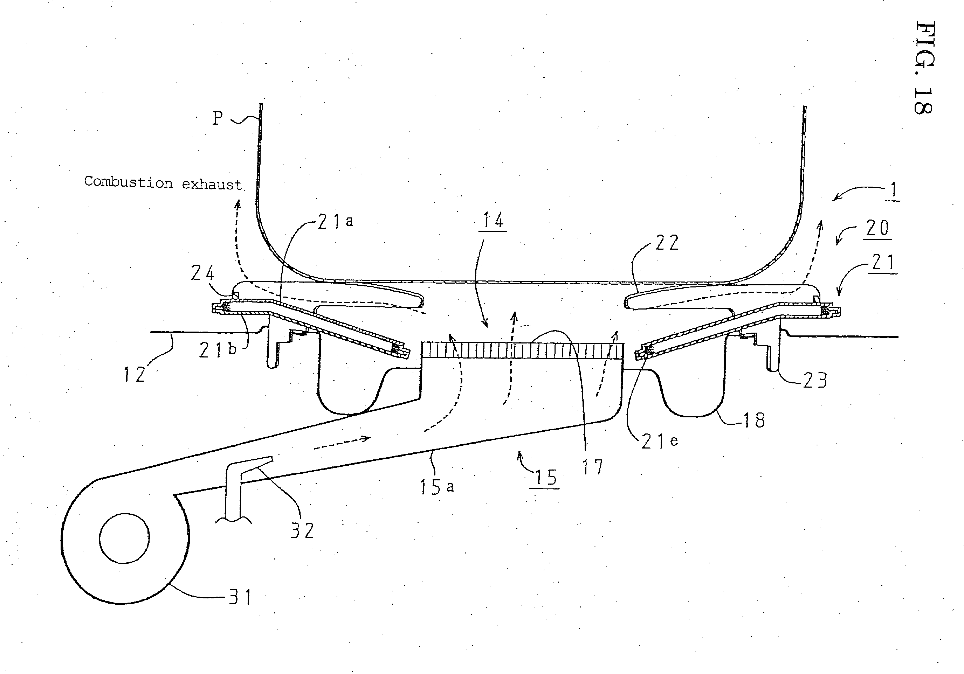

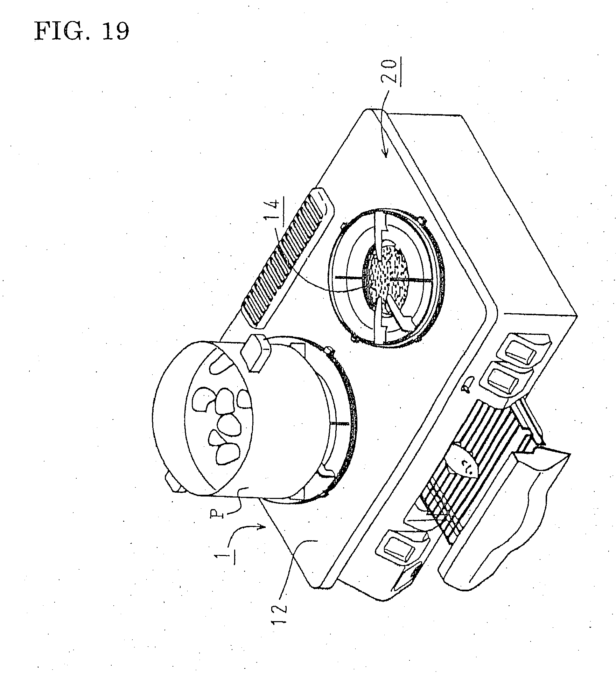

A table burner as a cooking stove has an opening on a top plate 12 as shown in Fig. 18 and Fig. 19, and at the center position of the opening, a burner 14 is arranged. Around above the burner 14, a trivet 20 for mounting the cooking container P is provided.

This burner 14 is a burner of totally first air type which sucks almost all the air necessary for combustion as the first air, and is equipped with a burner plate 17 as a combustion surface and a burner main body 15.

The burner plate 17 is a porous ceramic flat plate and has a large number of through holes, and the combustion surfaces are arranged in the horizontal direction so that the combustion takes place with flame directed upwards.

The burner main body 15 has an air-charging fan 31 to feed' combustion air connected at the upstream end, and in the middle of the air supply route, a gas nozzle 32 which spouts out fuel gas is installed. In addition, at the downstream of the gas nozzle 32, a mixing pipe 15a to mix fuel gas and combustion air is formed.

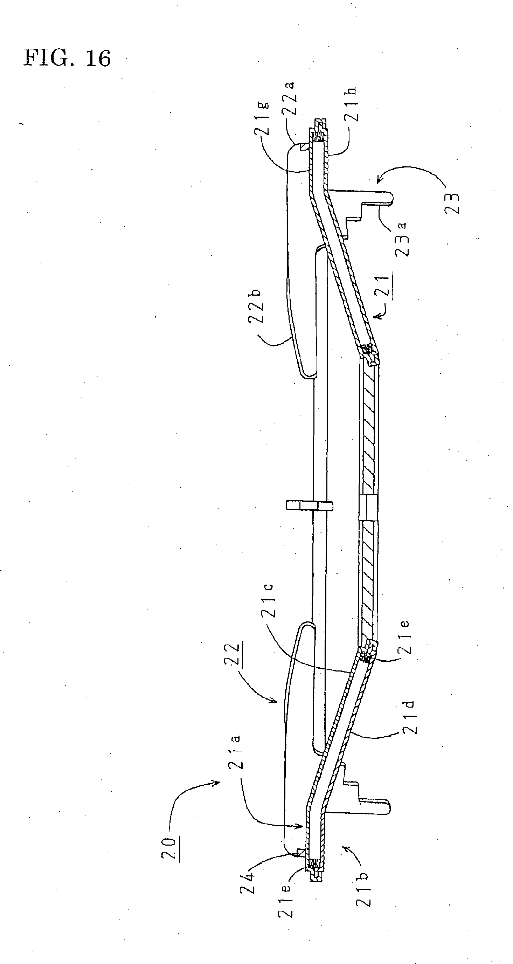

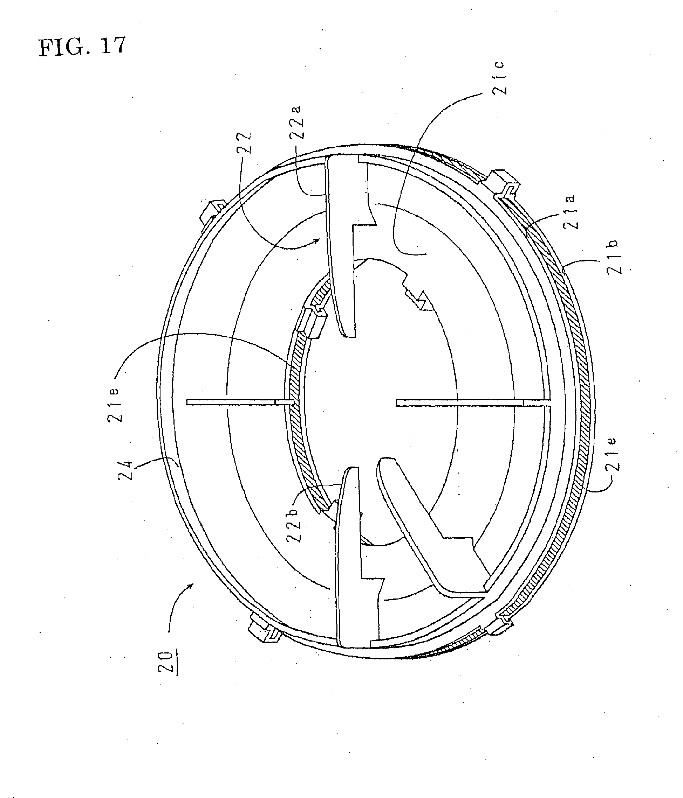

Referring now to Fig. 16 through Fig. 18, the shape of the trivet 20 will be described in detail as follows.

The trivet 20 is integrally configured by multiple trivet claws 22 which mount and support the cooking container P, the trivet ring 21 (corresponding to the ring plate of the present invention) which is installed around the burner 14 and covers the top of the overlapping portion of the opening of the top plate 12 and the drip plate 18 and serves as the base to dispose trivet claws 22 upright, an annular current plate 24 installed protruding upwards on the outer circumferential part of the trivet ring 21, and the protruded portion 23 to fix the trivet 20 on the top plate 12.

The trivet ring 21 is in a ring-plate shaped and forms a ring-shaped passing route of combustion gas in the clearance with the bottom surface of the cooking container P to be brought in contact with the top surface of the trivet claws 22 and guides the combustion gas to the outside.

The trivet ring 21 has a double configuration formed by the front plate 21a that faces the cooking container P and the back plate 21b that faces the drip plate 18 and the top plate 12.

The front plate 21a and the back plate 21b respectively have horizontal plane portions 21g and 21h on the outer circumferential side, and on the inner circumferential side, inclined jaw portions 21c and 21d tilting downwards towards the ring center are extended. The head ends of the inclined jaw portions 21c and 21d are disposed close to the outer circumferential side surface of the burner 14, and between the trivet ring 21 and the burner 14, a clearance is scarcely formed.

Consequently, by the top surface of the trivet ring 21, the burner 14, and the bottom surface of the cooking container P, the top and the bottom surfaces are surrounded scarcely free from any clearance and a combustion gas route (including the burner combustion region) to which ambient air scarcely flows in is formed.

In addition, in the ring-shaped combustion gas route whose top and bottom surfaces are surrounded by the top surface of the trivet ring 21 around the burner 14 and the bottom surface of the cooking container P, the angle of the inclined jaw portions 21c and 21d are set in such a manner that the route cross-sectional area A decreases as the distance from the burner 14 increases.

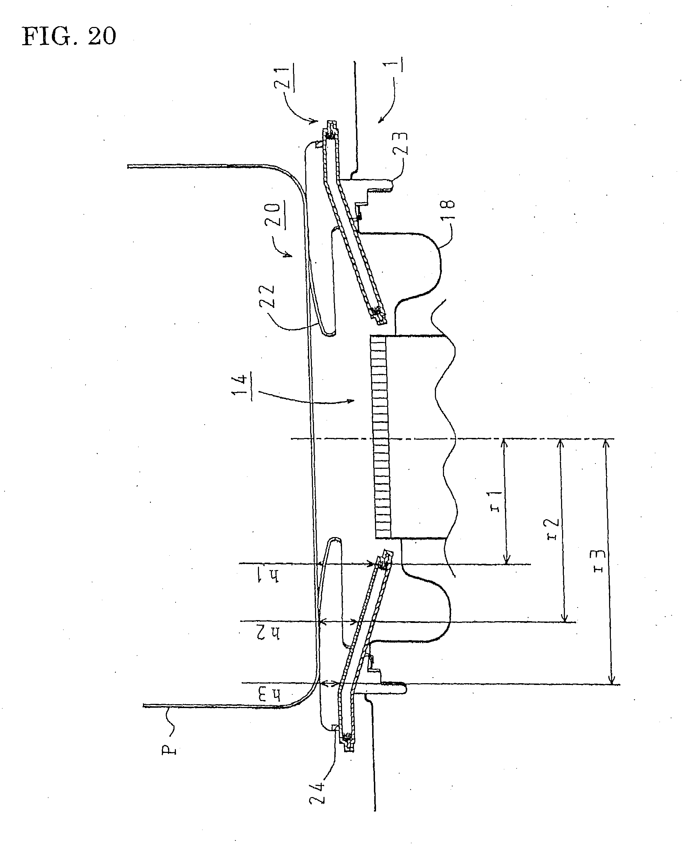

That is, let r denote the distance from the burner center (trivet ring center) and h denote the distance between the trivet ring and the bottom surface of the cooking container, the relationship among cross-sectional areas A1, A2, and A3 in (r1, h1), (r2, h2), and (r3, h3) shown in Fig. 20 can be expressed by:

$$A1 = 2\pi r1h1 > A2 = 2\pi r2h2 > A3 = 2\pi 3h3$$

In addition, the front plate 21a and the back plate 21b of the trivet ring 21 are respectively caulked and fixed at four places at outer and inner circumferential end portions with ceramic 21e as heat insulating material inserted throughout the full circumference of the outer and inner circumferential end portions.

The trivet claws 22 is of an L-shaped and is formed by a fixing portion 22a and a cooking container loading portion 22b.

The fixing portion 22a is fixed by welding to the front plate 21a at the bottom end, while the cooking container loading portion 22b extends nearly horizontally from the top of the fixing portion 22a towards the center of the trivet ring 21.

The protruded portion 23 is fixed by welding to the back plate 21b at the top end and is fitted into a hole of the top plate 12.

At the front plate 21a of the trivet ring 21, an annular current plate 24 protruding upwards is installed.

The annular current plate 24 is formed coaxially with the trivet ring 21 and the diameter is the same as that of the outer circumferential portion of the trivet claws 22. This current plate 24 may not be strictly disposed upright on the outer circumferential end of the trivet ring 21 but may be disposed upright in the vicinity of the outer circumferential end of the top surface of the trivet ring 21.

In addition, the top end height of the current plate 24 is shorter than the top end height of the cooking container loading portion 22b of the trivet claws 22.

When the burner 14 is being fired, fuel gas is supplied from the gas nozzle 32 to the burner main body 15, and first air is forcibly fed by the air-charging fan 13.

Then, after combusting the gas on the burner plate 17, the combustion gas flows towards the outside in the radial direction in the clearance between the front plate 21a and the cooking container P, and when it collides against the current plate 24, the combustion gas changes the flow in the upward direction. The combustion gas which flows in the upward direction is discharged to the outside after it flows along the side of the cooking container P.

In this way, by forcibly supplying combustion air, as compared to the case to supply combustion air by natural draft force, satisfactory combustion state can be obtained even when the combustion space is reduced.

Consequently, the distance between the burner 14 and the bottom surface of the cooking container P is made short, the contact area between the combustion flame and the bottom surface of the cooking container P is increased, and the heat transfer efficiency can be improved.

Since a cooking stove is configured to allow the combustion gas of the burner 14 to pass the combustion gas route surrounded nearly free of clearance by the burner 14, trivet ring 21, and the bottom surface of the cooking container P, and discharge the combustion gas from the outer circumferential portion, ambient air scarcely enters the combustion gas route, and therefore, cooling of combustion heat by ambient air can be suppressed. In addition, since the combustion gas route is made in a thin disk shape, the combustion heat is not wastefully diffused in the combustion gas route, and the high-temperature combustion gas is discharged outside after passing as if the combustion gas licks the bottom surface of the cooking container P.

Thus, the cooking container P makes efficient contact with the combustion gas and is heated.

This effect is markedly expressed when the clearance to feed the second air is eliminated and a cooking stove of forced combustion type which can hermetically seal thinly the disk-shape combustion gas route is used.

Furthermore, since the inclined jaw portion 21c is installed to the trivet ring 21 and a configuration to reduce the route area of the combustion gas route as the distance from the burner 14 increases is adopted, in the position with a near distance from the burner 14, that is, in the position close to the combustion space, combustibility of the burner 14 is not impaired, and in the position far from the burner 14, the route area of the combustion gas route is reduced and the flow rate of the combustion gas can be accelerated.

Consequently, the heat transfer efficiency between the cooking container P and combustion gas can be improved while the combustibility of burner 14 is held satisfactorily.

Furthermore, the volume flow rate of combustion gas decreases with a decrease of the temperature of combustion gas as the distance from the burner 14 increases. Consequently, in the event that the area of the combustion gas route is not varied even when the distance from the burner 14 increases, combustion gas decelerates and diffuses, and the heat efficiency decreases. On the other hand, in the present embodiment, since the route area of the combustion gas route is made narrower as the distance from the burner 14 increases, a drop of flow rate of the combustion gas associated with the reduced volume flow rate does not occur.

Consequently, the high-temperature combustion gas is discharged to the outside after the gas passes the combustion gas route as if it licks the bottom surface of the cooking container P without diffusing in the combustion gas route.

Thus, the cooking container P efficiently comes in contact with combustion gas and is heated.

Furthermore, since the annular current plate 24 is formed upwards to the front plate 21a of the trivet ring 21, the combustion gas flows a clearance between the trivet ring 21 and the cooking container P radially towards the outside; then, the combustion gas collides against the current plate 24 and changes the flow in the upward direction.

That is, when the cooking container P with a radius smaller than the radius of the current plate 24 is mounted, combustion gas flows between the bottom surface of the cooking container P and the trivet ring 21 along the bottom surface of the cooking container P; then, when the combustion gas collides against the current plate 24 of the outer circumferential end portion of the trivet ring 21, it flows along the lateral side of the cooking container.

As a result, heat is successfully exchanged with the combustion gas not only on the bottom surface of the cooking container P but also on the lateral side of the cooking container P, and the heat efficiency is improved.

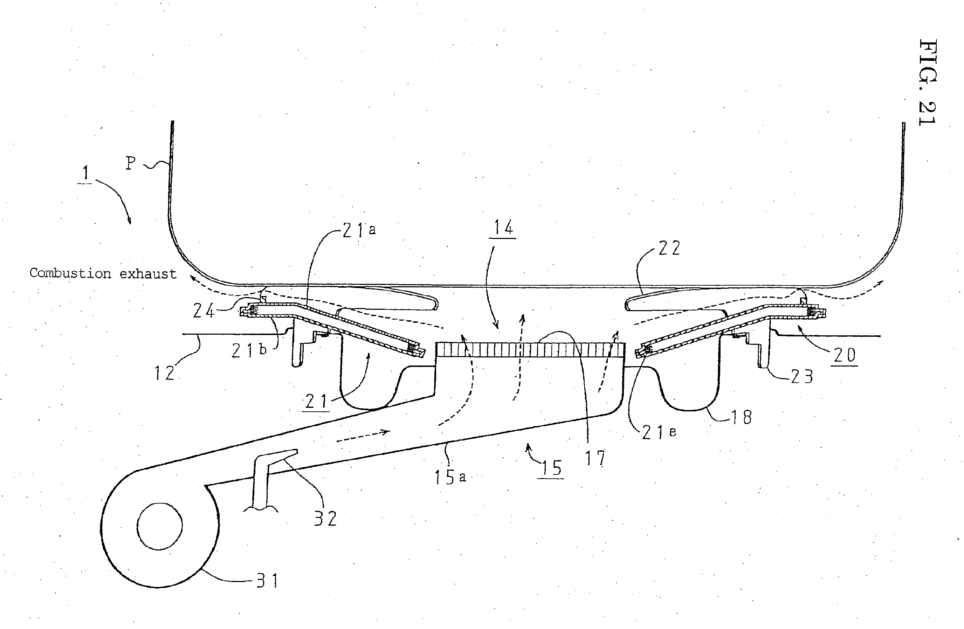

In addition, when a cooking container P larger than the current plate diameter is set, as shown in Fig. 21, the combustion gas which collides against the current plate 24 and changes the flow in the upward direction collides against the bottom of the cooking container P. Consequently, the heat transfer efficiency between the bottom surface of the cooking container P and the combustion gas can be improved.

Furthermore, in the trivet ring 21 which forms the combustion gas route by facing the cooking container P, a double configuration is adopted by using the front plate 21a which directly comes in contact with high-temperature combustion gas and a back plate 21b which does not make direct contact with the burner combustion gas, a clearance formed between the front plate 21a and the back plate 21b works as a heat insulation layer, and the heat of the burner 14 combustion gas transferred to the front plate 21a is not released from the rear surface.

In addition, because ceramic 21e is inserted between the front plate 21a and the back plate 21b throughout the full length of the inner and outer circumferential end portions of the trivet ring 21 and linked (caulked portion) with the front plate 21a and the back plate 21b at four places on the inner and outer circumferential end portions respectively, the combustion gas heat transferred to the front plate 21a can be suppressed from being transferred to the back plate 21b from the inner and outer circumferential end portions. Consequently, heat transfer of the burner combustion gas heat transferred to the front plate 21a to the back plate 21b can be definitely suppressed.

With this configuration, temperature drop of the burner combustion gas can be prevented, and the burner combustion gas heat can be effectively used for heating the cooking container P.

Thus, the heat efficiency can be improved, and degradation of cooking environment by radiation from the trivet 20 can be suppressed.

[Embodiment 8]

Next discussion will be made on the table burner of embodiment 8.

Please note that description will be made on the portion which differs from embodiment 7 and like reference characters are designated for the overlapping portions and their descriptions will be omitted.

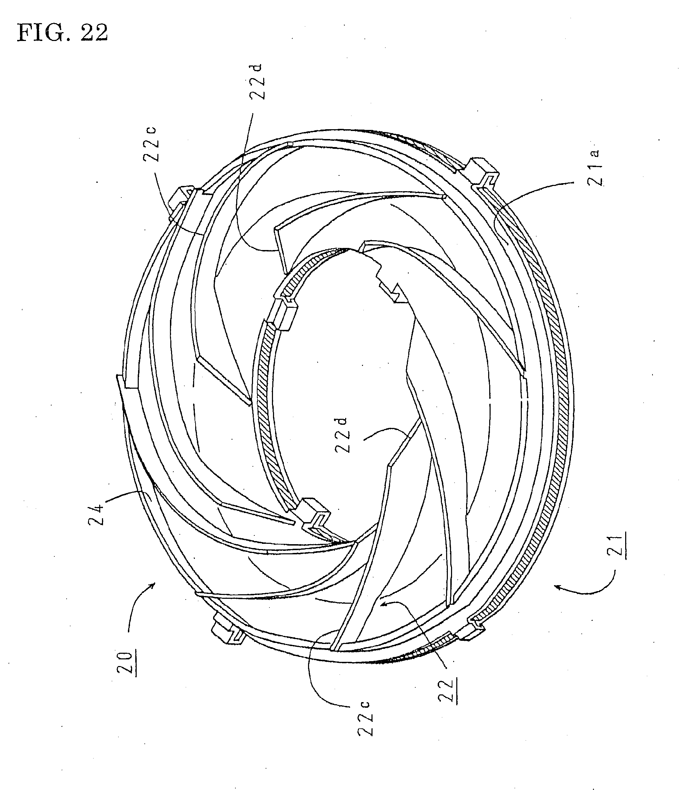

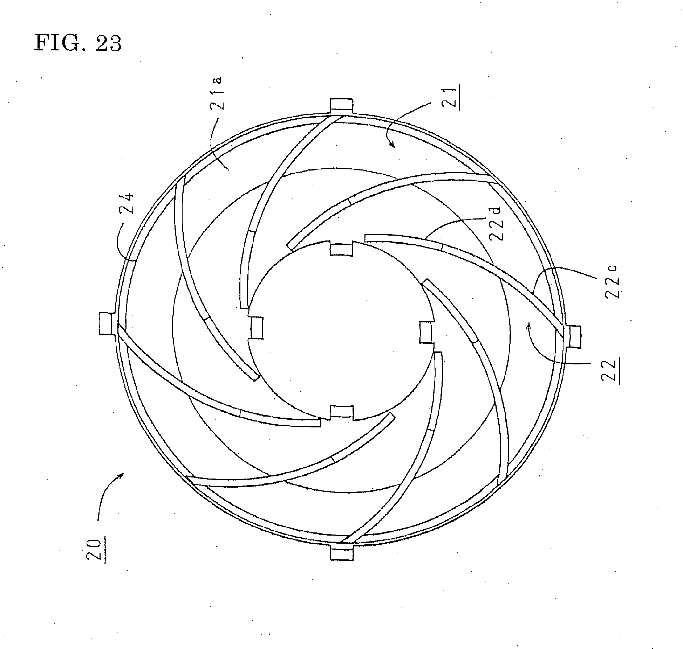

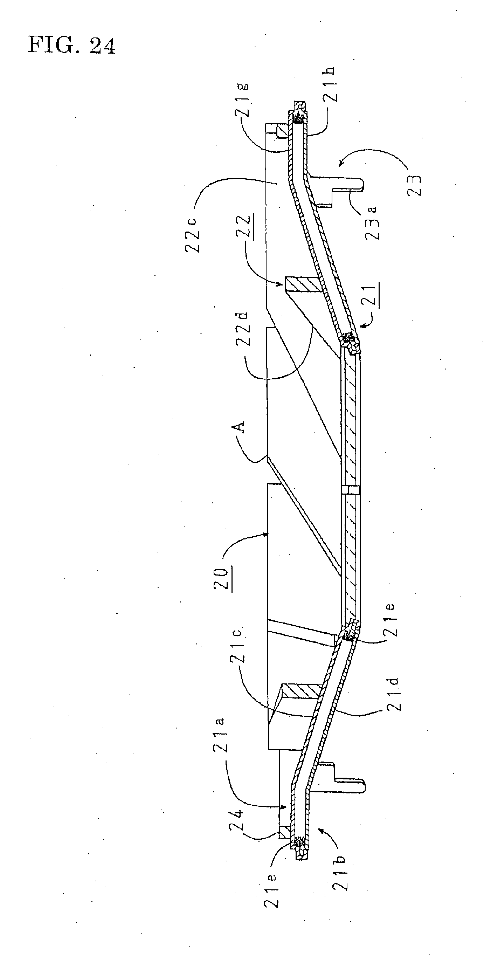

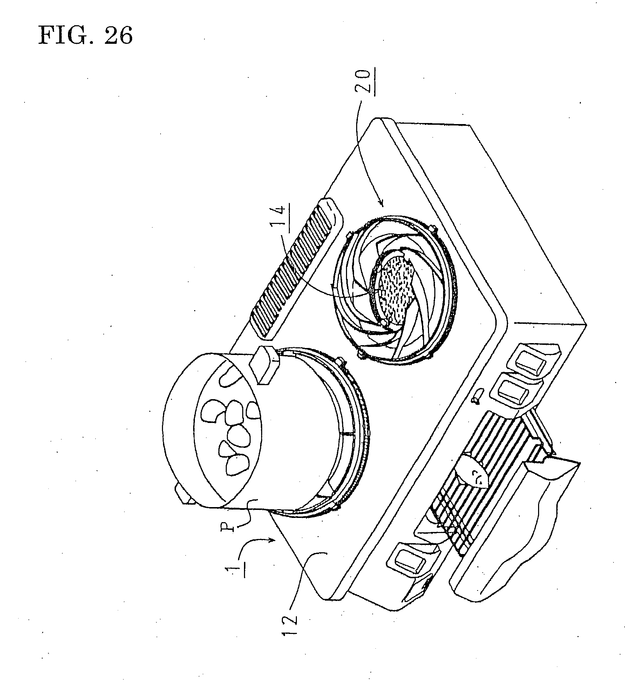

A table burner 1 of embodiment 8 has the shape of trivet claws on which a cooking container is mounted made into a spiral as viewed from above as shown in Fig. 22 through 26.

This trivet 20 consists of the trivet ring 21, trivet claws 22, protruded portion 23, and current plate 24, and the trivet ring 21, the protruded portion 23 and the current plate 24 have the same shapes as those of embodiments 1. The top end height of the current plate 24 is shorter than the height of the outer circumferential end portion of the trivet claws 22 later discussed.

The trivet claws 22 are formed by disposing an arcuate plate-like longitudinal walls extending to the outside with a predetermined angle tilted in the burner circumferential direction with respect to the straight line directed radially from the center of the burner 14 (center of the trivet ring 21) upright from the top surface of the trivet ring 21 from the inner head end to the outer head end.

Consequently, by arranging the trivet claws 22 on the top surface of the trivet ring 21 at predetermined intervals (at intervals of a predetermined angle around the ring), the trivet claws 22 are formed in a spiral on the top surface of the trivet ring 21 as viewed above.

The trivet claws 22 include an inclined portion 22d on the inner circumferential side and cooking container loading portion 22c on the outer circumferential side.

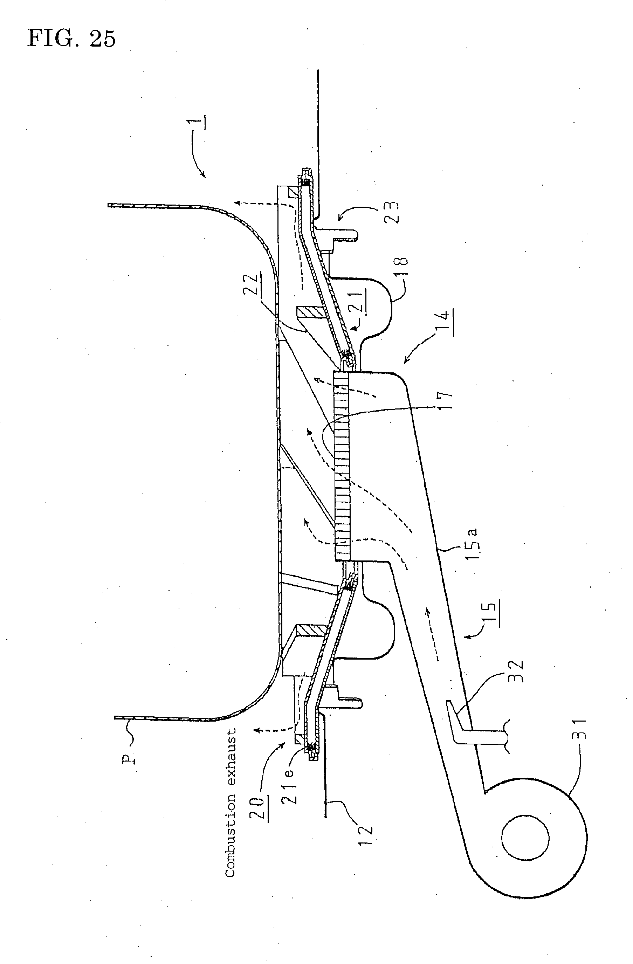

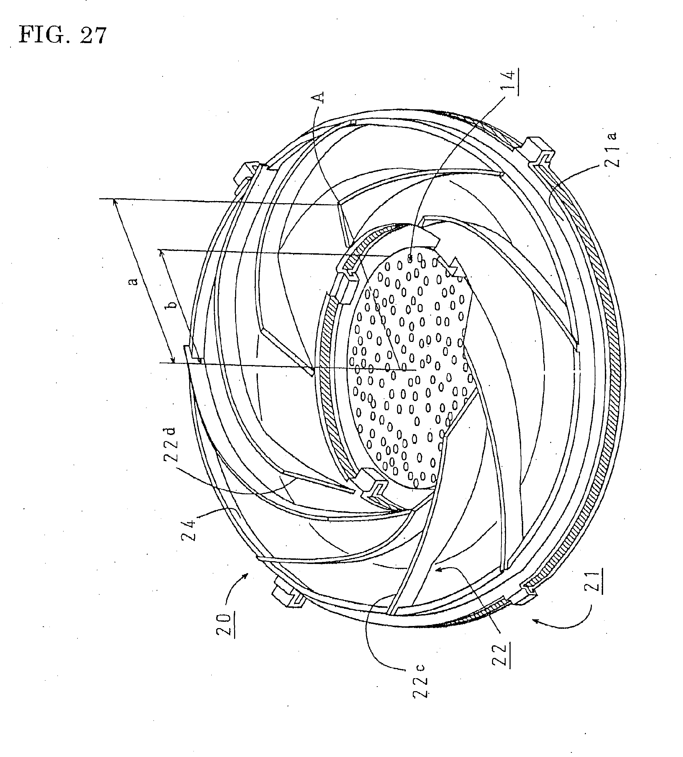

The inclined portion 22d has an inclination provided in such a manner that the upper end surface increases its height from the inside end to the outward direction. As shown in Fig. 27, the distance a between the uppermost end portion A of the inclined portion 22d and the burner 14 center is 1.5 times the burner 14 radius b. The cooking container loading portion 22c has the upper end surface formed nearly horizontally and as shown in Fig. 25, the cooking container P is mounted.

That is, the cooking container loading portion 22c comes in direct contact with the bottom surface of the cooking container P on a curved line extending in a spiral and divides the right and the left spaces.

In addition, same as embodiment 7, since the inner side head end of the trivet ring 21 is installed close to the outer circumferential side of the burner 14, a clearance is scarcely formed between the trivet ring 21 and the burner 14, and consequently, by the top surface of the trivet ring 21, the burner 14, and the bottom surface of the cooking container P, a combustion gas route is formed with the top and the bottom surfaces surrounded scarcely free from any clearance, to which ambient air scarcely flows in.

In addition, each of spiral-shaped combustion gas routes surrounded by each of trivet claws 22 and the bottom surface of the cooking container P on the top surface of the trivet ring 21 has the angles of the inclined jaw portions 21c and 21d set in such a manner that the route cross-sectional area (area of a plane crossing at right angles with respect to the combustion gas flow) decreases as the distance from the burner 14 increases.

In this way, the ring-shaped combustion gas route is divided into multiple combustion gas routes partitioned in a spiral by trivet claws 22.

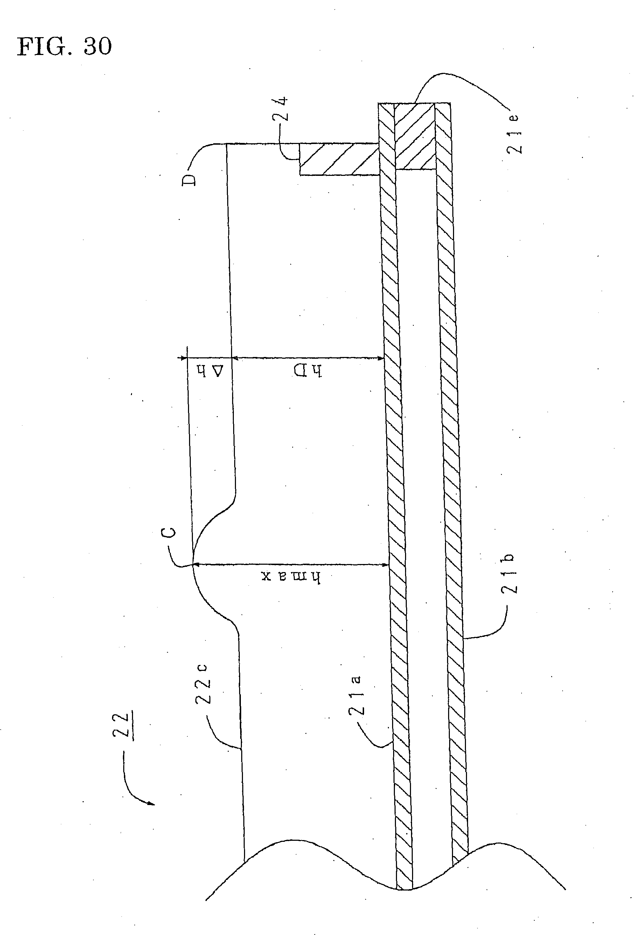

In this cooking container loading portion 22c, as shown in Fig. 30, the difference $\Delta h$ of the height shall be smaller than the height hD of the circumferential end D even in the event that the height hmax of the highest top end C which comes in contact with the bottom surface of the cooking container P differs from the height hD of the outer circumferential end D due to manufacturing errors, etc. That is, it shall satisfy the conditions of $\Delta h = (hmax - hD) \le hD$.

During cooking, combustion gas generated by combustion of the burner 14 flows in multiple combustion gas routes in a spiral and passes spirally while colliding against the trivet claws 22.

When the combustion gas collides against the trivet claws 22, the combustion gas changes the flow from the horizontal direction to the upward direction, and collides against the bottom surface of the cooking container P.

In general, when the combustion gas flows in the horizontal direction on the bottom surface of the cooking container P, the flow achieves a laminar flow state, and on the bottom surface of the cooking container P, a heat transfer border film by an air layer is formed and works as a heat insulation layer. However, in the present embodiment, since combustion gas collides against the side wall of the trivet claws 22 and takes a turn to the upward direction, the combustion gas that flows the combustion gas route becomes a turbulent state, and heat transfer border is not formed.

Consequently, the heat transfer efficiency between the bottom surface of the cooking container P and the combustion gas can be improved.

In addition, in the event that the size of the cooking container P is smaller than the diameter of the trivet ring 21, when the combustion gas reaches the outer circumferential part away from the cooking container P, the combustion gas collides against the spiral-shaped trivet claws 22 and is sent in the upward direction as it is, and flows along the lateral side of the cooking container P.

As a result, in addition to the bottom surface of the cooking container P, on the lateral side of the cooking container P, satisfactory heat exchange with the combustion gas takes place.

In addition, because the route cross-sectional area of the combustion gas route which is divided in a spiral is formed to be narrower as the distance from the burner 14 increases, diffusion of combustion gas is prevented.

As a result, the heat efficiency is remarkably improved.

Furthermore, even when the height hmax of the highest top end C which comes in contact with the bottom surface of the cooking container P differs from the height hD of the outer circumferential end D, since the difference $\Delta h$ of the height is made to be smaller than the height hD of the circumferential end D, it is possible to suppress diffusion of combustion gas from the clearance between the trivet claw upper part and the bottom surface of the cooking container.

Consequently, the combustion gas definitely passes the combustion gas route partitioned and formed by a clearance between the bottom surface of the cooking container P, trivet ring 21 and trivet claws 22.

Thus, an ideal spiral-shaped flow of the combustion gas is formed and the heat transfer efficiency between the combustion gas and the cooking container P can be definitely improved.

In addition, as shown in Fig. 27, an inclined portion 22d is formed on the inner side of the cooking container loading portion in the trivet claws 22 and the distance a from the uppermost end part A of the inclined portion 22d and the burner 14 center is made to be 1.5 times the burner 14 radius b, the trivet claws 22 is not included in the region in which the burner flame is formed.

It is confirmed by experiments of the inventors that when combustion air is forcibly supplied and the distance between the cooking container P and the burner plate 17 is brought close to the limit, the area in which the combustion flame is formed is about 1.5 times the burner 14 radius.

Consequently, when the distance a between the upper most end portion A of the inclined portion 22d and the burner 14 center is less than 1.5 times the burner 14 radius b, trivet claws 22 are scorched with combustion flame.

In the present embodiment, an inclined portion 22d with the top part on the inside of the trivet claws 22 cut diagonally is formed and the distance a between the upper most end portion A of the inclined portion 22d and the burner 14 center is set to 1.5 times (should be not less than 1.5 times) the burner 14 radius b. Thus, trivet claws 22 are not scorched with burner flame.

Consequently, there is no case in which flame is cooled by trivet claws 22, combustibility is degraded, and carbon monoxide gas is generated. In addition, since flame is not deprived of heat energy by trivet claws, the heat transfer efficiency is not decreased. Furthermore, there is no case in which trivet claws 22 are heated by combustion flame and durability of the trivet 20 is lost.

In addition, in the event that the distance between the inner side end of the trivet claws 22 and the burner 14 is excessively separated, the area in which the combustion gas flow is formed in a spiral is reduced. In particular, when a cooking container P with a small diameter is mounted, the combustion gas is released to the outside before the stream is formed completely in a spiral, and therefore, the heat transfer efficiency improving effects achieved by forming the combustion gas flow in a spiral is not successfully obtained.

Therefore, in the present embodiment, there adopted is a configuration to maintain rectifying effects, in which the inclined portion 22d is formed on the inner side end of the trivet claws 22 so that on the upper side of the trivet claws 22, the trivet claws 22 is prevented from entering in the area where burner 14 flame is formed, and on the lower side of the trivet claws 22, the trivet claws are brought closer to the burner 14 and the combustion gas flow in a spiral is formed in early stages.

Thus, the heat efficiency is still more improved.

With the current plate 24, the combustion gas flow is definitely changed to upwards.

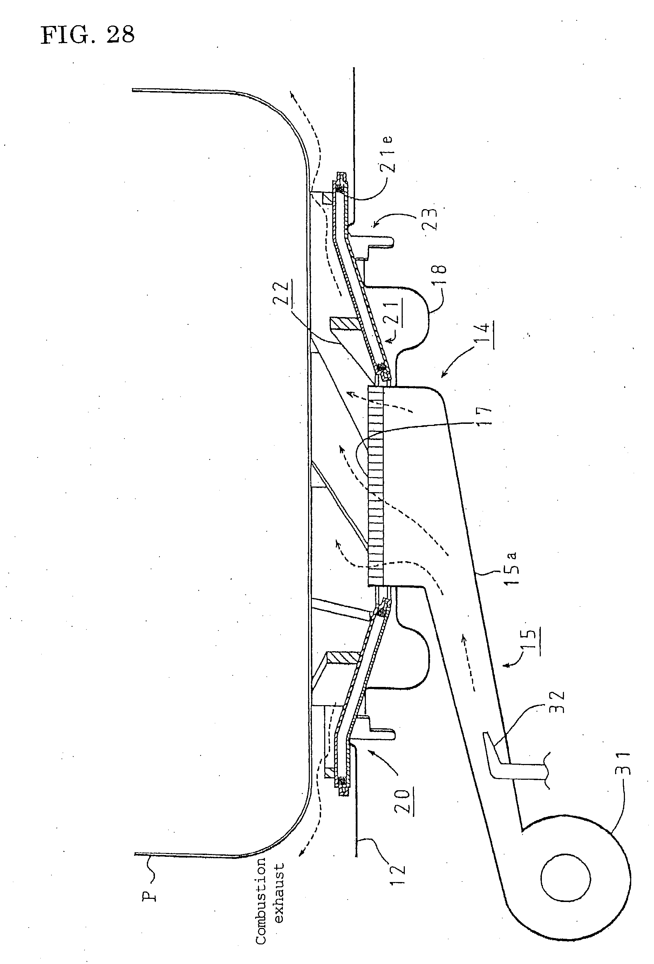

Consequently; when the diameter of the cooking container P is larger than the current plate 24, as shown in Fig. 28, the combustion gas definitely collides against the bottom of the cooking container P and passes the clearance between the top end face of the current plate 24 and the bottom surface of the cooking container P and is released to the outside.

Consequently, the heat transfer efficiency between the bottom surface of the cooking container P and the combustion gas can be improved.

Furthermore, when the diameter of the cooking container P is smaller than the current plate 24, as shown in Fig. 25, the combustion gas is sent upwards while it is passing the combustion gas route partitioned and formed by spiral-shaped trivet claws 22, but part of it is not sent upwards and may reach the current plate. Even in such event, the combustion gas is guided upwards by the current plate 24.

Consequently, the heat transfer efficiency of the combustion gas and the lateral side of the cooking container P can be improved.

Furthermore, because the height of the upper end surface of this current plate 24 is lower than the height of the top end surface of the trivet claws 22, the exhaust port of combustion gas is never blocked.

Furthermore, since the trivet claws 22 extend to the outside in a form of an arc and the trivet ring 21 as a whole plane is formed in a spiral, the combustion gas is delivered smoothly to the outside while colliding against the side wall of trivet claws 22. Consequently, small exhaust resistance occurs even if the contact distance with the bottom surface of the cooking container P is long, and heat distribution decreases deviation.

In addition, a cooking stove is configured to allow the combustion gas of the burner 14 to pass the combustion gas route surrounded nearly free of clearance by the burner 14, trivet ring 21, and the bottom surface of the cooking container P, and discharge the combustion gas from the outer circumferential portion. Accordingly, ambient air scarcely enters the combustion gas route, and cooling of combustion heat by ambient air can be suppressed.

Furthermore, the inclined jaw portion 21c is installed to the trivet ring 21 and a configuration to reduce the route area of the combustion gas route as the distance from the burner 14 increases is adopted. Accordingly, in the position with a near distance from the burner 14, that is, in the position close to the combustion space, combustibility of the burner 14 is not impaired, and in the position far from the burner 14, the route area of the combustion gas route is reduced and the flow rate of the combustion gas can be accelerated.

Consequently, the heat transfer efficiency between the cooking container P and combustion gas can be improved while the combustibility of burner 14 is held satisfactorily.

Furthermore, the volume flow rate of combustion gas decreases with a decrease of the temperature of combustion gas as the distance from the burner 14 increases. Consequently, in the event that the area of the combustion gas route is not varied even when the distance from the burner 14 increases, combustion gas decelerates and diffuses, and the heat efficiency decreases. However, in the present embodiment, as the route area of the combustion gas route is made narrower as the distance from the burner 14 increases, a drop of flow rate of the combustion gas associated with the reduced volume flow rate does not occur.

Consequently, the high-temperature combustion gas is able to be efficiently transmitted to the cooking container P without diffusing in the combustion gas route.

Next, embodiment 9 which corresponds to the inventions of claims 14 through 17 is described.

[Embodiment 9]

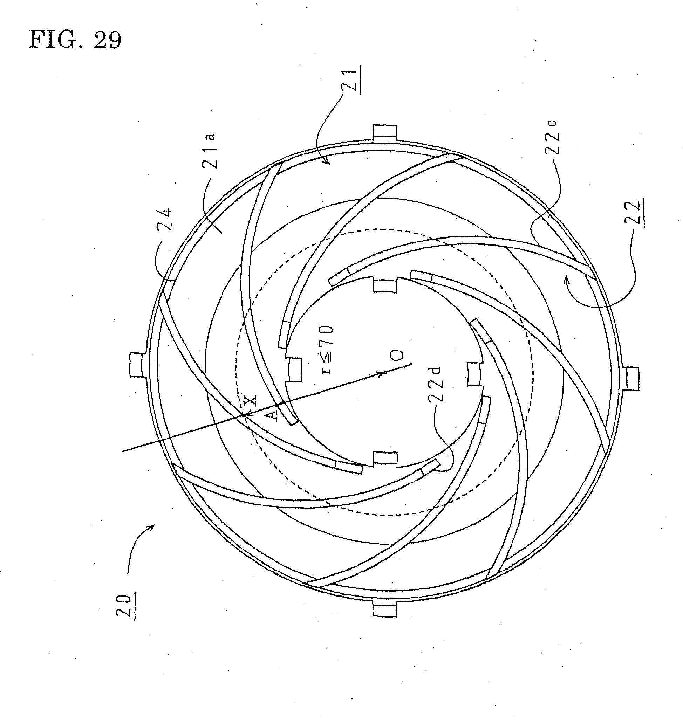

Referring now to Fig. 29, a table burner of embodiment 9 will be described as follows.

The table burner 1 of embodiment 9 has characteristics with respect to the arrangement of the trivet claws on which a cooking container is mounted, and other configurations are all same as embodiment 8.

The trivet 20 of embodiment 9 is configured in such a manner that combustion gas is certain to collide against the trivet claws 22 and then collide against the bottom of the cooking container P as far as the cooking container P is a general cooking container.

That is, when a small pan is used, depending on the trivet claw 2 disposition intervals and its gradient angle, an area in which the combustion gas is discharged as it is without colliding against the trivet claws 22 is formed. However, in this embodiment; the trivet claws 22 are disposed in such a manner that the straight lines connecting the center of the burner (center of the trivet ring 21) and the inside head end A of the cooking container loading portion 22c of the trivet claws 22 intersect with adjacent trivet claws 22 at the point within 70 mm in the horizontal direction from the burner center O (intersection X).

In general, a cooking container more than 160 mm in diameter is used. Let the curvature radius of the outer circumferential portion of the pan be 10 mm, the range from the burner center to a radius within 70 mm always becomes the pan bottom loading surface.

Consequently, in order not to form an area in which the combustion gas is discharged to the outside as it is without colliding against trivet claws 22, the cooking container loading portion 22c should exist in the region of 70 mm in radius at any angle in the radial direction on the horizontal plane from the burner center O.

Therefore, in the present embodiment, trivet claws 22 are disposed in such a manner that straight lines connecting the burner center O and the inside head end A of the cooking container loading portion 22c intersect with adjacent trivet claws 22 at the place within 70 mm in the horizontal direction from the burner center O.

Consequently, even when a small pan is used, collision of the combustion gas against trivet claws 22 can be obtained throughout the full circumference of the pan and working effects as described in the preceding embodiments can be definitely obtained.

Next, embodiments 10 through 12 which correspond to the inventions of claims 18 through 27 is described.

[Embodiment 10]

Next discussion will be made on the table burner of embodiment 10.

Please note that description will be made on the portion which differs from embodiment 8 and like reference characters are designated for the overlapping portions and their descriptions will be omitted.

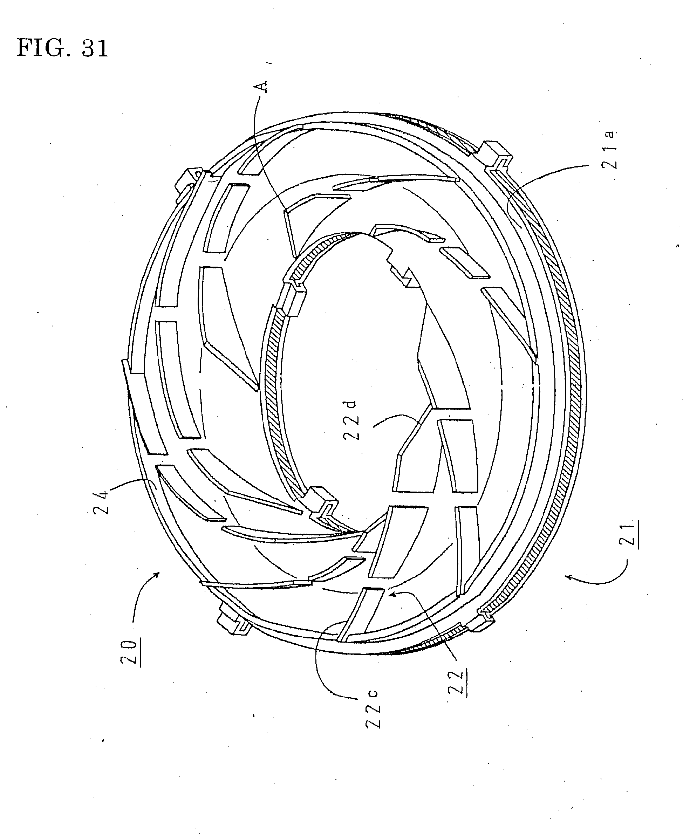

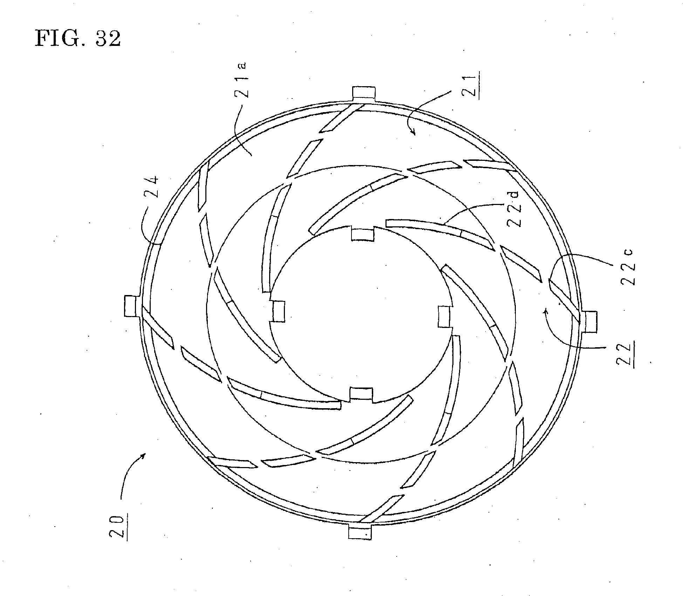

A table burner 1 of embodiment 10 has the shape of trivet claws on which a cooking container is mounted made to be spiral-shaped as viewed from above as shown in Fig. 31 and Fig. 32, and has the trivet claws formed intermittently.

This trivet 20 consists of the trivet ring 21, trivet claws 22, protruded portion 23, and current plate 24, and the trivet ring 21, protruded portion 23, and current plate 24 are of the same shapes of those of embodiment 2.

The trivet claws 22 formed in a spiral are configured with three divided pieces, respectively.

When the trivet claws 22 are made discontinuous, as compared to the case in which the trivet claws 22 are made continuous, the volume of trivet claws 22 decreases. By doing this, the ratio of combustion heat deprived by trivet claws 22 can be reduced.

Consequently, it is possible to prevent temperature drop of combustion heat that flows between the cooking container and trivet ring and to improve the heat transfer efficiency to the cooking container.

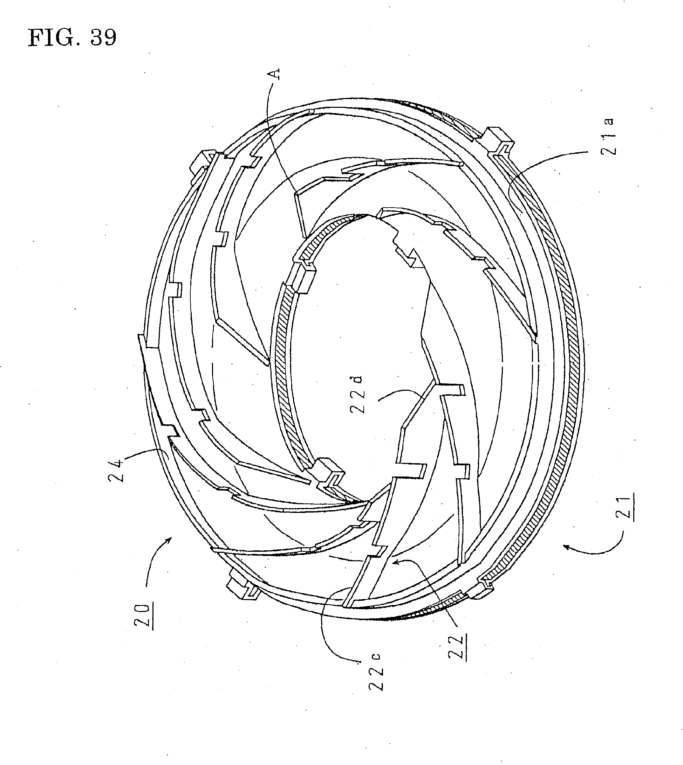

In addition, even when the trivet claws 22 are not necessarily made completely discontinuous, the cooking container loading portion 22c only is notched and the trivet claws are made discontinuous as shown in Fig. 39 for example, the same effects can be obtained.

[Embodiment 11]

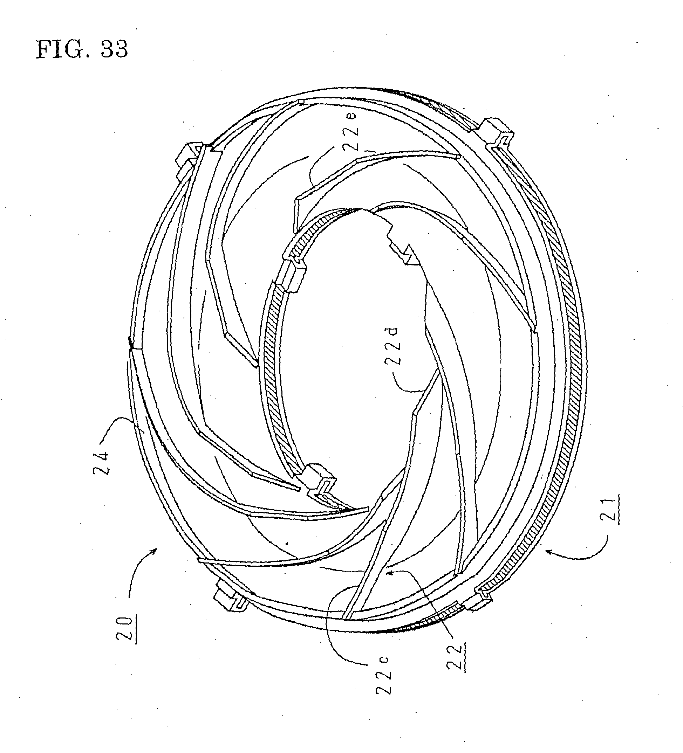

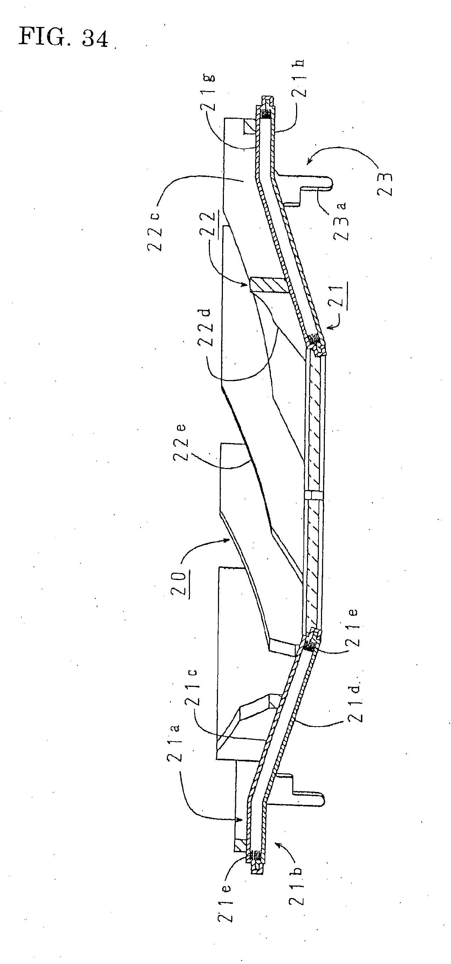

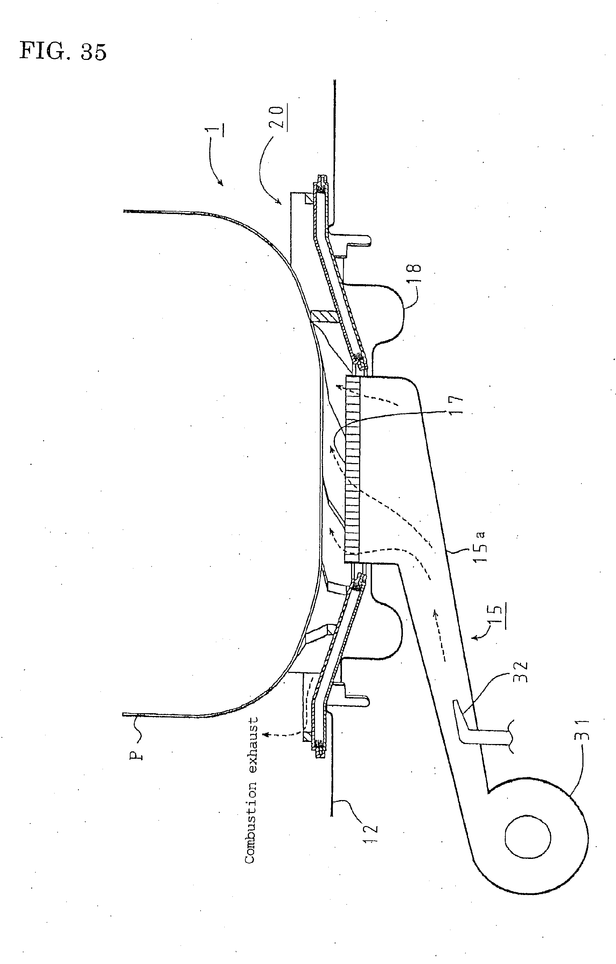

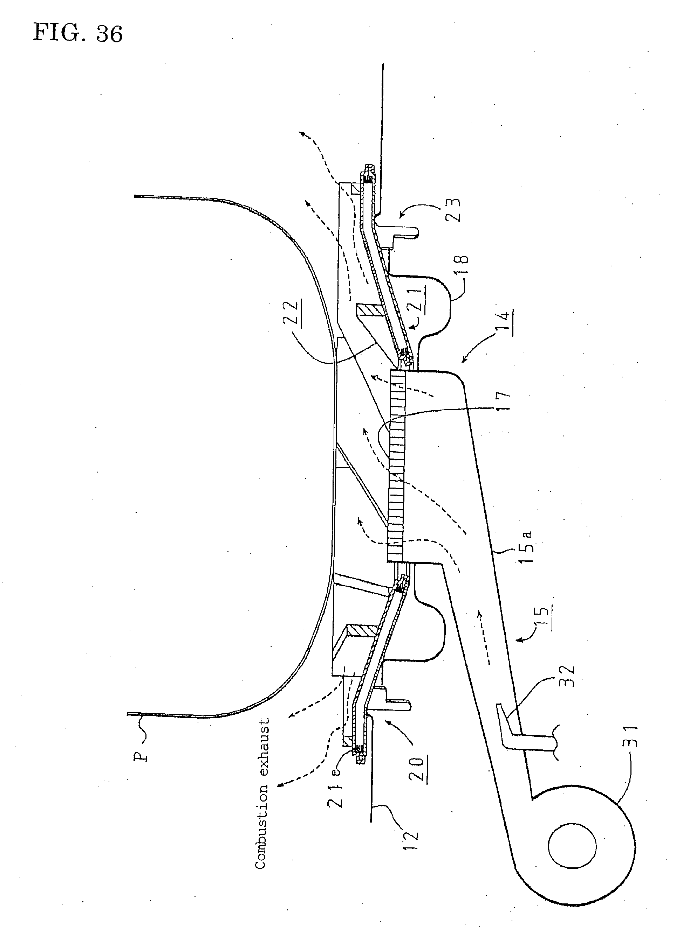

Next discussion will be made on the table burner of embodiment 11.
Please note that description will be made on the portion which differs from embodiment 8 and like reference characters are designated for the overlapping portions and their descriptions will be omitted.
The table burner 1 of embodiment 11 has an arc portion 22e provided between the inclined portion 22d and the cooking container loading portion 22c as shown in Fig. 33 through fig. 35 with respect to the shape of the trivet claws on which a cooking container is mounted.
The arc portion 22e is installed in such a manner that the upper end surface is elevated from the inside end to the outside direction and is indented downwards.
Generally, cooking containers P have round bottom surfaces.
When the cooking container P with the rounded bottom surface is mounted on the cooking container loading portion 22a of the trivet claws 22 with horizontal upper end surface, as shown in Fig. 36, a clearance is formed between the cooking container P and the top end of the trivet claws on the outer circumferential side. In such event, combustion gas diffuses to the outside from the clearance between the cooking container P and the top end of the trivet claws 22, and combustion gas is not formed in a spiral and the desired heat efficiency is unable to be obtained.
On the other hand, in the present embodiment, as shown Fig. 35, since an arc portion 22e is provided between the inclined portion 22d and the cooking container loading portion 22c, no significant clearance is formed between the bottom surface of the cooking container P and the top end of the trivet claws 22.
Consequently, even when the cooking container P with the rounded bottom surface is mounted, an ideal spiral-shaped flow can be obtained for the combustion gas and the heat efficiency can be improved.
If the shape of the upper end portion of the trivet claws 22 conforms to the shape of the bottom surface of the cooking container P, the similar effect can be obtained even if the trivet claw shape is not an arc shape recessed downwards.
For example, even a slope formed in such a manner that the upper end surface is elevated from the inner circumferential side toward the outer direction can produce nearly similar effects.

[Embodiment 12]

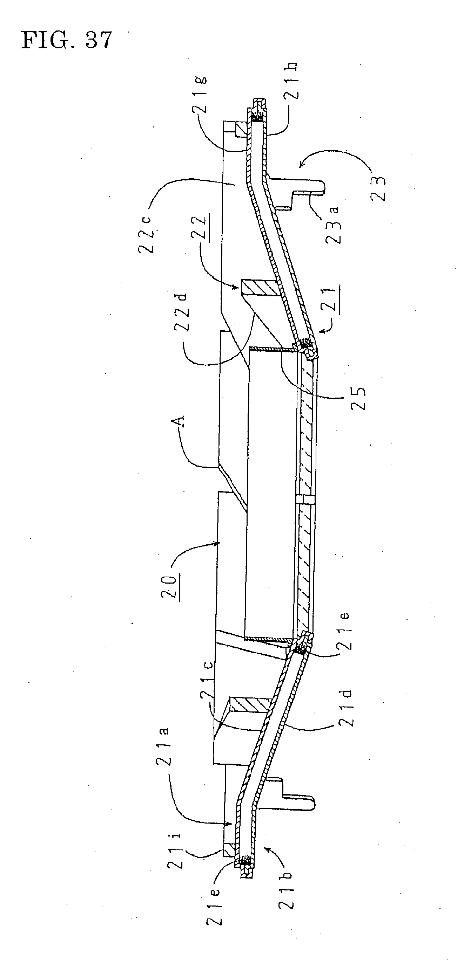

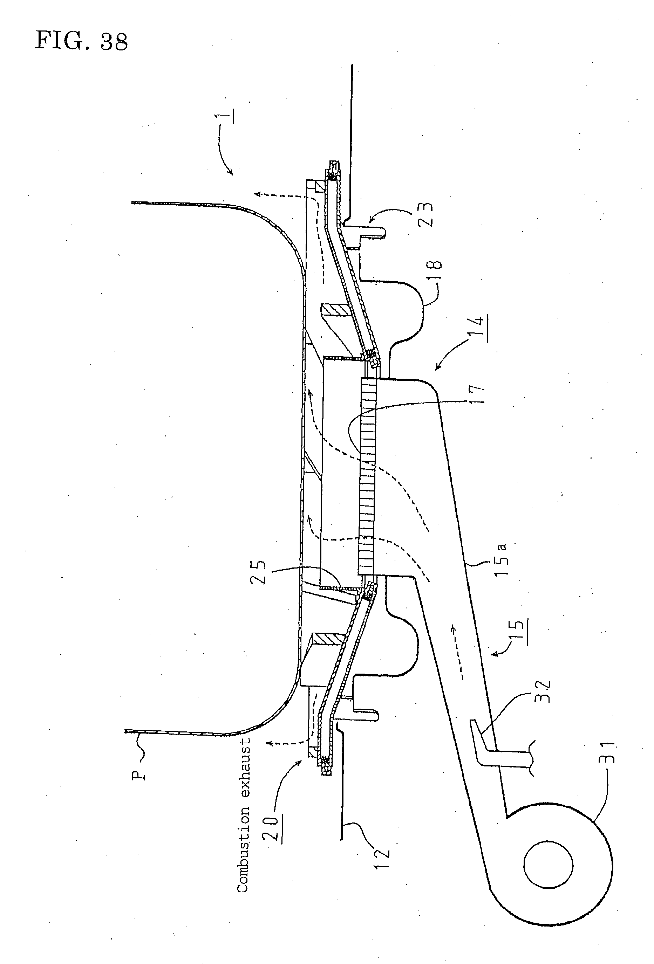

Next discussion will be made on the table burner of embodiment 12.
Please note that description will be made on the portion which differs from embodiment 8 and like reference characters are designated for the overlapping portions and their descriptions will be omitted.
Furthermore, the cooking stove 1 of embodiment 12 has a cylindrical body 25 protruding upwards provided on the inner circumferential end of the front plate 21a of trivet ring 21, as shown in Fig. 37 and Fig. 38.
The cylindrical body 25 is installed coaxially with the trivet ring 21 and the upper end surface height of the cylindrical body 25 is lower than the upper end surface height of the cooking container loading portion 22a of trivet claws 22.
In addition, the location in which this cylindrical body 25 is installed may not be strictly on the inner circumferential end of the trivet ring 21 but may be in the vicinity of the inner circumferential end.
By installing the cylindrical body 25 in this way, as shown in Fig. 38, the burner combustion gas goes upwards in the space surrounded by the inner circumferential wall of the cylindrical body 25. Then, after the burner combustion gas collides against the center part of the bottom surface of the cooking container P, the gas passes a clearance between the upper end surface of the cylindrical body 25 and the bottom surface of the cooking container P and is discharged to the outside of the cylindrical body 25.
Consequently, the combustion gas is brought to definite contact with the center part of the bottom surface of the cooking container P and the heat transfer efficiency can be improved.
It should be noted that the cylindrical body 25 may not be limited to that formed on the trivet ring 21 but may be formed on the burner 14. In addition, the cylindrical body 25 may be applied to other embodiments such as embodiment 1 and the above-mentioned working effects can be obtained.
Additionally, in the table burner with an internal flame port burner (for example, Japanese Patent Application Laid-Open Publication No. Hei 9-4853) in which flame is formed towards the inside of the annular burner described in embodiment 6, the foregoing effects can be obtained in a similar manner.
Next discussion will be made on embodiment 13 which corresponds to the inventions of claims 28 through 31.

[Embodiment 13]

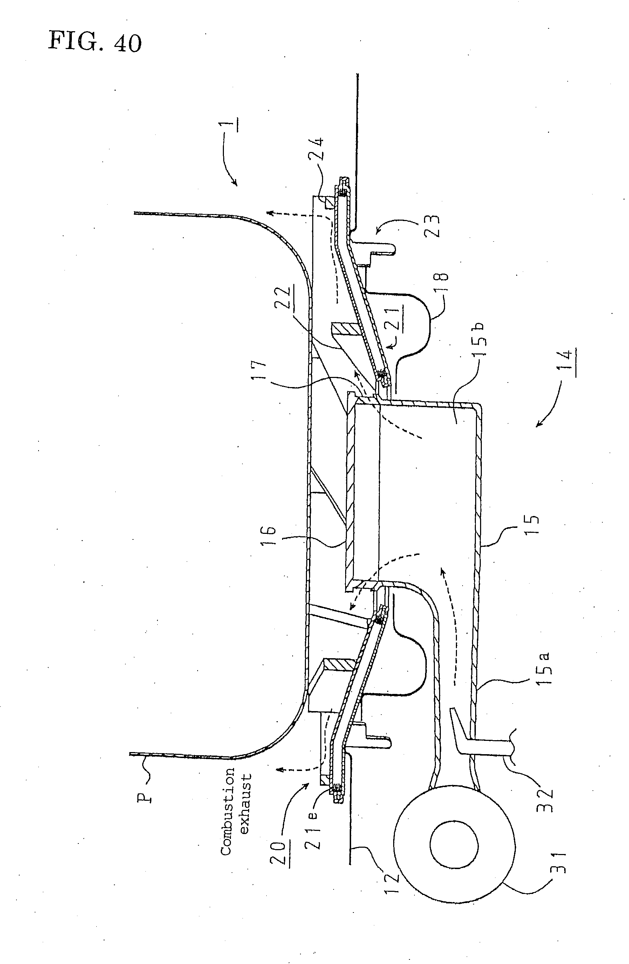

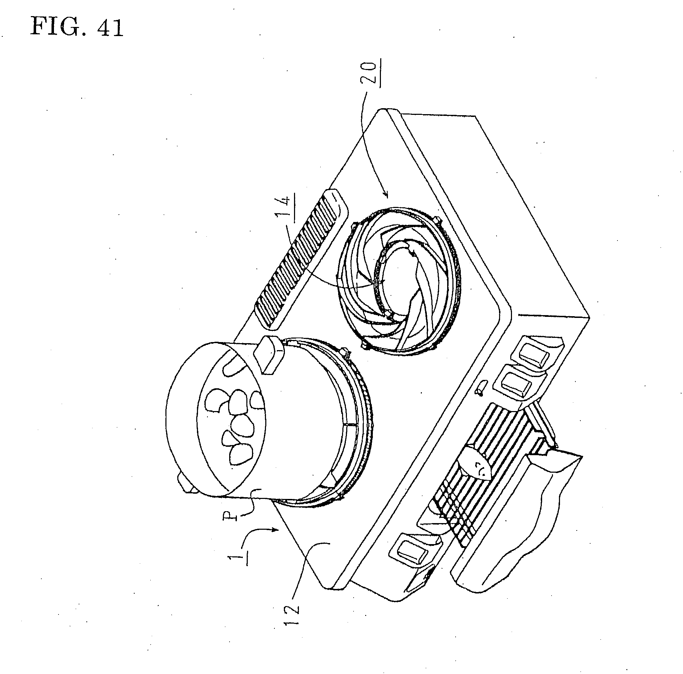

The table burner 1 as a cooking stove has an opening provided on the top plate 12 as shown in Fig. 40 and Fig. 41, and at the center position of the opening, the cylindrical burner 14 is arranged, and around the burner 14, the drip plate 18 is placed. In the upper circumference of the burner 14, the trivet 20 is installed to mount the cooking container P.

This burner 14 is a burner of totally first air type which sucks almost all the air necessary for combustion as the first air, and is equipped with the burner main body 15 which mixes fuel gas and combustion air and the burner head 16 mounted on the burner main body 15.

The burner main body 15 has the air-charging fan 31 to feed combustion air connected at the upstream end, and in the middle of the air supply route, the gas nozzle 32 which spouts out fuel gas is installed. In addition, at the downstream of the gas nozzle 32, the mixing pipe 15a to mix fuel gas and combustion air is formed. In addition, at the head of the burner main body 15, a cylindrical mixing chamber 15b is formed and the burner head 16 is mounted coaxially on the mixing chamber 15b.

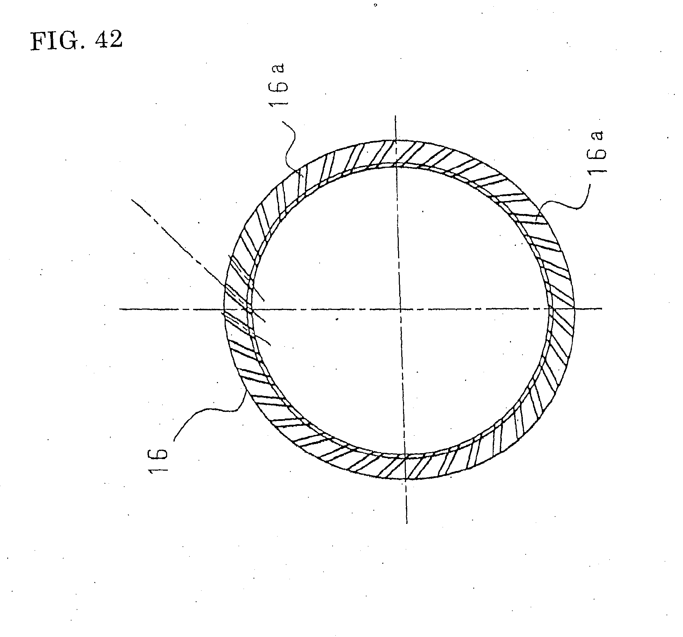

The burner head 16 is formed in a disk shape as shown in Fig. 40 and Fig. 42, and on the outer circumferential edge which forms a contact surface with the burner main body 15, a large number of flame port grooves 16a are formed, and by mounting them on the mixing chamber 15b of the burner main body 15, a large number of flame ports 17 are formed on the outer circumferential edge. The forming direction of the flame port groove 16a is tilted obliquely in the upward direction towards the outside, and is tilted at a predetermined angle in the burner circumferential direction with respect to the straight line radially directed from the center of the burner 14 (center of the burner head 16).

The trivet 20 has the same configuration as that described in embodiment 8. The trivet 20 is integrally configured by multiple trivet claws 22 which mount and support the cooking container P, the trivet ring 21 installed around the burner 14 for covering the top of the overlapping portion of the opening of the top plate 12 and the drip plate 18 and serving as the base to dispose trivet claws 22 upright, an annular current plate 24 installed protruding upwards on the outer circumferential part of the trivet ring 21, and the protruded portion 23 to fix the trivet 20 on the top plate 12.

According to the gas table 1 described above, the combustion gas (including the flame) is jetted from the flame port 17 of the burner 14 diagonally upward and entirely twisted in the burner circumferential direction. Then, the combustion gas flows into plural combustion gas routes sectioned into spiral shape, and hits the trivet claws 22 and goes through. When the combustion gas hits the trivet claws 22, the combustion gas changes its flow from the horizontal direction to the upward direction, and repeats hitting the cooking container P bottom surface and is sent to the outside.

That is, the trivet claws 22 works as an exhaust guide that guides the flow of the combustion gas of the burner 14, and the combustion gas is guided in spiral shape by the trivet claws 22, and exhausted along the cooking container P bottom surface toward the outer circumferential direction. As a result, in the combustion gas route, the combustion gas is always subject to direction changing force and the flow thereof is disturbed, and accordingly, a heat transfer border film is unlikely to be formed on the cooking container P bottom surface, and the heat of the combustion gas is transmitted to the bottom surface of the cooking container preferably.

Further, a distance in which the combustion gas contacts with the bottom surface of the cooking container P can be made long.

As a result, high heating efficiency is obtained.

And further, since the trivet claws 22 that support the cooking container P is used also as an exhaust guide for guiding the flow of the combustion gas, there is no need to arrange a special exhaust guide, and therefore, it is possible to reduce the production costs.

Furthermore, in the case where the size of the cooking container P is smaller than the diameter of the trivet ring 21, when the combustion gas reaches the outer circumferential portion from the cooking container P, it hits the spiral trivet claws 22, and is sent upward as it is, and flows along the cooking container P side surface, therefore, in addition to the cooking container P bottom surface, in the cooking container P side surface too, the heat exchange with the combustion gas is carried out preferably.

Moreover, since the trivet claws 22 extend outward in arc shape, and the entire trivet ring 21 surface is formed into a spiral shape, the combustion gas hits the trivet claws 22 side walls and is sent to the outside smoothly, and there is little exhaust resistance even when the contact distance with the cooking container P bottom surface is long, and there is little bias in the heat distribution.

Further, since a direction of a flame jetted from the burner 14 is inclined to the circumferential direction of the burner 14, the combustion gas of the burner 14 flows among the trivet claws 22, 22 for a while after jetting, then hits the trivet claws 22 and flows toward the outer circumferential direction.

Accordingly, the combustion gas after complete combustion is made to hit the trivet claws 22, it is possible to maintain the combustion preferably. In other words, if the combustion gas is made to hit the trivet claws 22 just after jetting, the flame temperature goes down and incomplete combustion occurs, but by making the combustion gas hit the trivet claws at appropriate timing, it is possible to maintain the combustion preferably.

Further, for a while after jetting until hitting the trivet claws 22, it is possible to maintain the jetting speed fast, and the combustion gas is unlikely to become a laminar flow, and it is possible to further improve the heating efficiency.

Furthermore, when the jetting speed is fast because the outer diameter of the burner 14 is made to be small so as to narrow an area of the flame port, the heating efficiency is further improved.

Moreover, the combustion gas of the burner 14 is made to go through the combustion gas routes covered with the burner 14 and the trivet ring 21 and the cooking container P bottom surface almost without a clearance gap, and the combustion gas is exhausted from the outer circumferential portion, and accordingly, ambient air does not flow into the combustion gas routes, and it is possible to prevent the combustion heat from being cooled down by ambient air.

Further, the inclined jaw portion 21c is arranged in the trivet ring 21, and the route area of the combustion gas route is made narrower as the distance from the burner 14 becomes farther, and accordingly, at the portion where the distance from the burner 14 is near, that is, at the portion close to the combustion space, the combustion property of the burner 14 is not deteriorated, and at the portion far away from the burner 14, by making narrower the route area of the combustion gas route, it is possible to make the flow rate of the combustion gas fast.

Accordingly, it is possible to maintain the combustion property of the burner 14 preferably, and improve the heat transmission efficiency between the cooking container P and the combustion gas.

Further, the volume flow rate of the combustion gas decreases along with the temperature decline of the combustion gas as the distance from the burner 14 becomes farther. Therefore, when the area of the combustion gas route does not change even if the distance from the burner 14 becomes farther, the combustion gas decelerates and diffuses, and the heating efficiency declines, but in the present invention, the route cross sectional area of the combustion gas route is made narrower as the distance from the burner 14 becomes farther, therefore, it does not cause the decline in the combustion gas flow rate along with the decrease of the volume flow rate of the combustion gas.

Accordingly, the combustion heat at high temperature does not diffuse in the combustion gas route, and the combustion heat can be transmitted to the cooking container P efficiently.

Furthermore, since the forced combustion method is adopted, it is possible to maintain the preferable combustion performance even if the degree of airtightness of the combustion gas route is made high and the exhaust resistance becomes high.

Moreover, by the current plate 24 arranged on the outer circumferential end of the trivet ring 21, the flow of the combustion gas changed upward precisely over the entire circumference thereof.

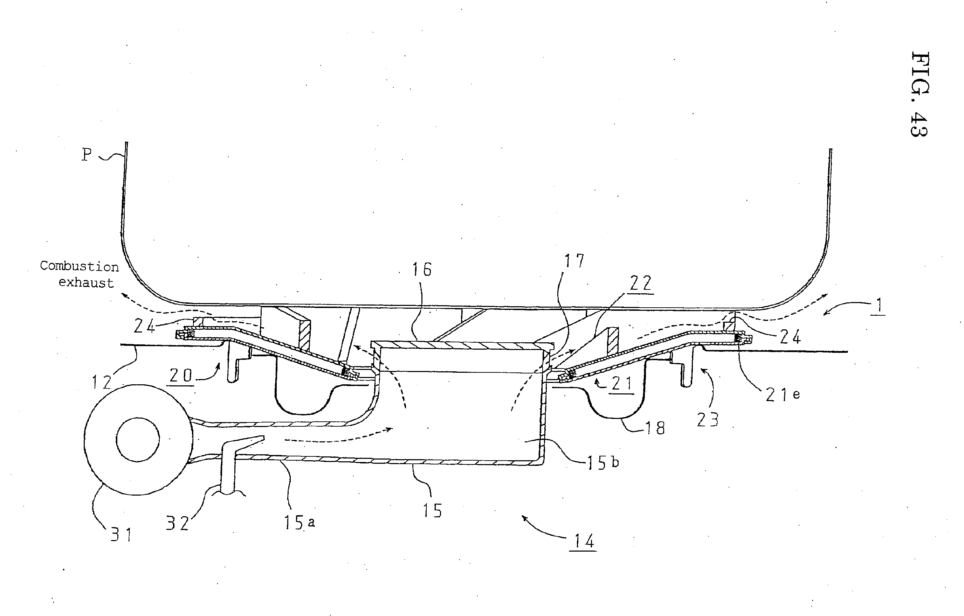

Accordingly, when the diameter of the cooking container P is larger than the current plate 24, as shown in Fig. 43, after the combustion gas hits the cooking container P bottom surface, the combustion gas goes through the clearance gap between the current plate 24 upper end surface and the cooking container P bottom surface and is discharged to the outside. Accordingly, it is possible to improve the heat transmission efficiency between the combustion gas and the cooking container P bottom surface.

Further, when the diameter of the cooking container P is smaller than the current plate 24, although the combustion gas is sent upward while passing the combustion gas route sectionally formed by the spiral trivet claws 22, part thereof may not be sent upward but reach the current plate 24. Even in such a case, the combustion gas is guided upward by the current plate 24.

Accordingly, the heat transmission efficiency between the combustion gas and the cooking container P side surface improves.

As the result, the heating efficiency is extremely improved.

Furthermore, same as other embodiments, improvement of heat efficiency by means of double configuration of the trivet ring 21 can be obtained.

Next, discussion will be made on embodiment 14 which corresponds to the inventions of claims 32 through 36. [Embodiment 14]

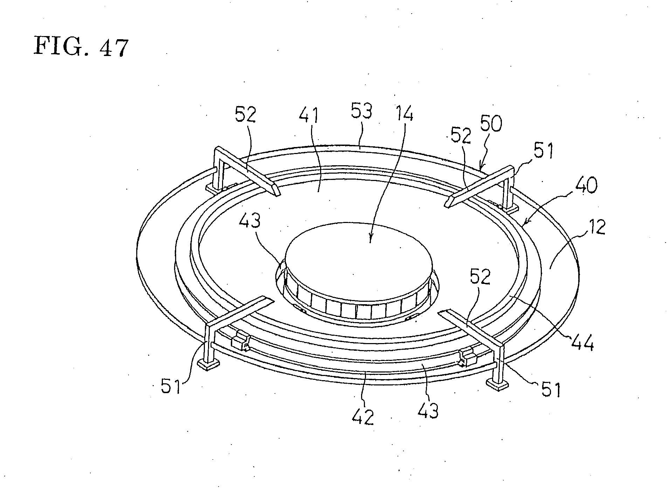

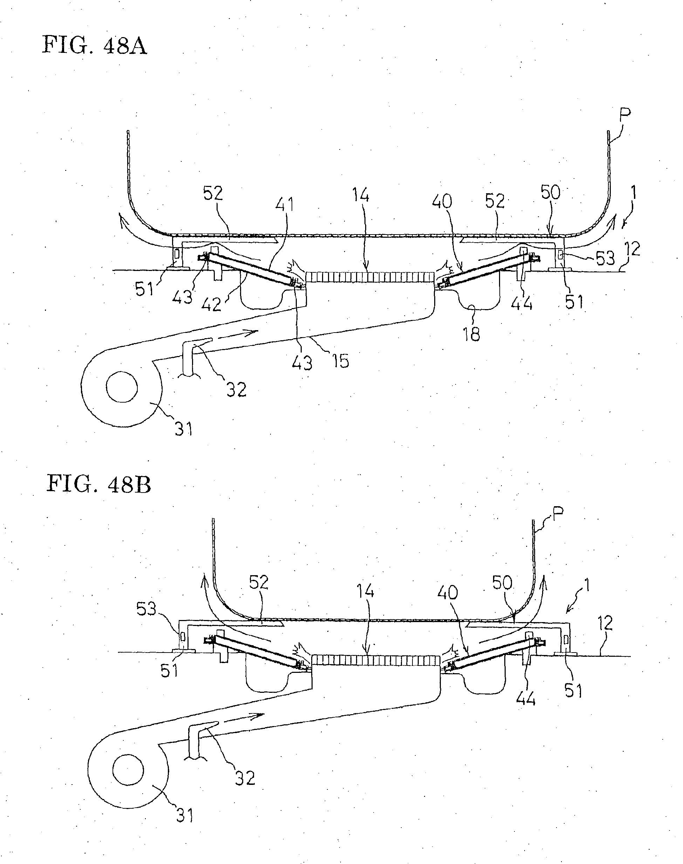

As shown in Fig. 47 and Fig. 48, in this table burner 1, a ring plate 40 around the burner 14 and a trivet 50 are formed separately. First of all, the ring plate 40 is formed in a cone shape in which the plate lowers as it goes to the center. Moreover, same as the trivet ring 21 explained in the foregoing embodiments, the ring plate 40 has a double configuration formed by a front plate 41 which faces the cooking container P, and a back plate 42 which faces the drip plate 18 as well as the top plate 12. In addition, the front plate 41 and the back plate 42 have ceramics 43 inserted as heat insulating material in the full circumference of the outer and inner circumferential end parts respectively, and are fixed by caulking at four places on the outer and inner circumferential end parts. Furthermore, on the front plate 41 of the ring plate 40, an annular guide plate 44 as an exhaust guide means protruding upwards is disposed upright. This guide plate 44 is formed coaxially with the ring plate 40 at the outer circumferential edge of the front plate 41 and is made lower than trivet claws 51 of a trivet 50 later discussed.

The trivet 50 is uniformly mounted in the circumferential direction at the edge of the opening of the top plate 12, and includes inverted-L-shaped trivet claws 51, 51, ... with a horizontal portion 52 directed to the center side of the burner 14 and a linking ring 53 which links base ends of adjacent trivet claws 51 in the circumferential direction. By mounting the cooking container P on the trivet claws 51, a ring-shaped combustion gas route whose top and bottom surfaces are surrounded nearly free of any clearance and into which ambient air scarcely flows is formed between the top surface of the ring plate 40 and the bottom surface of the cooking container P.

Consequently, according to the table burner 1, at the time of combustion of the burner 14, combustion gas flows between the ring plate 40 and the cooking container P toward the outside in the radial direction, and collides against the guide plate 44 to change the flow in the upward direction.

That is, when the cooking container P which is larger than the outside diameter of the ring plate 40 is mounted on the cooking container P, as shown by an arrow mark in Fig. 48A, the combustion gas collides against the guide plate 44, changes the flow in the upward direction, collides against the bottom surface of the cooking container P, moves to the outer circumference along the bottom surface of the cooking container P as it is, and is discharged to the outside. Consequently, even in the case of the cooking container P of a large diameter, a long contact distance with the combustion gas on the outer circumferential side can be secured, and the heat transfer efficiency of the bottom surface of the cooking container P and the combustion gas can be still more improved.

On the other hand, when the cooking container P nearly same or smaller than the outside diameter of the ring plate 40 is mounted, as shown by an arrow mark in the Fig. 48B, the combustion gas flows between the bottom surface of the cooking container P and the ring plate 40 along the bottom surface of the cooking container, and when the combustion gas collides against the guide plate 44, the combustion gas changes the direction to upwards, and rises along the side of the cooking container P as it is. Consequently, heat is successfully exchanged with the combustion gas on the lateral side of the cooking container P in addition to on the bottom of the cooking container P, and the heat efficiency is increased.

With the foregoing description, embodiments of the present invention were described, but it is to be understood that the present invention shall not be limited by any of these embodiments and may be worked in various forms without departing from the spirit and the scope of the invention.

For example, combinations of the kind of burners and the trivets in each embodiment can be optionally made and shall not be limited to the embodiments. For example, the trivets of embodiment 5 may be applied to the cooking stove equipped with forced combustion type burners of embodiment 3. In addition, the configuration of the trivet ring may not be limited to the double configuration but may be applied to the trivet formed with one solid plate. Furthermore, the configuration to separate the ring plate and the trivet ring shall not be limited to embodiment 14 mentioned above but may also be adopted to embodiments 1 through 3 and 8 and other embodiments.

It should be noted that in embodiments 7 and 8, the cross-sectional area of the ring-shaped combustion gas route is made narrower as the distance from the center of the trivet ring increases, but it may kept equal (the route cross-sectional area is not varied) even if the distance increases. Furthermore, as the shape of the spiral-shaped trivet claws, the invention shall not be limited by the trivet claws with the inclined portion provided.

Furthermore, the kind of burners shall not be limited to those mentioned as embodiments. For example, the similar effects can be obtained with the internal flame port burners. In addition, in embodiments 2 and 3, as the cooking stove of forced combustion type, the totally first air type was described, but the effects can also be obtained with Bunsen burners, semi-Bunsen burners, and red-flame type burners.

Furthermore, in embodiments 1 through 4, ceramic and ceramic wool were used for heat insulating material, but the heat insulating material may be any material which provides heat resistance and heat insulation properties, and shall not be limited to ceramic and ceramic wool.

In addition, the method of fixing the front plate and the back plate is not limited to fixing by caulking, and the calking and fixing places shall not be limited to four places on the inner and outer circumferential end portions.

INDUSTRIAL APPLICABILITY

The present invention is applicable to various cooking stoves such as table burners and built-in stoves to be built into a kitchen unit, etc.

BRIEF DESCRIPTION OF THE DRAWINGS

Fig. 1 is a cross-sectional view of a trivet of embodiment 1;
Fig. 2 is an explanatory drawing of the trivet of embodiment 1;
Fig. 3 is an explanatory drawing of a cooking stove of embodiment 1;
Fig. 4 is an explanatory drawing of the cooking stove of embodiment 1;
Fig. 5 is an explanatory drawing of a cooking stove of embodiment 2;
Fig. 6 is a cross-sectional view of a trivet of embodiment 4;
Fig. 7 is a cross-sectional view of a trivet of embodiment 5;
Fig. 8 is a cross-sectional view of the trivet of embodiment 5;
Fig. 9 is an explanatory drawing of a cooking stove of embodiment 3;
Fig. 10 is a top view of a trivet of embodiment 3;

Fig. 11 is a cross-sectional view of the trivet of embodiment 3;
Fig. 12 is a cross-sectional view of the cooking stove of embodiment 3;
Fig. 13 is an explanatory drawing of a cooking stove of embodiment 6;
Fig. 14 is an explanatory drawing of the cooking stove of embodiment 6;
Fig. 15 is an explanatory drawing showing the relationship between a trivet and a burner of embodiment 6;
Fig. 16 is a longitudinal cross-sectional view of a trivet of embodiment 7;
Fig. 17 is a perspective view of the trivet of embodiment 7;
Fig. 18 is an explanatory drawing showing the functions of a cooking stove of embodiment 7;
Fig. 19 is a perspective view of the cooking stove of embodiment 7;
Fig. 20 is an explanatory drawing of a ring-shaped combustion gas route of embodiment 7;
Fig. 21 is an explanatory drawing showing a flow of combustion gas of embodiment 7;
Fig. 22 is a perspective view of a trivet of embodiment 8;
Fig. 23 is a top view of the trivet of embodiment 8;
Fig. 24 is a longitudinal cross-sectional view of the trivet of embodiment 8;
Fig. 25 is an explanatory drawing showing the functions of a cooking stove of embodiment 8;
Fig. 26 is a perspective view of the cooking stove of embodiment 8;
Fig. 27 is an explanatory drawing showing the relationship between the trivet and the burner of embodiment 8;
Fig. 28 is an explanatory drawing showing a flow of combustion gas of embodiment 8;
Fig. 29 is a top view of a trivet of embodiment 9;
Fig. 30 is an explanatory drawing showing the trivet of embodiment 8;
Fig. 31 is an explanatory drawing showing a trivet of embodiment 10;
Fig. 32 is a top view of the trivet of embodiment 10;
Fig. 33 is an explanatory drawing showing a trivet of embodiment 11;
Fig. 34 is a cross-sectional view of the trivet of embodiment 11;
Fig. 35 is a cross-sectional view of a cooking stove of embodiment 11;
Fig. 36 is a cross-sectional view of a cooking stove compared in embodiment 11;
Fig. 37 is a cross-sectional view of a trivet of embodiment 12;
Fig. 38 is a cross-sectional view of a cooking stove of embodiment 12;
Fig. 39 is an explanatory drawing showing a modified example of the trivet of embodiment 10;
Fig. 40 is an explanatory drawing showing the functions of a cooking stove of embodiment 13;
Fig. 41 is a perspective view of the cooking stove of embodiment 13;
Fig. 42 is a bottom view of a burner head of embodiment 13;
Fig. 43 is an explanatory drawing showing the functions of the cooking stove of embodiment 13;
Fig. 44 is a perspective view of a conventional cooking stove;
Fig. 45 is an explanatory drawing showing the functions of the conventional cooking stove;
Fig. 46 is an explanatory drawing showing the functions of the conventional cooking stove;
Fig. 47 is a perspective view of a stove portion of a cooking stove of embodiment 14; and
Fig. 48 is an explanatory drawing showing the flow of combustion gas of embodiment 14.

DESCRIPTION OF REFERENCE NUMERALS
| 1. | Cooking stove |
| 14. | Burner |
| 15. | Burner main body |
| 20. | Trivet |
| 21. | Trivet ring |
| 22. | Trivet claws |
| 23. | Protruded portion |
| 24. | Current plate |
| 21a. | Front plate |
| 21b. | Back plate |
| 21c. | Inclined jaw portion |
| 21d. | Inclined jaw portion |
| 21e. | Ceramic |
| 21g, 21h | Horizontal plane portion |
| 22c | Cooking container loading portion |
| 22d. | Inclined portion |

P.          Cooking container

**Claims**

1.  A cooking stove comprising:

    a burner that heats a cooking container;
    a ring plate installed to be positioned around the burner;
    trivet claws which bears the cooking container above the burner; and
    a combustion gas route of the burner which is formed between the cooking container and the ring plate, further comprising:
    a radiation suppressing means for suppressing radiation from the rear surface of the ring plate.

2.  The cooking stove according to claim 1, wherein the ring plate is formed into a double structure as the radiation suppressing means by locating a front plate which faces the bottom of the cooking container on a side of the combustion gas route and a back plate which does not come in direct contact with the combustion gas of the burner nearly in parallel with a predetermined interval provided.

3.  The cooking stove according to claim 1, wherein heat insulating material is inserted between the front plate and the back plate throughout the full length of the inner circumferential end part and the outer circumferential end part.

4.  The cooking stove according to claim 2 or 3, wherein the space between the front plate and the back plate is in the vacuum state.

5.  The cooking stove according to claim 2, wherein the front plate and the back plate are laid one on top of the other via heat insulating material.

6.  The cooking stove according to any of claims 1 through 5, wherein the trivet is used for a cooking stove equipped with a cooking stove of forced combustion type which forcibly feeds and discharges combustion gas, and the front plate forms a combustion gas route of the cooking stove of forced combustion type face-to-face with the bottom of a cooking container.

7.  The cooking stove according to any of claims 1 through 6, wherein the ring plate is a trivet ring with the trivet claws integrally installed upright on the top surface.

8.  A cooking stove, comprising:

    a cylindrical or annular burner which forcibly feeds combustion air and forms flame nearly upwards or nearly inwards only; and
    a trivet installed to be located around the burner and comprising multiple trivet claws installed upright to a trivet ring to bear a cooking container,
    wherein the distance between the inner end of the cooking container loading portion of the trivet claws and the burner center is not less than 1.5 times the burner radius.

9.  The cooking stove according to claim 8, wherein the multiple trivet claws are formed in a spiral as viewed from above, and
    the combustion gas of the burner is discharged to the outside from the combustion gas exhaust route partitioned and formed in a spiral by being surrounded by the trivet claws, the trivet ring, and the cooking container.

10. The cooking stove according to claim 9, wherein the multiple trivet claws comprise
    an inclined portion formed in such a manner that the top end face is raised from the inner circumferential end toward the outer circumferential direction, and
    a cooking container loading portion installed to the outside of the inclined portion and whose top end position is horizontal,
    and the distance from the uppermost end part of the inclined portion and the burner center is not less than 1.5 times the burner radius.

**11.** A cooking stove, comprising:

a burner for heating a cooking container;
a ring plate installed around the burner;
multiple trivet claws that bear and support the cooking container above the burner; and
a ring-shaped combustion gas route formed between the top surface of the ring plate and the bottom surface of the cooking container,
wherein the route cross-sectional area of the ring-shaped combustion gas route becomes narrower as the distance from the center of the ring plate increases, or is equal even if the distance increases.

**12.** The cooking stove according to claim 11, wherein the ring plate is a trivet ring with the trivet claws integrally installed upright on its surface, and is equipped with a heat insulating means to suppress radiation from the bottom surface of the trivet ring.

**13.** The cooking stove according to claim 11 or 12, wherein the ring plate is a trivet ring with trivet claws installed upright on the top surface,
the trivet claws are formed in a spiral extending from the inside towards the outside as viewed from above, and from the inner head end to the outer head end, the trivet claws form a plate-like wall installed upright from the top surface of the trivet ring, and
when a cooking container is set, the top end of the trivet claws comes in contact with the cooking container in the form of swirling line, and divides the combustion gas route into multiple combustion gas routes partitioned and formed in a spiral surrounded by the trivet ring top surface, the trivet claws, and the bottom surface of the cooking container.

**14.** A cooking stove, comprising:

a burner that heats a cooking container; and
a trivet installed to be located around the burner and configured by installing multiple trivet claws that support the bottom surface of the cooking container upright to the trivet ring at predetermined intervals,
wherein each of the trivet claws form a plate-like longitudinal wall extending outwards tilted at a predetermined angle to the burner circumferential direction with respect to straight lines radiating from the burner center is formed upright from the top surface of the trivet ring from the inner head end of to the outer head end, and
when the cooking container is set, the top end of each of the trivet claws comes linearly in contact with the bottom surface of the cooking container, divides the combustion gas route of the burner into multiple combustion gas routes partitioned and formed by being surrounded by the top surface of the trivet ring, the trivet claws, and the bottom surface of the cooking container, and discharges the combustion gas to the outside while allowing the combustion gas to collide against the wall surface of the trivet claws.

**15.** The cooking stove according to claim 14, wherein the trivet claws extend to the outside in an arc form, and when the cooking container is set, the top end comes in contact with the bottom surface of the cooking container on the arc line.

**16.** The cooking stove according to claim 14 or 15, wherein a heat insulating means is installed to suppress radiation from the bottom surface of the trivet ring.

**17.** The cooking stove according to any of claims 14 through 16, wherein each of the trivet claws is disposed in such a manner that the lines connecting the burner center to the inside top end of the cooking container loading portion at the trivet claws intersect at the place within 70 mm from the burner center with respect to adjacent trivet claws.

**18.** A cooking stove, comprising:

a burner that heats a cooking container;
a ring plate installed around the burner; and
trivet claws which bear the cooking container above the burner,
wherein the combustion air is forcibly fed to the burner,
a combustion gas route to which ambient air is scarcely allowed to enter is formed by surrounding the top and the bottom surfaces nearly free of any clearance by the ring plate, the burner, and the bottom surface of the cooking container, and

the combustion gas of the burner is discharged from the outer circumferential part of the combustion gas route.

19. The cooking stove according to claim 18, wherein the route area of the combustion gas route becomes narrower as the distance from the center of the burner increases, or is equal even if the distance varies.

20. The cooking stove according to claim 18 or 19, wherein a current plate is installed to the top surface of the outer circumferential end of the ring plate to guide the burner combustion gas that flows to the outside along the ring plate top surface in the upward direction.

21. The cooking stove according to claim 20, wherein the top end of the current plate is lower than the top end of the outer circumference of the trivet claws.

22. The cooking stove according to any of claims 18 through 21, wherein the multiple trivet claws are formed in a spiral as viewed from above, and
the combustion gas of the burner is discharged to the outside from a combustion gas exhaust route partitioned and formed in a spiral by being surrounded by the trivet claws, the ring plate, and the cooking container.

23. The cooking stove according to claim 22, wherein each of the trivet claws formed in spiral are intermittently formed.

24. The cooking stove according to claim 22 or 23, wherein even when the height of the top end of the trivet claws that come in contact with the bottom surface of the cooking container and the height of the top end of the outer circumference of the trivet claws differ, the difference is not more than the height of the outer circumferential end of the trivet claws.

25. The cooking stove according to any of claims 20 through 24, wherein the top end of the inner circumference of the trivet claws is lower than the top end of the outer circumference of the trivet claws.

26. The cooking stove according to any of claims 18 through 25, wherein the burner has the combustion portion formed nearly cylindrically, and forms flame nearly upward direction or nearly inward direction only, and
a cylindrical body is equipped to the outer circumferential side of the burner to guide the burner combustion gas in the upward direction.

27. The cooking stove according to any of claims 18 through 26, wherein the ring plate is a trivet ring with the trivet claws integrally installed upright on the top surface.

28. A cooking stove,' comprising:

   a burner that heats a cooking container from below;
   a ring plate installed around the burner; and
   a ring-shaped combustion gas route that is formed between the top surface of the ring plate and the bottom surface of the cooking container, further comprising:
   an exhaust guide that allows the burner combustion gas to flow towards the outer circumferential direction in a spiral along the bottom surface of the cooking container in the combustion gas route.

29. The cooking stove according to claim 28, wherein the ring plate is a trivet ring with trivet claws to support the bottom of a cooking container installed upright on the top surface,
the trivet claws are spiral which extend from the inside to the outside as viewed from above, and form a plate-like wall installed upright from the top surface of the trivet ring from the inside top end to the outside top end, and when a cooking container is set, the top end of the trivet claws come in contact with the cooking container in the form of spiral line, and the trivet claws partition and form the combustion gas route into a spiral surrounded by the trivet ring top surface, the trivet claws, and the bottom of the cooking container, and are also used as the exhaust guide.

30. The cooking stove according to claim 28 or 29, wherein the burner is an outer flame type burner with a large number of flame ports arranged in the outer circumferential direction, and the flame jetting direction of the relevant flame ports is formed tilted at a predetermined angle in the burner circumferential direction with respect to straight lines directed in a radial pattern from the center of the burner.

31. The cooking stove according to any of claims 28 through 30, wherein the route cross-sectional area of the ring-shaped combustion gas route becomes narrower as the distance from the center of the ring plate increases, or is equal even if the distance increases.

**32.** A cooking stove, comprising:

a burner that heats a cooking container;
a ring plate which is installed around the burner;
trivet claws which bear and support the cooking container above the burner; and
a ring-shaped combustion gas route formed between the top surface of the ring plate and the bottom surface of the cooking container, further comprising:
an exhaust guide means that varies the burner combustion gas flowing to the outside along the top surface of the ring plate to the upward direction,
wherein the exhaust gas guide means is mounted to the top surface outer circumferential part of the ring plate, and allows the combustion gas to collide against the bottom of a cooking container for a cooking container with a diameter larger than the outside diameter of the ring plate, and allows the combustion gas to flow upwards along the side of the cooking container for a cooking container with a diameter smaller than the outside diameter of the ring plate.

**33.** The cooking stove according to claim 32, wherein the combustion air is forcibly fed to the burner, and a combustion gas route to which ambient air is scarcely allowed to enter is formed by surrounding the top and the bottom surfaces nearly free of any clearance by the ring plate, the burner, and the bottom surface of the cooking container, and the combustion gas of the burner is discharged from the outer circumferential part of the combustion gas route.

**34.** The cooking stove according to claim 32 or 33, wherein the route area of the combustion gas route becomes narrower as the distance from the center of the burner increases, or is equal even if the distance varies.

**35.** The cooking stove according to any of claims 32 through 34, wherein a radiation suppressing means that suppresses radiation from the rear surface of the ring plate is equipped.

**36.** The cooking stove according to any of claims 32 through 35, wherein the ring plate is a trivet ring with the trivet claws integrally installed upright on the top surface.

# FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

EP 1 830 133 A1

FIG. 18

P

Combustion exhaust

24

21a

14

22

20

1

21

12

21b

15a

15

17

21e

23

18

32

31

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

EP 1 830 133 A1

Combustion exhaust

P

1

20

12

18

17

15 a

15

32

31

## FIG. 36

FIG. 37

EP 1 830 133 A1

FIG. 38

Combustion exhaust

P

20

25

12

1

18

23

17

14

15 a

15

32

31

FIG. 39

FIG. 40

FIG. 41

FIG. 42

16a

16a

16

FIG. 43

FIG. 44

FIG. 45

FIG. 46

FIG. 47

FIG. 48A

FIG. 48B

### INTERNATIONAL SEARCH REPORT

| International application No. |
|---|
| PCT/JP2005/010421 |

| A. CLASSIFICATION OF SUBJECT MATTER |
|---|
| Int.Cl⁷ F24C15/10, 3/02, 15/34 |

According to International Patent Classification (IPC) or to both national classification and IPC

| B. FIELDS SEARCHED |
|---|

Minimum documentation searched (classification system followed by classification symbols)
Int.Cl⁷ F24C15/10, 3/02, 15/34, F23D14/06

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 7-127870 A (Tokyo Gas Co., Ltd.), 16 May, 1995 (16.05.95), Full text; Figs. 1 to 5 (Family: none) | 1-7 |
| A | JP 61-225519 A (Matsushita Electric Industrial Co., Ltd.), 07 October, 1986 (07.10.86), Full text; Figs. 1 to 3 (Family: none) | 1-7 |
| A | JP 2003-166718 A (Rinnai Corp.), 13 June, 2003 (13.06.03), Full text; Figs. 1 to 10 (Family: none) | 1-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 August, 2005 (25.08.05) | 06 September, 2005 (06.09.05) |

| Name and mailing address of the ISA/ Japanese Patent Office | Authorized officer |
|---|---|
| Facsimile No. | Telephone No. |

Form PCT/ISA/210 (second sheet) (January 2004)

<table>
<tr><td colspan="2">**INTERNATIONAL SEARCH REPORT**</td><td>International application No.<br>PCT/JP2005/010421</td></tr>
<tr><td colspan="3">C (Continuation). DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>A</td><td>JP 2002-310438 A (Sun Wave Corp.),<br>23 October, 2002 (23.10.02),<br>Full text; Figs. 1 to 5<br>(Family: none)</td><td>1-7</td></tr>
</table>

Form PCT/ISA/210 (continuation of second sheet) (January 2004)

**INTERNATIONAL SEARCH REPORT**

International application No.

PCT/JP2005/010421

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
 A common matter pertaining to the inventions in Claims 1-7, 8-10, 11-13, 14-18, 19-27, 28-31, and 32-36 is such a point that the gas cooking stove comprises the burner and the trivet.
 The result of search reveals that the common matter is not novel since it is disclosed in Document JP 2000-329356 A (Paroma Kogyo Kabushiki Kaisha), 30 November, 2000 (30.11.00).
 Accordingly, the common matter such that the gas cooking stove comprises the burner and the trivet is not a special technical feature in the meaning of the second sentence of PCT Rule 13.2.
(continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-7

**Remark on Protest**
☐ The additional search fees were accompanied by the applicant's protest.
☐ No protest accompanied the payment of additional search fees.

Form PCT/ISA/210 (continuation of first sheet (2)) (January 2004)

**INTERNATIONAL SEARCH REPORT**

International application No.

PCT/JP2005/010421

Continuation of Box No.III of continuation of first sheet(2)

Therefore, there is no common matter pertaining to all the inventions in Claims 1-7, 8-10, 11-13, 14-18, 19-27, 28-31, and 32-36. Since there is no other common matter considered to be a special technical feature in the meaning of the second sentence of PCT Rule 13.2, any technical relation in the meaning of PCT Rule 13 cannot be found among these different inventions.

Form PCT/ISA/210 (extra sheet) (January 2004)

**EP 1 830 133 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003161449 A
- JP 2140210 U
- JP 2003166718 A
- JP 9004853 A